Europäisches Patentamt

European Patent Office

Office européen des brevets

(19)

(11) **EP 0 792 229 B1**

(12) **EUROPÄISCHE PATENTSCHRIFT**

(45) Veröffentlichungstag und Bekanntmachung des Hinweises auf die Patenterteilung:
**06.03.2002 Patentblatt 2002/10**

(21) Anmeldenummer: **95941021.8**

(22) Anmeldetag: **25.11.1995**

(51) Int Cl.7: **B60T 8/00**

(86) Internationale Anmeldenummer:
**PCT/EP95/04657**

(87) Internationale Veröffentlichungsnummer:
**WO 96/16851 (06.06.1996 Gazette 1996/26)**

(54) **SYSTEM ZUR FAHRSTABILITÄTSREGELUNG**

DRIVING STABILITY CONTROL SYSTEM

SYSTEME DE REGULATION DE LA TENUE DE ROUTE

(84) Benannte Vertragsstaaten:
**DE FR GB IT NL**

(30) Priorität: **25.11.1994 DE 4441956**
**25.11.1994 DE 4441957**
**25.11.1994 DE 4441958**
**25.11.1994 DE 4441959**
**31.12.1994 DE 4447313**

(43) Veröffentlichungstag der Anmeldung:
**03.09.1997 Patentblatt 1997/36**

(73) Patentinhaber: **Continental Teves AG & Co. oHG**
**60488 Frankfurt (DE)**

(72) Erfinder: **WANKE, Peter**
**D-60437 Frankfurt am Main (DE)**

(56) Entgegenhaltungen:
**EP-A- 0 392 164          DE-A- 3 731 756**
**DE-A- 4 305 155**

**Beschreibung**

1. Allgemeine Struktur der Fahrstabilitätsregelung (FSR)

Unter dem Begriff Fahrstabilitätsregelung (FSR) vereinigen sich vier Prinzipien zur Beeinflussung des Fahrverhaltens eines Fahrzeugs mittels vorgebbarer Drücke in einzelnen Radbremsen und mittels Eingriff in das Motormanagement des Antriebsmotors. Dabei handelt es sich um Bremsschlupfregelung (ABS), welche während eines Bremsvorgangs das Blockieren einzelner Räder verhindern soll, um Antriebsschlupfregelung (ASR), welche das Durchdrehen der angetriebenen Räder verhindert, um elektronische Bremskraftverteilung (EBV), welche das Verhältnis der Bremskräfte zwischen Vorder- und Hinterachse des Fahrzeugs regelt, sowie um eine Giermomentregelung (GMR), welche für stabile Fahrzustände beim Durchfahren einer Kurve sorgt.

Mit Fahrzeug ist also in diesem Zusammenhang ein Kraftfahrzeug mit vier Rädern gemeint, welches mit einer hydraulischen Bremsanlage ausgerüstet ist. In der hydraulischen Bremsanlage kann mittels eines pedalbetätigten Hauptzylinders vom Fahrer ein Bremsdruck aufgebaut werden. Jedes Rad besitzt eine Bremse, welcher jeweils ein Einlaßventil und ein Auslaßventil zugeordnet ist. Über die Einlaßventile stehen die Radbremsen mit dem Hauptzylinder in Verbindung, während die Auslaßventile zu einem drucklosen Behälter bzw. Niederdruckspeicher führen. Schließlich ist noch eine Hilfsdruckquelle vorhanden, welche auch unabhängig von der Stellung des Bremspedals einen Druck in den Radbremsen aufzubauen vermag. Die Einlaß- und Auslaßventile sind zur Druckregelung in den Radbremsen elektromagnetisch betätigbar.

Zur Erfassung von fahrdynamischen Zuständen sind vier Drehzahlsensoren, pro Rad einer, ein Giergeschwindigkeitsmesser, ein Querbeschleunigungsmesser und mindest ein Drucksensor für den vom Bremspedal erzeugten Bremsdruck vorhanden. Dabei kann der Drucksensor auch ersetzt sein durch einen Pedalweg- oder Pedalkraftmesser, falls die Hilfsdruckquelle derart angeordnet ist, daß ein vom Fahrer aufgebauter Bremsdruck von dem der Hilfsdruckquelle nicht unterscheidbar ist.

Vorteilhafterweise wird bei einer solchen Vielzahl von Sensoren eine Fall-back-Lösung verwirklicht. Das bedeutet, daß bei Ausfall eines Teils der Sensorik jeweils nur der Bestandteil der Regelung abgeschaltet wird, der auf diesen Teil angewiesen ist. Fällt beispielsweise der Giergeschwindigkeitsmesser aus, so kann zwar keine Giermomentregelung vorgenommen werden, ABS, ASR und EBV sind aber weiter funktionstüchtig. Die Fahrstabilitätsregelung kann also auf diese drei übrigen Funktionen begrenzt werden.

Bei einer Fahrstabilitätsregelung wird das Fahrverhalten eines Fahrzeugs derart beeinflußt, daß es für den Fahrer in kritischen Situationen besser beherrschbar wird oder daß kritische Situationen von vornherein vermieden werden. Eine kritische Situation ist hierbei ein instabiler Fahrzustand, in welchem im Extremfall das Fahrzeug den Vorgaben des Fahrers nicht folgt. Die Funktion der Fahrstabilitätsregelung besteht also darin, innerhalb der physikalischen Grenzen in derartigen Situationen dem Fahrzeug das vom Fahrer gewünschte Fahrzeugverhalten zu verleihen.

Während für die Bremsschlupfregelung, die Antriebsschlupfregelung und die elektronische Bremskraftverteilung in erster Linie der Längsschlupf der Reifen auf der Fahrbahn von Bedeutung ist, fließen in die Giermomentregelung (GMR) weitere Größen ein, beispielsweise die Gierwinkelgeschwindigkeit $\dot{\Psi}$.

Zur Giermomentregelung kann auf unterschiedliche FahrzeugReferenzmodelle zurückgegriffen werden. Am einfachsten gestaltet sich die Berechnung anhand eines Einspur-Modells, d.h. daß Vorderräder und Hinterräder in diesem Modell jeweils paarweise zu einem Rad zusammengefaßt sind, welches sich auf der Fahrzeuglängsachse befindet. Wesentlich komplexer werden Berechnungen, wenn ein Zweispur-Modell zugrundegelegt wird. Da bei einem Zweispur-Modell aber auch seitliche Verschiebungen des Massenschwerpunkts (Wank-Bewegungen) berücksichtigt werden können, sind die Ergebnisse genauer.

Für ein Einspur-Modell stehen in Zustandsraumdarstellung die Systemgleichungen:

$$F\ 1.1$$

$$\dot{\beta} = c_{11}\frac{\beta}{v} - \dot{\Psi} + c_{12}\frac{\dot{\Psi}}{v^2} + c_{13}\frac{\delta}{v}$$

F 1.2

$$\ddot{\Psi} \;=\; c_{21}\beta \;+\; c_{22}\frac{\dot{\Psi}}{v} \;+\; c_{23}\delta$$

Der Schwimmwinkel $\beta$ und die Gierwinkelgeschwindigkeit $\dot{\Psi}$ stellen die Zustandsgrößen des Systems dar. Die auf das Fahrzeug einwirkende Eingangsgröße stellt dabei der Lenkwinkel $\delta$ dar, wodurch das Fahrzeug die Gierwinkelgeschwindigkeit $\dot{\Psi}$ als Ausgangsgröße erhält. Die Modellkoeffizienten $c_{ii}$ sind dabei folgendermaßen gebildet:

F 1.3

$$c_{11} = -\frac{c_h + c_v}{m} \qquad c_{12} = \frac{c_h \, l_h - c_v \, l_v}{m}$$

$$c_{13} = \frac{c_v}{m} \qquad c_{21} = \frac{c_h \, l_h - c_v \, l_v}{\Theta}$$

$$c_{22} = -\frac{c_h \, l_h^2 + c_v \, l_v^2}{\Theta} \qquad c_{23} = \frac{c_v \, l_v}{\Theta}$$

Dabei stehen $c_h$ und $c_v$ für die resultierenden Steifigkeiten aus Reifen-, Radaufhängungs- und Lenkungselastizität an der Hinter- bzw. Vorderachse. $l_h$ und $l_v$ stehen für die Abstände der Hinterachse und der Vorderachse vom Fahrzeugschwerpunkt. $\Theta$ ist das Gierträgheitsmoment des Fahrzeugs, also das Trägheitsmoment des Fahrzeugs um seine Hochachse.

In diesem Modell werden Längskräfte und Schwerpunktverlagerungen nicht berücksichtigt. Auch gilt diese Näherung nur für kleine Winkelgeschwindigkeiten. Die Genauigkeit dieses Modells nimmt also mit kleineren Kurvenradien und größeren Geschwindigkeiten ab. Dafür ist jedoch der Rechenaufwand überschaubar. Weitere Ausführungen zu diesem Einspur-Modell finden sich im Buch "Fahrwerktechnik: Fahrverhalten" von Adam Zomotor, Vogel Buchverlag, Würzburg 1987.

In der DE- 40 30 704 A1 wird ein Zweispur-Modell für ein Fahrzeug vorgeschlagen, welches in seiner Genauigkeit einem Einspur-Modell überlegen ist. Auch hier bilden die Gierwinkelgeschwindigkeit $\dot{\Psi}$ und der Schwimmwinkel $\beta$ die Zustandgrößen. Bei der Verwendung eines Zweispur-Modells ist jedoch zu beachten, daß eine enorme Rechenkapazität benötigt wird, um in hinreichend kurzer Zeit einen Regeleingriff vornehmen zu können.

Wie bei jeder Art von Regeleingriffen ist es auch bei der Giermomentregelung wichtig, daß errechnete Sollvorgaben vernünftig sind. Das bedeutet, daß sich in bestimmten Fahrsituationen einfach deshalb kein ideales Fahrzeugverhalten erzwingen läßt, weil auch ein noch so gezielter Regeleingriff die physikalischen Gesetze nicht außer Kraft setzen kann. Beispielsweise ist auf glatter Fahrbahn kein hoher Kraftschluß möglich, so daß sich die Geschwindigkeit und die Fahrtrichtung des Fahrzeugs nur langsam ändern können. Während es für ein Antiblockiersystem ausreicht, eine grobe, rasterhafte Unterscheidung des Fahrbahnreibwertes vorzunehmen, ist bei der Giermomentregelung eine genauere Bestimmung des Fahrbahnreibwertes wünschenswert, da dieser in komplexere Modellrechnungen einfließt als es beim Blockierschutzbetrieb der Fall ist.

Aus der EP-A-0392164 ist ein Verfahren zur Ermittlung des Reibwertes bekannt, bei dem derjenige Wert der Querbeschleunigung als Maß für den Reibwert zwischen der Fahrbahn und dem Fahrzeugreifen bestimmt wird, bei dem die Gierwinkelgeschwindigkeitsdifferenz stark anzusteigen beginnt.

Weiterhin ist aus der DE-A-4305155 die Reibwertbestimmung aus der Quer- und Längsbeschleunigung bei stabilem Fahrzustand beschrieben.

Die Aufgabe der vorliegenden Erfindung ist es, eine Vorrichtung zur Regelung des Drehmoments eines Fahrzeugs gemäß dem Obergriff des Anspruchs 1 zu schaffen, die mit einer speziell auf die Drehmomentreglung ausgerichteten Reibwerterkennung ausgestattet ist.

Diese Aufgabe wird gelöst in Verbindung mit den Merkmalen des Anspruchs 1. Da eine Giermomentregelung der Beherrschung einer Kurvenfahrt dient, reicht es, eine Reibwerterkennung nur beim Durchfahren einer Kurve und wenn der Giermomentregler in die Regelung eintritt durchzuführen. Der ermittelte Reibwert wird dabei zumindest während der Giermomentenregelung permanent aktualisiert und nach der Formel berechnet:

$$\hat{\mu} = f*\mu_{int} = f * \frac{\sqrt{a_{quer}^2 + a_{long}^2}}{g}$$

mit $\hat{\mu}$=interner Reibwert, $a_{quer}$ =gemessene Querbeschleunigung, $a_{long}$=gemessene oder berechnete Längsbeschleunigung des Fahrzeugs, g = Gravitationskonstante und 1< f.

Ein mit einem Giermomentregeler ausgestattetes Fahrzeug weist in der Regel eine oder mehrere Einrichtungen zur Messung der Querbeschleunigung auf. Mit diesen Meßdaten ist eine Reibwertbestimmung möglich, die sich nicht nur auf die Längsbeschleunigung des Fahrzeugs beschränkt, sondern die Querbeschleunigung mit einbezieht.

Da aber in den meisten Fällen auch beim Durchfahren einer Kurve die Kraftschlußgrenze noch nicht erreicht ist, empfiehlt es sich, dem anhand der Beschleunigungen bestimmten Reibwert, der die aktuelle Kraftschlußausnutzung wiedergibt, einen höheren Reibwert zuzuordnen, der die maximal mögliche Kraftschlußausnutzung annähernd wiedergibt.

Die weiteren Ansprüche geben Algorithmen wieder, wann und wie lange eine Reibwerterkennung beim Durchfahren einer Kurve vorgenommen werden soll.

Wie ein derartiges System zur Fahrstabilitätsregelung gestaltet sein kann, wird im folgenden anhand von 29 Figuren beschrieben. Den einzelnen Figuren liegen dabei folgende Gegenstände zugrunde:

Fig. 1          ein Blockschaltbild zur Gesamtstruktur eines Systems zur Fahrstabilitätsregelung,

Fig. 2          ein Blockschaltbild zur Struktur eines Giermomentreglers,

Fig. 3          ein Flußdiagramm über die Ermittlung einer Fahrsituation, wie z.B. Kurvenfahrt,

Fig. 4 und 5          je ein Flußdiagramm über die Bestimmung des Fahrbahnreibwertes, wobei Fig. 5 in Fig. 4 einzufügen ist,

Fig. 6 und 8          Blockschaltbilder über ein kombiniertes Verfahren zur Bestimmung der aktuellen Werte der Schwimmwinkelgeschwindigkeit und des Schwimmwinkels in unterschiedlicher Darstellungsweise,

Fig. 7          ein Blockschaltbild zur direkten Bestimmung der Schwimmwinkelgeschwindigkeit aus kinematischen Betrachtungen als Teil des kombinierten Verfahrens von Fig. 6,

Fig. 9          ein Regelkreis zur Fahrstabilitätsregelung mit von der Fahrgeschwindigkeit abhängigem Wechsel des Rechenmodells für das Fahrzeug,

Fig. 10 und 11          Diagramme, aus denen die Abhängigkeit der Schräglaufwinkeldifferenz eines Fahrzeugs vom Schwimmwinkel und dem Geschwindigkeitsvektor der einzelnen Räder entnommen werden kann,

Fig. 12 bis 15          ein Blockschaltbild einer Regelschaltung zur Regelung der Fahrstabilität, bei der die in dem Vergleicher miteinander verglichenen Größen Ableitungen der Gierwinkelgeschwindigkeit darstellen,

Fig. 16          eine Regelschaltung zur Ermittlung der Fahrstabilität, bei der als Regelgröße der Druckgradient und/oder die Ventilschaltzeit der Fahrzeugbremse Verwendung findet,

Fig. 17          Blockschaltbild zur Beschreibung des Reglers zur Berechnung des Zusatzgiermoments,

Fig. 18          Blockschaltbild zur Beschreibung eines Tiefpaßfilters,

Fig. 19          Flußdiagramm zur Berechnung einer korrigierten Sollgierwinkelgeschwindigkeit,

Fig. 20          Blockdiagramm zum Berechnen eines korrigierten Zusatzgiermoments,

Fig. 21          schematische Darstellung eines Kraftfahrzeugs,

Fig. 22          Blockschaltbild zur Beschreibung der Verteilungslogik,

Fig. 23          schematische Darstellung eines Kraftfahrzeugs und den angreifenden Kräften bei eingeschlagenem Lenkrad,

Fig. 24 Diagramm zur Beschreibung der Seiten- und Längskraftbeiwerte in Abhängigkeit vom Radschlupf,

Fig. 25A, B schematische Darstellung von Kraftfahrzeugen zur Beschreibung des unter- und übersteuernden Verhaltens,

Fig. 26 Flußdiagramm mit einer Entscheidungslogik innerhalb der Verteilungslogik,

Fig. 27 Blockschaltbild zur Berechnung von Schaltzeiten für Ein- und Auslaßventile,

Fig. 28 Diagramm zur Beschreibung von Zeitintervallen innerhalb eines Berechnungsflugs,

Fig. 29 prinzipielles Blockschaltbild zur Bestimmung des Radbremsdruckes.

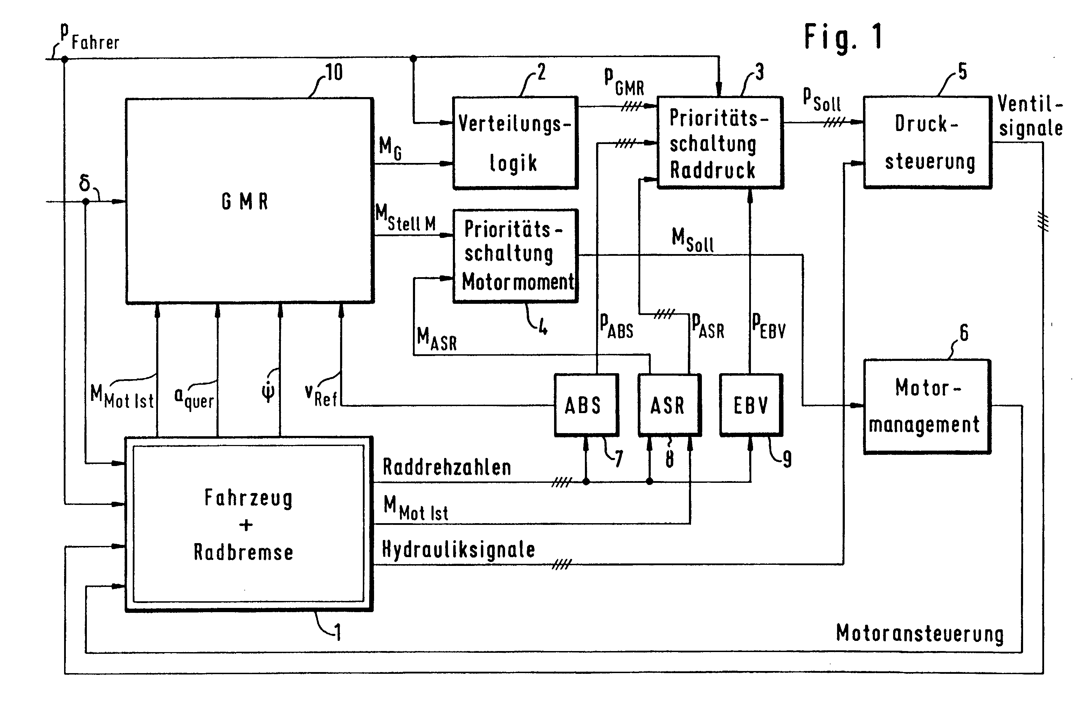

Eine generelle Beschreibung des Ablaufs einer Fahrstabilitätsregelung erfolgt nun anhand von Fig. 1.

Das Fahrzeug bildet die sogenannte Regelstrecke:

Das Fahrzeug 1 bildet die sogenannte Regelstrecke: Auf das Fahrzeug 1 wirken die vom Fahrer gegebenen Größen Fahrerbremsdruck $P_{Fahrer}$ und Lenkwinkel $\delta$. Am Fahrzeug 1 werden die hieraus resultierenden Größen Motoristmoment $M_{Motist}$, Querbeschleunigung $a_{quer}$, Gierwinkelgeschwindigkeit $\dot{\Psi}$, Raddrehzahlen und Hydrauliksignale wie Radbremsdrücke gemessen. Zur Auswertung dieser Daten weist die FSR-Anlage vier elektronische Regler 7,8,9 und 10 auf, die jeweils dem Antiblockiersystem ABS, der Antriebsschlupfregelung ASR, der elektronischen Bremskraftverteilung EBV bzw. der Giermomentregelung GMR zugeordnet sind. Die elektronischen Regler für ABS 7, ASR 8 und EBV 9 können unverändert dem Stand der Technik entsprechen.
Die Raddrehzahlen werden den Reglern für das Antiblockiersystem 7, die Antriebsschlupfregelung 8 und die elektronische Bremskraftverteilung 9 zugeführt. Der Regler 8 der Antriebsschlupfregelung erhält zusätzlich noch Daten über das herrschende Motormoment, das Motoristmoment $M_{Motist}$. Diese Information geht auch dem Regler 10 zur Giermomentregelung GMR zu. Außerdem erhält er von Sensoren die Daten über die Querbeschleunigung $a_{quer}$ und die Gierwinkelgeschwindigkeit $\dot{\Psi}$ des Fahrzeugs. Da im Regler 7 des ABS über die Einzelraddrehzahlen der Fahrzeugräder ohnehin eine Fahrzeugreferenzgeschwindigkeit $v_{Ref}$ ermittelt wird, anhand derer ein übermäßiger Bremsschlupf eines der Räder festgestellt werden kann, muß eine derartige Referenzgeschwindigkeit nicht im GMR-Regler 10 berechnet werden, sondern wird vom ABS-Regler 7 übernommen. Wo die Fahrzeugreferenzgeschwindigkeit berechnet wird oder ob zur Giermomentreglung eine eigene Berechnung vorgenommen wird, macht für den Ablauf der Giermomentregelung nur einen kleinen Unterschied. Dasselbe gilt beispielsweise auch für die Längsbeschleuigung $a_{long}$ des Fahrzeugs. Entsprechend könnte der Wert hierfür auch im ABS-Regler 7 ermittelt und an den GMR-Regler 10 weitergegeben werden. Für eine Bestimmung des Fahrbahnreibwertes $\mu$ gilt dies nur eingeschränkt, da zur Giermomentregelung ein genauer bestimmter Reibwert wünschenswert ist, als er für das Blockierschutzsystem ermittelt wird.
Alle vier elektronischen Regler der FSR, also die Regler für GMR 10, ABS 7, ASR 8 und EBV 9 arbeiten parallel und unabhängig voneinander anhand Ihrer eigenen Regelstrategien Bremsdruckvorgaben $P_{GMR}$, $P_{ABS}$, $P_{ASR}$, $P_{EBV}$ für die einzelnen Räder aus.
Zusätzlich werden vom ASR-Regler 8 und vom GMR-Regler 10 parallel Vorgaben $M_{ASR}$ und $M_{StellM}$ für das Motormoment berechnet.
Die Druckvorgaben $p_{GMR}$ des GMR-Reglers 10 für die einzelnen Radbremsdrücke werden folgendermaßen ermittelt:
Der GMR-Regler 10 berechnet zunächst ein zusätzliches Giermoment $M_G$, welches zur Stabilisierung des Fahrzustandes innerhalb einer Kurve führt, wenn es durch entsprechende Bremsbetätigung erzeugt wird. Diese $M_G$ wird einer Verteilungslogik 2 zugeführt, welche auch als Teil des GMR-Reglers 10 dargestellt werden könnte. In diese Verteilungslogik 2 fließt außerdem ein möglicherweise vorhandener Fahrerwunsch zur Fahrzeugverzögerung ein, der anhand des Fahrerbremsdruckes PFahrer erkannt wird. Die Verteilungslogik 2 berechnet aus dem vorgegebenen Giermoment MG und aus dem gewünschten Fahrerbremsdruck Giermomentregelbremsdrücke $p_{GMR}$ für die Radbremsen, welche individuell für die einzelnen Räder sehr unterschiedlich sein können. Diese Giermomentregelbremsdrücke $P_{GMR}$ werden genauso wie die von den übrigen Reglern 7, 8 und 9 für ABS, ASR und EBV zur Funktionsoptimierung berechneten Druckvorgaben einer Prioritätsschaltung 3 für die Radbremsdrücke zugeführt. Diese Prioritätsschaltung 3 ermittelt unter Berücksichtigung des Fahrerwunsches Sollraddrücke $p_{soll}$ für eine optimale Fahrstabilität. Diese Solldrücke können entweder den Druckvorgaben eines einzelnen dieser vier Regler entsprechen oder aber eine Überlagerung darstellen.

Ähnlich wie mit den Radbremsdrücken wird mit dem Motormoment verfahren. Während ABS und EBV nur auf die Radbremsen einwirken, ist bei GMR und ASR auch ein Eingriff in das Motormoment vorgesehen. Die im GMR-Regler 10 und im ASR-Regler 8 separat berechneten Vorgaben $M_{StellM}$ und $M_{ASR}$ für das Motormoment werden wieder in einer Prioritätsschaltung 4 ausgewertet und zu einem Sollmoment überlagert. Dieses Sollmoment $M_{Soll}$ kann jedoch genausogut nur der berechneten Vorgabe eines der beiden Regler entsprechen.

Anhand der berechneten Soll-Vorgaben für den Radbremsdruck $P_{Soll}$ und für das Motormoment $M_{Soll}$ kann nun eine Fahrstabilitätsregelung durch Bremsen- und Motoreingriff vorgenommen werden. In die Drucksteuerung 5 fließen dazu noch Hydrauliksignale oder Werte ein, die den tatsächlichen Radbremsdruck wiedergeben. Die Drucksteuerung 5 erzeugt hieraus Ventilsignale, die an die Regelventile der einzelnen Radbremsen im Fahrzeug 1 abgegeben werden. Das Motormanagement 6 steuert nach Maßgabe von $M_{soll}$, den Antriebsmotor des Fahrzeugs, wodurch wiederum eine geändertes Motoristmoment erzeugt wird. Hieraus ergeben sich dann jeweils wieder neue Eingangsgrößen für die vier elektronischen Regler 7, 8, 9 und 10 der FSR-Anlage.

2. Struktur des Giermomentreglers (GMR)

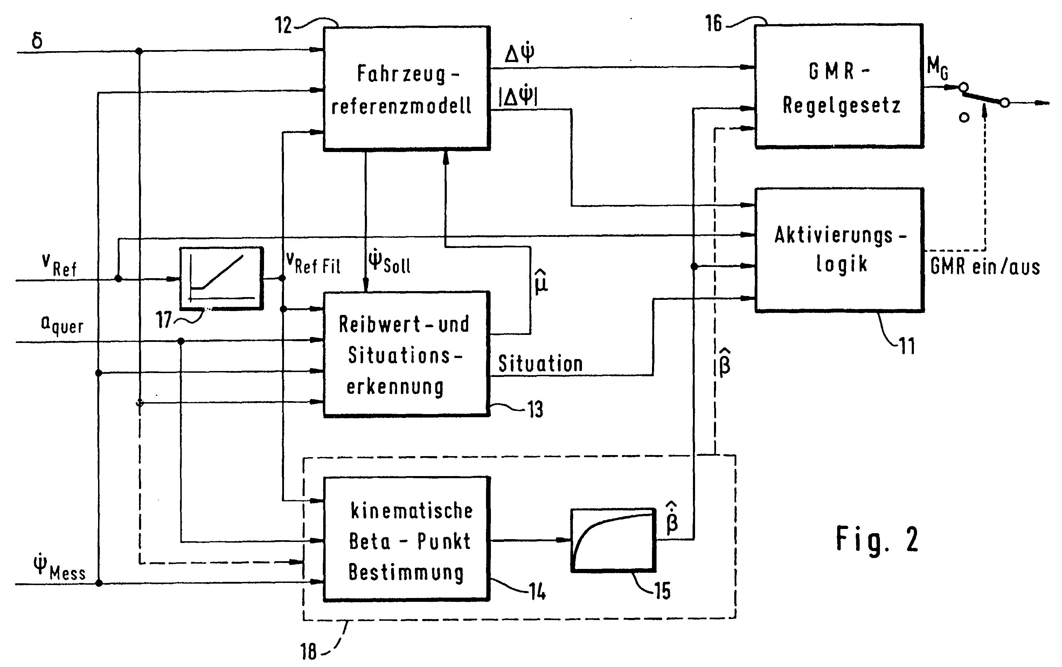

Fig. 2 zeigt in einem Blockschaltbild, wie innerhalb des GMR-Reglers 10 das Zusatzgiermoment $M_G$ für die Verteilungslogik 2 ermittelt wird. Hierzu fließen als Eingangsgrößen der Lenkwinkel δ, die Fahrzeugreferenzgeschwindigkeit $v_{Ref}$ aus dem ABS-Regler 7, die gemessene Querbeschleunigung $a_q$ sowie die gemessene Gierwinkelgeschwindigkeit $\Psi_{Mess}$ ein. Die Fahrzeugreferenzgeschwindigkeit vRef durchläuft einen Filter 17, welcher bei niedrigen Geschwindigkeiten einen konstanten Wert oberhalb Null ansetzt, damit bei weiteren Rechnungen der Nenner eines Bruchs nicht gleich Null wird. Der ungefilterte Wert von $v_{Ref}$ wird lediglich einer Aktivierungslogik 11 zugeführt, welche Fahrzeugstillstand erkennt.

Diese direkte Erfassung der Fahrzeugreferenzgeschwindigkeit $v_{Ref}$ durch die Aktivierungslogik 11 kann auch wegfallen, wenn angenommen wird, daß Fahrzeugstillstand vorliegt, wenn die gefilterte Fahrzeugreferenzgeschwindigkeit $v_{RefFil}$ ihren konstanten Minimalwert einnimmt.

Im GMR-Regler ist ein Fahrzeugreferenzmodell 12 abgelegt, welches anhand des Lenkwinkels δ, der gefilterten Fahrzeugreferenzgeschwindigkeit vRefFil sowie der gemessenen Gierwinkelgeschwindigkeit $\dot{\Psi}_{Mess}$ eine Vorgabe für eine Änderung der Gierwinkelgeschwindigkeit $\Delta\dot{\Psi}$ berechnet.

Um die Vorgaben im physikalisch möglichen Rahmen zu halten,wird zu diesen Rechnungen auch der Fahrbahnreibwert μ benötigt, der in einer Reibwert- und Situationserkennung 13 als Schätzwert $\dot{\mu}$ berechnet wird. Bei hinreichender Genauigkeit des im Rahmen der Antiblockierregelung ermittelten Reibwertes kann auch letzterer verwendet werden. Oder aber im ABS-Regler 7 wird der im GMR-Regler 10 berechnete Reibwert übernommen.

Die Reibwert- und Situationserkennung 13 verwendet für ihre Rechnungen die gefilterte Referenzgeschwindigkeit $v_{RefFil}$, die gemessene Fahrzeugquerbeschleunigung $a_{quer}$, die gemessene Gierwinkelgeschwindigkeit $\dot{\Psi}_{Mess}$, sowie den Lenkwinkel δ.

Die Situationserkennung unterscheidet verschiedene Fälle wie Geradeausfahrt, Kurvenfahrt, Rückwärtsfahrt und Fahrzeugstillstand. Fahrzeugstillstand wird dann angenommen, wenn die gefilterte Fahrzeugreferenzgeschwindigkeit $v_{RefFil}$ ihren konstanten Minimalwert einnimmt. Anstelle der ungefilterten Fahrzeugreferenzgeschwindigkeit kann also auch diese Information zur Erkennung eines Fahrzeugstillstandes der Aktivierungslogik 11 zugeführt werden. Zur Erkennung der Rückwärtsfahrt wird ausgenutzt, daß bei gegebenem Lenkwinkel δ die Gierwinkelgeschwindigkeit $\dot{\Psi}$ entgegengesetzt orientiert ist wie bei Vorwärtsfahrt. Hierzu wird die gemessene Gierwinkelgeschwindigkeit $\dot{\Psi}_{Mess}$ mit der vom Fahrzeugreferenzmodell 12 vorgegebenen Soll-Giergeschwindigkeit $\dot{\Psi}_{soll}$ verglichen. Wenn die Vorzeichen stets entgegengesetzt sind und dies auch für die zeitlichen Ableitungen der beiden Kurven gilt, so liegt eine Rückwärtsfahrt vor, da $\dot{\Psi}_{soll}$ stets für Vorwärtsfahrt berechnet wird, weil gebräuchliche Drehzahlsensoren keine Information über die Raddrehrichtung erfassen.

Schließlich wird anhand der gefilterten Fahrzeugreferenzgeschwindigkeit $v_{RefFil}$, der gemessenen Fahrzeugquerbeschleunigung $a_{quer}$ sowie der gemessenen Gierwinkelgeschwindigkeit $\dot{\Psi}_{Mess}$ eine kinematische Schwimmwinkel-Geschwindigkeitsbestimmung, kurz kinematische β-Bestimmung 14 vorgenommen.

Um bei starken Schwimmwinkeländerungen Spitzen abzuschneiden, durchläuft der berechnete Wert der Schwimmwinkelgeschwindigkeit einen Tiefpaß 15 erster Ordnung, welcher einen Schätzwert $\hat{\dot{\beta}}$ für die Schwimmwinkelgeschwindigkeit an die

Aktivierungslogik 11 und an ein Programm 16 zur Umsetzung des Giermomentregelgesetzes weitergibt. Das Programm 16 verwendet außerdem die Änderungsvorgaben $\Delta\dot{\Psi}$ für die Gierwinkelgeschwindigkeit, welche sich als die Differenz aus der gemessenen Gierwinkelgeschwindigkeit $\dot{\Psi}_{Mess}$ und der anhand des Fahrzeugreferenzmodells 12 berechneten Soll-Gierwinkelgeschwindigkeit $\dot{\Psi}_{soll}$ darstellt. Hieraus wird das zusätzliche Giermoment $M_G$ für das Fahrzeug ermittelt, welches über die Bremsdrücke vermittelt werden soll.

Das Programm 16 arbeitet permanent, um stets aktuelle Regelgrößen parat zu haben. Ob diese Stellmomente allerdings an die in Fig. 1 dargestellte Verteilungslogik 2 weitergegeben werden, hängt von der Aktivierungslogik 11 ab.

Die Aktivierungslogik 11 empfängt nicht nur den Wert der ungefilterten Fahrzeugreferenzgeschwindigkeit $v_{Ref}$ und wie beschrieben den der Schwimmwinkelgeschwindigkeit $\hat{\dot{\beta}}$, sondern auch betragsmäßig die Abweichung $|\Delta\dot{\Psi}|$ der Soll-Gierwinkelgeschwindigkeit $\dot{\Psi}_{soll}$ von der gemessenen Gierwinkelgeschwindigkeit $\dot{\Psi}_{Mess}$ sowie eine Information aus der Situationserkennung 13, wenn Rückwärtsfahrt vorliegt.

Befindet sich das Fahrzeug in Rückwärtsfahrt, so wird die Übertragung vom $M_G$ unterbrochen. Dasselbe gilt, wenn Fahrzeugstillstand erkannt wird oder wenn weder die geschätzte Schwimmwinkelgeschwindigkeit $\hat{\dot{\beta}}$ noch die Vorgabe für die Gierwinkelgeschwindigkeitsänderung $\Delta\dot{\Psi}$ einen Betrag erreichen, der eine Regelung erforderlich macht. Die logische Schaltung zur Berechnung des Motorstellmoments $M_{StellM}$ ist nicht dargestellt.

2.1 Reibwert- und Situationserkennung

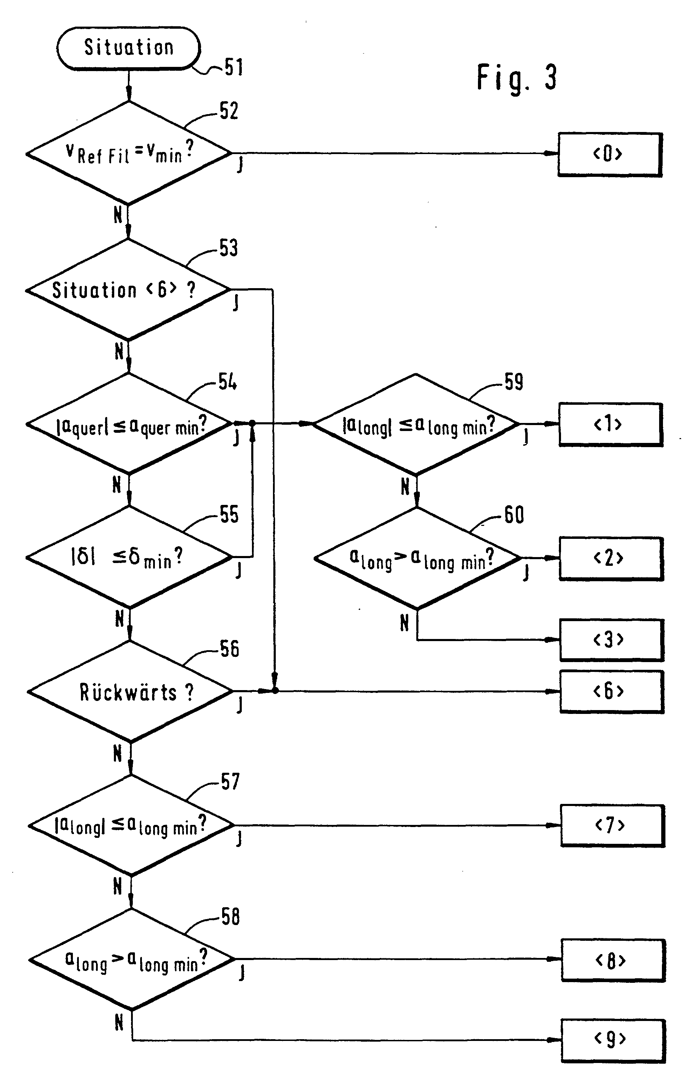

In Fig. 3, 4 und 5 sind in Form von Flußdiagrammen die logischen Abläufe bei der Reibwert- und Situationserkennung 13 dargestellt.

Fig. 3 hat die Situationserkennung zum Gegenstand. Mit dem gezeigten Ablauf können acht verschiedene Fahrsituationen unterschieden werden:

<0> Fahrzeugstillstand

<1> konstante Geradeausfahrt

<2> beschleunigte Geradeausfahrt

<3> verzögerte Geradeausfahrt

<6> Rückwärtsfahrt

<7> konstante Kurvenfahrt

<8> beschleunigte Kurvenfahrt

<9> verzögerte Kurvenfahrt

Logische Verzweigungen sind im Flußdiagramm als Rauten dargestellt.

Ausgehend von einer gegebenen, zu bestimmenden Situation 51 wird zunächst in Raute 52 festgestellt, ob ein Fahrzeugstillstand vorliegt oder nicht. Nimmt die gefilterte Fahrzeugreferenzgeschwindigkeit $v_{RefFil}$ ihren Minimalwert $v_{min}$ ein, so wird ein Fahrzeugstillstand, also Situation <0> angenommen. Liegt $v_{gefFil}$ über $v_{min}$, so wird in Raute 53 das Ergebnis des vorhergehenden Durchlaufs der Situationserkennung abgefragt.

Wenn die zuvor festgestellte Situation auf Rückwärtsfahrt, also auf Situation <6> erkannt wurde, so liegt auch weiterhin Rückwärtsfahrt vor, da zwischenzeitlich kein Fahrzeugstillstand eingetreten ist. Sonst wäre nämlich in Raute 52 zwischenzeitlich Situation <0> erkannt worden.

Hat der vorhergehende Durchlauf der Situationserkennung eine andere Situation als Situation <6> ergeben, so wird in Raute 54 die betragsmäßige Größe der Querbeschleunigung $a_{quer}$ abgefragt. Ist diese kleiner als ein bestimmter Schwellenwert $a_{quer\,min}$, so wird angenommen, daß das Fahrzeug geradeaus fährt, daß also eine der Situationen <1> bis <3> vorherrscht. Dasselbe gilt, wenn zwar die gemessene Querbeschleunigung $a_{quer}$ betragsmäßig über dem Schwellenwert $a_{quermin}$ liegt, jedoch in Raute 55 im nächsten Schritt erkannt wird, daß der Lenkwinkel $\delta$ betragsmäßig kleiner ist als ein Schwellenwert $\delta_{min}$. Dann handelt es sich nämlich bei der gemessenen Querbeschleunigung $a_{quer}$ um einen Meßfehler, der daraus resultiert, daß Querbeschleunigungsmesser üblicherweise fest in der Fahrzeugquerachse montiert sind und sich bei seitlicher Fahrbahnneigung mit dem Fahrzeug neigen, so daß eine Querbeschleunigung angezeigt wird, die tatsächlich nicht vorliegt.

Befindet sich das Fahrzeug also in Geradeausfahrt, so wird in Raute 59 die Größe der Longitudinalbeschleunigung $a_{long}$ betrachtet. Ist diese betragsmäßig kleiner als ein Schwellenwert $a_{longmin}$, so wird konstante Geradeausfahrt angenommen. Ist die Longitudinalbeschleunigung $a_{long}$ betragsmäßig jedoch größer als dieser Schwellenwert, so unterscheidet Raute 60 zwischen positiver und negativer Longitudinalbeschleunigung. Liegt der Wert von $a_{long}$ oberhalb des Schwellenwertes $a_{long\text{-}min}$, dann befindet sich das Fahrzeug in beschleunigter Geradeausfahrt, also der Situation <2>. Liegt der Wert von $a_{long}$ unter dem Schwellenwert $a_{longmin}$, so bedeutet dies nichts anderes, als daß negative Longitudinalbeschleunigung vorliegt, also eine verzögerte Geradeausfahrt, die Situation <3>.

Liegt keine der Situationen <0> bis <3> vor und wird in Raute 55 betragsmäßig ein Lenkwinkel $\delta$ erkannt, der

größer ist als der Schwellenwert $\delta_{min}$, so wird in Raute 56 abgefragt, ob das Fahrzeug inzwischen rückwärts fährt. Die Erkennung einer Rückwärtsfahrt ist erst an dieser Stelle notwendig, da bei Geradeausfahrt die Gierwinkelgeschwindigkeit $\dot{\Psi}$ sich ohnehin kaum von Null unterscheidet und somit ein Regeleingriff nicht vorgenommen wird. Erst bei Erkennung einer Kurvenfahrt, bei welcher die Giermomentregelung an sich aktiv wird, muß eine Rückwärtsfahrt mit Sicherheit ausgeschlossen werden. Dies ist allein aufgrund der Signale der Raddrehzahlsensoren nicht möglich, da solche Sensoren die Geschwindigkeit nur betragsmäßig weitergeben, ohne Rückschlüsse auf die Fahrtrichtung zuzulassen.

Die Situation <6> wird, wie schon zuvor beschrieben, ermittelt, indem die gemessene Gierwinkelgeschwindigkeit $\dot{\Psi}_{Mess}$ mit der im Fahrzeugreferenzmodell 12 ermittelten Soll-Gierwinkelgeschwindigkeit $\dot{\Psi}_{soll}$ verglichen wird. Sind die Vorzeichen entgegengesetzt und gilt dies auch für die zeitlichen Ableitungen der beiden Größen, die Gierwinkelbeschleunigungen $\ddot{\Psi}_{Mess}$ und $\ddot{\Psi}_{Mess}$ so befindet sich das Fahrzeug in einer rückwärts durchfahrenen Kurve. Die Vorzeichen der Gierwinkelbeschleunigungen werden deshalb verglichen, damit ausgeschlossen werden kann, daß die entgegengesetzten Vorzeichen der Gierwinkelgeschwindigkeiten nicht nur aus einer Phasenverschiebung herrühren, die durch die zeitlich verzögerte Berechnung der Soll-Werte bedingt ist.

Sind die Bedingungen für eine Rückwärtsfahrt nicht erfüllt, so liegt eine Kurvenfahrt in Vorwärtsrichtung vor. Ob diese Kurvenfahrt mit konstanter Geschwindigkeit erfolgt oder nicht, wird in Raute 57 untersucht. Wie schon zuvor bei der Geradeausfahrt in Raute 59 und 60 wird in Raute 57 zunächst der Betrag der Longitudinalbeschleunigung $a_{long}$ betrachtet. Ist er kleiner als der Schwellwert $a_{longmin}$, so liegt eine konstante Kurvenfahrt vor, Situation <7>. Bei einer Longitudinalbeschleunigung $a_{long}$, die betragsmäßig größer ist als der Schwellenwert $a_{longmin}$ wird weiter in Raute 58 untersucht, ob die Longitudinalbeschleunigung $a_{long}$ positiv oder negativ ist. Bei positiver Longitudinalbeschleunigung $a_{long}$ befindet sich das Fahrzeug in einer beschleunigten Kurvenfahrt, also Situation <8>, während bei negativer Longitudinalbeschleunigung $a_{long}$ eine verzögerte Kurvenfahrt erkannt wird, entsprechend Situation <9>.

Die Longitudinalbeschleunigung $a_{long}$ kann auf verschiedene Weise ermittelt werden. Sie kann beispielsweise aus der vom ABS-Regler 7 bereitgestellten Referenzgeschwindigkeit $v_{Ref}$ bestimmt werden, wobei zu berücksichtigen ist, daß eine solche Referenzgeschwindigkeit $v_{Ref}$ während eines ABS-Eingriffs von der tatsächlichen Fahrzeuggeschwindigkeit abweichen kann. Für einen ABS-Fall ist also eine Korrektur von $v_{Ref}$ angebracht. Die Longitudinalbeschleunigung $a_{long}$ kann aber unter Umständen auch direkt aus dem ABS-Regler übernommen werden, wenn dort eine derartige Berechnung stattfindet.

Die Situationserkennung nach Fig. 3 wird ständig aufs Neue durchfahren, wobei die zuletzt ermittelte Situation gespeichert bleibt und in Raute 53 zur Verfügung steht.

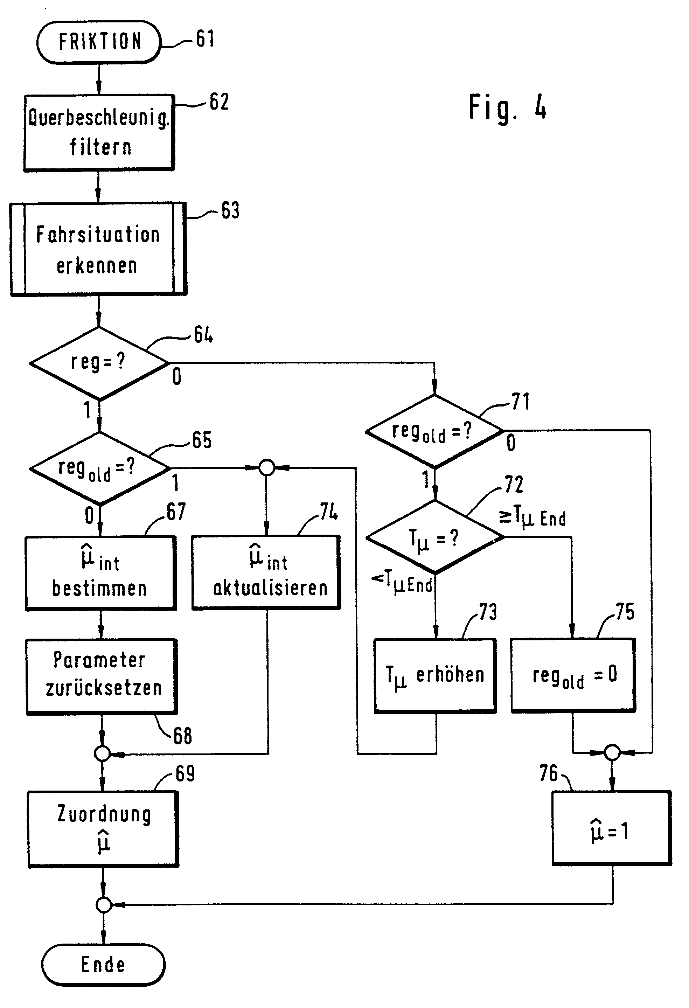

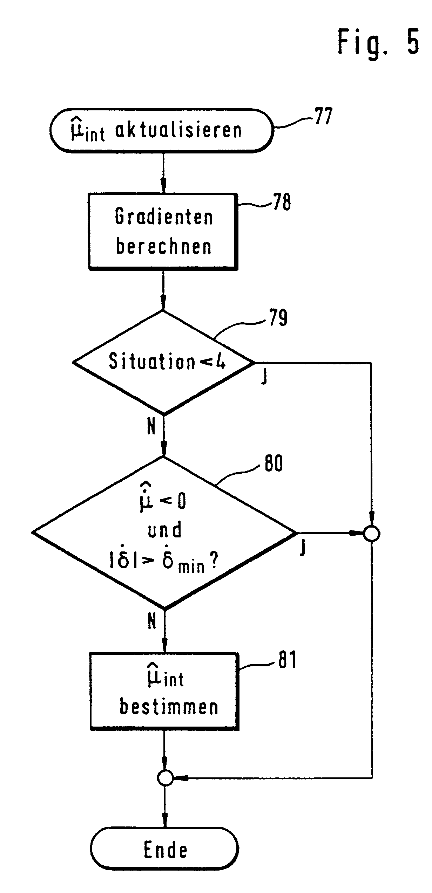

Ein möglicher Ablauf zur Reibwertbestimmung der Fahrbahn ist in Fig. 4 und 5 dargestellt. Eine Reibwertbestimmung erfolgt danach nur dann, wenn der Giermomentregler in die Regelung eintritt. Da bei Regeleintritt aber zunächst noch kein abgeschätzter Reibwert vorhanden ist, wird zu Beginn der Regelung der Reibwert $\mu = 1$ gesetzt.

Spricht die Giermomentregelung aufgrund einer augenblicklichen Fahrsituation an, so ist davon auszugehen, daß sich das Fahrzeug zumindest in der Nähe des Grenzbereiches zu instabilen Fahrsituationen befindet. Somit kann durch eine Betrachtung der aktuellen Meßgrößen am Fahrzeug auf den momentanen Fahrbahnreibwert geschlossen werden. Der dann beim Eintritt in die Regelung ermittelte Reibwert bietet im weiteren Verlauf die Basis für die Begrenzung der Sollgierwinkelgeschwindigkeit $\dot{\Psi}_{soll}$ und somit auch für die an das GMR-Regelgesetz 16 weitergegebene Regeldifferenz für die Gierwinkelgeschwindigkeit $\Delta\dot{\Psi}$. Die Bestimmung des Reibwerts erfolgt erstmals bei Eintritt in die Regelung, verbunden mit einer sich anschließenden Aktualisierungsphase für die Begrenzung der Soll-Gierwinkelgeschwindigkeit auf physikalisch sinnvolle Werte. Dabei wird - ausgehend vom ursprünglich vorgegebenen Reibwert $\mu = 1$ - beim Regelungseintritt ein maximaler Reibwert $\dot{\mu}$ bestimmt, der dann der Berechnung des Zusatzgiermomentes $M_G$ zugrundegelegt wird.

Dazu wird zunächst ein interner Reibwert $\dot{\mu}_{int}$ aus der gemessenen Querbeschleunigung $a_{quer}$ und einem berechneten Wert für die Längsbeschleunigung $a_{long}$ berechnet, der unter der Annahme, daß eine vollständige Kraftschlußausnutzung vorliegt, dem momentanen Reibwert entspricht. Da aber davon ausgegangen werden muß, daß beim Regelungseintritt der maximale Kraftschluß noch nicht erreicht ist, wird dem internen Reibwert $\dot{\mu}_{int}$ mittels einer Tabelle, einer Kennlinie oder eines konstanten Faktors ein höherer Reibwert $\dot{\mu}$ zugeordnet. Dieser Reibwert $\dot{\mu}$ wird dann der Regelung zugeführt. Somit ist es möglich, im nächsten Rechenschritt mit einer an den Fahrbahnreibwert angepaßten Soll-Gierwinkelgeschwindigkeit $\dot{\Psi}_{soll}$ zu rechnen und die Regelung zu verbessern. Auch während die Giermomentregelung auf das Fahrzeug einwirkt, muß der geschätzte Reibwert $\dot{\mu}$ weiter aktualisiert werden, da sich während der Regelung eine Reibwertänderung einstellen könnte.

Falls die Regelung aufgrund der Anpassung des Reibwertes im Fahrzeugreferenzmodell durch die resultierende veränderte Regeldifferenz der Gierwinkelgeschwindigkeit $\Delta\dot{\Psi}$ nicht aktiviert wird, wird der Reibwert $\dot{\mu}$ bis zu einer Zahl $T_{\mu End}$ von Schritten weiter aktualisiert. Wenn auch innerhalb dieser Aktualisierungsphase die Giermomentregelung nicht einsetzt, so wird der geschätzte Reibwert $\dot{\mu}$ auf 1 zurückgesetzt.

Eine Anpassung bzw. Aktualisierung des geschätzten Reib-wertes $\dot{\mu}$ kann in bestimmten Situationen auch ausbleiben. Derartige Situationen sind beispielsweise Geradeausfahrt, Rückwärtsfahrt oder Fahrzeugstillstand, also die Situationen <0> bis <4>. Dies sind Situationen, in denen ohnehin keine Giermomentregelung vorgenommen wird, so daß auch eine Reibwertabschätzung unnötig ist. Eine Aktualisierung des Reibwertes kann dann unterbleiben, wenn die zeitliche Ableitung des Reibwertes $\dot{\mu}$ also $\dot{\mu}$ negativ ist und der Betrag der zeitlichen Ableitung des Lenkwinkels δ, also $|\dot{\delta}|$ eine vorgegebene Schwelle überschreitet. Im letzteren Fall kann davon ausgegangen werden, daß eine Änderung in der Querbeschleunigung $a_{quer}$ auf einer Änderung des Lenkwinkels δ beruht und nicht etwa auf einer Reibwertänderung.

Generell gilt für den auf diese Weise berechneten Reibwert, daß es sich um einen mittleren Reibwert für alle vier Fahrzeugräder handelt. Radindividuell kann auf diese Weise der Reibwert nicht bestimmt werden.

Das Verfahren der Reibwertbestimmung wird nun anhand von Fig. 4 erläutert. In jeder Fahrsituation fließt in das Fahrzeugverhalten der vorherrschende Fahrbahnreibwert nach Feld 61 ein. Zur Bestimmung des zugehörigen Reibwertes wird zunächst die gemessene Querbeschleunigung $a_{quer}$ gemäß Schritt 62 gefiltert. Das heißt, daß die gemessenen Werte entweder geglättet werden oder aber die Kurve einen Tiefpaß durchläuft, so daß keine extremen Spitzen auftreten. Schritt 63 umfaßt die Situationserkennung nach Fig. 3. Die erkannte Fahrsituation ist später für die Aktualisierungsphase in Schritt 74 von Bedeutung. In Raute 64 wird abgefragt, ob die Notwendigkeit eines Regeleingriffes gegeben ist. Einer solchen Rechnung wird zunächst der Anfangsreibwert μ = 1 zugrundegelegt. Wird eine Regelung für notwendig erachtet, so wird in Raute 65 abgefragt, ob dies auch der Zustand bei Ende des vorherigen Durchlaufs der Reibwertbestimmung war. Für den Fall, daß es sich hier um einen Regelungeintritt handelt, hat es zuvor keine Erkennung auf Regelung ergeben, so daß folglich in Schritt 67 ein interner Reibwert $\dot{\mu}_{int}$ erstmals bestimmt wird. Seine Berechnung erfolgt anhand folgender Gleichung:

$$\text{F 2.1}$$

$$m\hat{u}_{int} = \frac{\sqrt{a_{quer}^2 + a_{long}^2}}{g}$$

Dabei ist g die Gravitationskonstante g = 9,81 m/s$^2$.

Als nächstes wird in Schritt 68 der Parameter $reg_{old}$ für Schritt 65 auf 1 gesetzt. Außerdem wird der Zählparameter $T_\mu$ auf 1 gesetzt entsprechend der Tatsache, daß die erste Reibwertbestimmung des internen Reibwertes $\dot{\mu}_{int}$ erfolgt ist. In Schritt 69 erfolgt eine Zuordnung eines geschätzten Reibwertes $\dot{\mu}$ zum berechneten internen Reibwert $\dot{\mu}_{int}$. Dies geschieht unter der Annahme, daß die existierenden Beschleunigungskomponenten noch nicht auf einer vollen Kraftschlußausnutzung beruhen. Der geschätzte Reibwert $\dot{\mu}$ liegt also in der Regel zwischen dem ermittelten internen Reibwert $\dot{\mu}_{int}$ und 1. Damit ist die Reibwertbestimmung abgeschlossen.

Beim nächsten Durchlauf dieser Reibwertbestimmung wird also - unveränderte Fahrsituation vorausgesetzt - in Raute 65 auf $reg_{old}$ = 1 entschieden. Auch hier wird im weiteren Verlauf dann ein $\dot{\mu}_{int}$ bestimmt, welches an die Stelle des im vorhergehenden Durchlauf bestimmten $\dot{\mu}_{int}$ tritt. Eine Aktualisierung der in Feld 68 bestimmten Parameter erfolgt nicht, da die Aktualisierung von $\dot{\mu}_{int}$ während einer Regelung erfolgt ist. Schon im Durchlauf zuvor war $reg_{old}$ auf 1 gesetzt worden und bleibt unverändert. Die Zahl $T_\mu$ der durchgeführten Durchläufe bleibt weiterhin 1, da sie nur dann weitergezählt wird, wenn keine Regelung stattfindet. Auch dem aktualisierten Wert für $\dot{\mu}_{int}$ wird dann - wie schon zuvor beschrieben - mittels einer Tabelle, einer nicht linearen Relation oder aber eines konstanten Faktors ein geschätzter Reibwert $\dot{\mu}$ zugeordnet.

Wird in einem Durchlauf in Raute 64 festgestellt, daß eine Regelung nicht erforderlich ist, so wird weiter in Raute 71 abgefragt, ob der Parameter $reg_{old}$ für die Regelung zuletzt auf 0 oder 1 gesetzt wurde. Ist er im letzten Durchlauf auf 1 gesetzt worden, so wird in Raute 72 die Zahl $T_\mu$ der Durchläufe abgefragt. Dieses $T_\mu$ beträgt 1, wenn im letzten Durchlauf eine Regelung erfolgt ist. Wurde eine Regelung nur im vorletzten Durchlauf vorgenommen, so ist $T_\mu$ = 2 und so weiter. Solange das $T_\mu$ im Schritt 72 ein bestimmtes $T_{\mu End}$ noch nicht erreicht hat, wird es im Schritt 73 um 1 erhöht und in Schritt 74 eine erneute Aktualisierung des internen Reibwertes $\dot{\mu}_{int}$ vorgenommen. Wenn dann in einem der folgenden Durchläufe die Zahl $T_{\mu End}$ erreicht wird, ohne daß eine Regelung stattgefunden hat, so wird der Parameter $reg_{old}$ für die Regelung wieder auf 0 zurückgesetzt (75). Der geschätzte Reibwert $\dot{\mu}$ wird dem Ausgangsreibwert μ = 1 gleichgesetzt. Damit ist die Aktualisierungsphase für den Reibwert $\dot{\mu}$ beendet.

Wenn dann beim nächsten Durchlauf in Raute 64 wieder erkannt wird, daß keine Regelung erforderlich ist, so wird in Raute 71 mit $reg_{old}$ = 0 der Ausgangsreibwert $\dot{\mu}$ =1 im Feld 76 beibehalten. Erst wenn in Raute 64 die Notwendigkeit eines Regeleingriffs erkannt wird, wird wieder eine Reibwertbestimmung vorgenommen.

Die Kriterien für eine Aktualisierung des internen Reibwerts $\dot{\mu}_{int}$ nach Schritt 74 sind in Fig. 5 dargestellt. Ausgehend von der Vorgabe im Feld 77, daß der interne Reibwert $\dot{\mu}_{int}$ zu aktualisieren ist, werden in Schritt 78 die zeitlichen Ableitungen der zuvor gebildeten geschätzten Reibwerte $\dot{\mu}$ oder $\dot{\mu}_{int}$ sowie des Lenkwinkels δ gebildet.

Wenn dann in Raute 79 erkannt wird, daß das Fahrzeug weder stillsteht noch geradeausfährt, daß also eine der Situationen <6> bis <9> vorliegt, so werden die Ergebnisse aus Schritt 78 in Schritt 80 ausgewertet. Nur dann, wenn - wie bereits zuvor erläutert - ein sinkender Reibwert nicht auf ein Lenkmanöver zurückzuführen ist, wird eine Reibwertbestimmung vorgenommen. Keine Reibwertaktualisierung erfolgt, wenn entweder das Fahrzeug sich bei einer Geradeausfahrt - vorwärts oder rückwärts - oder im Fahrzeugstillstand befindet oder aber ein Absinken des geschätzten Reibwertes $\hat{\mu}$ auf ein Lenkmanöver zurückzuführen ist.

2.2 $\dot{\beta}$ und $\hat{\dot{\beta}}$-Bestimmung

Ein Maß für die Stabilität eines Fahrzustandes ist der vorherrschende Schwimmwinkel $\beta$ sowie dessen zeitliche Ableitung, die Schwimmwinkelgeschwindigkeit $\dot{\beta}$. Die Bestimmung dieser Werte wird im folgenden erläutert.

2.2.1 Kinematische $\dot{\beta}$-Bestimmung

Die kinematische $\dot{\beta}$-Bestimmung 14 beinhaltet nichts anderes, als daß - losgelöst von irgendwelchen Fahrzeugmodellen - die Schwimmwinkelgeschwindigkeit $\dot{\beta}$ aus gemessenen bzw. aus anhand gemessener Werte berechneten Größen folgendermaßen nach rein physikalischen Betrachtungen ermittelt wird:

Die Beschleunigung $a_{quer}$ des Fahrzeugschwerpunktes quer zur Längsachse in der Bewegungsebene wird gemessen. Der Schwerpunkt des Fahrzeugs bewegt sich mit dem Geschwindigkeitsvektor $\underline{v}$ relativ zu einem Intertialsystem:

$$F\ 2.2$$

$$\underline{v} = v \begin{bmatrix} \cos(\Psi + \beta) \\ \sin(\Psi + \beta) \end{bmatrix}$$

Dabei bezeichnet $\Psi$ den Gierwinkel und $\beta$ den Schwimmwinkel. Der Beschleunigungsvektor $\underline{a}$ ergibt sich als Ableitung nach der Zeit t zu:

$$F\ 2.3$$

$$\underline{a} = \frac{d}{dt}\underline{v} = \dot{v}\begin{bmatrix} \cos(\Psi + \beta) \\ \sin(\Psi + \beta) \end{bmatrix} + v\,(\dot{\Psi} + \dot{\beta})\begin{bmatrix} -\sin(\Psi + \beta) \\ \cos(\Psi + \beta) \end{bmatrix}$$

Der Beschleunigungssensor mißt die Projektion des Beschleunigungsvektors auf die Querachse des Fahrzeugs:

$$F\ 2.4$$

$$a_{quer} = \underline{a}^T \begin{bmatrix} -\sin\Psi \\ \cos\Psi \end{bmatrix}$$

F 2.5

$$a_{quer} = \dot{v}\,\sin\beta + v\,(\dot{\Psi}+\dot{\beta})\,\cos\beta$$

Nach einer Linearisierung der trigonometrischen Funktionen (sinβ=β; cosβ=1) kann man die Gleichung umformulieren zu

F 2.6

$$\dot{\beta} = \frac{a_{quer}}{v} - \dot{\Psi} - \frac{\dot{v}}{v}\,\beta$$

Die Schwimmwinkelgeschwindigkeit $\dot{\beta}$ kann nun entsprechend der obigen Differentialgleichung berechnet werden. Als Meßgröße gehen neben der Querbeschleunigung $a_{quer}$ die Gierwinkelgeschwindigkeit $\dot{\Psi}$, die skalare Fahrzeuggeschwindigkeit v und deren zeitliche Ableitung $\dot{v}$ ein. Zur Ermittlung von β kann das $\dot{\beta}$ der vorherigen Rechnung numerisch integriert werden, wobei für die erste $\dot{\beta}$-Bestimmung $\dot{v}$=0 angenommen wird. Eine Vereinfachung ergibt sich, wenn generell der letzte Term vernachlässigt wird, so daß kein β bestimmt werden muß.

Das vorgeschlagene Verfahren hat den Vorteil, daß die Schwimmwinkelgeschwindigkeit $\dot{\beta}$ direkt aus den Sensorsignalen hergeleitet ist und damit auch im nichtlinearen Bereich der Querdynamik ermittelt werden kann. Nachteilig wirken sich die Empfindlichkeit des Verfahren gegenüber Meßrauschen und das Auf integrieren von Meßfehlern aus, wodurch eine Schwimmwinkelbestimmung möglicherweise sehr ungenau wird.

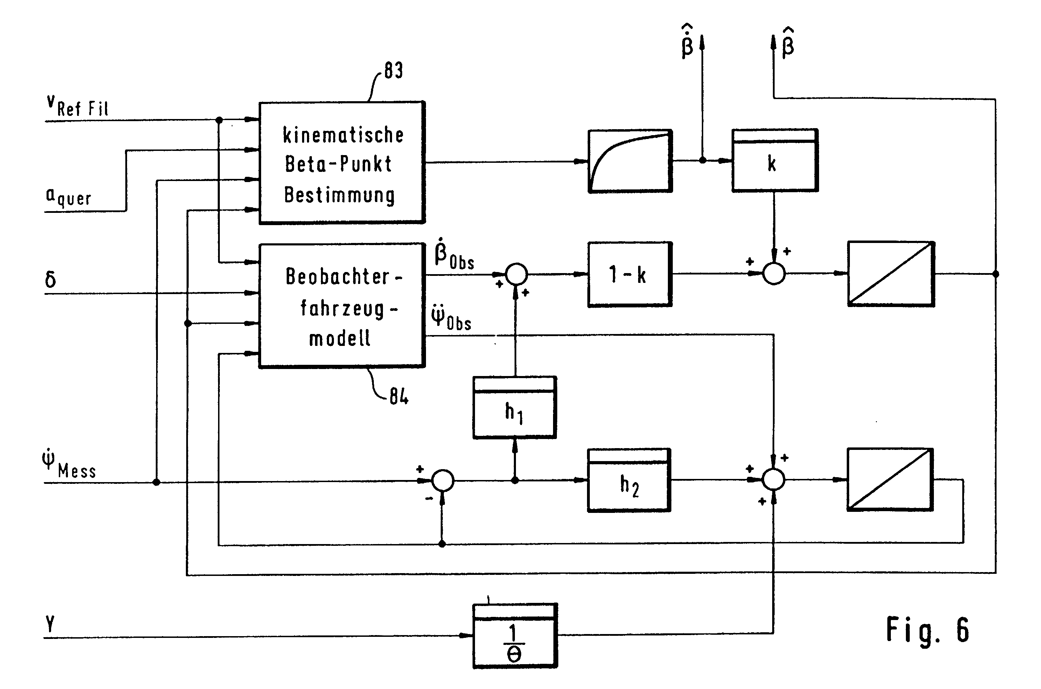

Diese Nachteile werden durch die Kombination mit einem modellgestützten Verfahren umgangen. Wie eine derartige Kombination von kinematischer und auf ein Beobachtermodell gestützter Bestimmung der Schwimmwinkelgeschwindigkeit $\dot{\beta}$ gestaltet sein kann, zeigt Fig. 6, die anstelle des gestrichelt eingezeichneten Blocks 18 in Fig. 2 einfügbar ist. In ein solches modellgestütztes Verfahren fließt zusätzlich noch als Eingangsgröße der Lenkwinkel δ ein, wie durch einen gestrichelten Pfeil angedeutet ist. Durch eine gegenseitige Beeinflussung und Korrektur der kombinierten Bestimmungsmethoden der Schwimmwinkelgeschwindigkeit $\dot{\hat{\beta}}$ wird auch eine weniger fehlerhafte Berechnung des Schwimmwinkels β selbst möglich, so daß dieser dann auch als $\dot{\beta}$ der Regelung zur Verfügung gestellt werden kann. Dies ist ebenfalls durch einen gestrichelten Pfeil angedeutet.

2.2.2 Kombination der kinematischen $\dot{\beta}$-Bestimmung mit einem Beobachterfahrzeugmodell

Mit der Darstellung nach Fig. 6 läßt sich der gestrichelt umrandete Bereich 18 aus Fig. 2 ersetzen. Damit wird es möglich, nicht nur die vorliegende Schwimmwinkelgeschwindigkeit $\dot{\beta}$, sondern auch den vorherrschenden Schwimmwinkel β zu bestimmen.

Im Gegensatz zu einer rein kinematischen Berechnung der Schwimmwinkelgeschwindigkeit $\dot{\hat{\beta}}$ wird hier zusätzlich zur kinematischen $\dot{\beta}$-Bestimmung 83 ein Beobachterfahrzeugmodell 84 zur Feststellung des Fahrzustandes herangezogen. Als Eingangsgröße erhält das Beobachterfahrzeugmodell 84 - genauso wie das Fahrzeugreferenzmodell 12 zur Bestimmung der Gierwinkelgeschwindigkeit - den Lenkwinkel δ. Die gefilterte Fahrzeugreferenzgeschwindigkeit $v_{RefFil}$ fließt als Parameter ein. Die meßbaren Ausgangsgrößen Querbeschleunigung $a_{quer}$ und Gierwinkelgeschwindigkeit $\dot{\Psi}_{Mess}$ werden zur kinematischen $\dot{\beta}$-Bestimmung 83 benötigt, nicht jedoch für das Beobachterfahrzeugmodell 84, welches diese Größen im Prinzip selbst kreiert. Ein weiter Term Y, der im einfachsten Fall identisch ist mit dem vom GMR-Regelgesetz berechneten Zusatzgiermoment, stellt die Änderungen des Fahrzeugverhaltens dar, die durch einen Regeleingriff verursacht sind. Y dient also dazu, das nachgebildete Fahrzeug des Beobachters denselben Bedingungen auszusetzen, wie das reale Fahrzeug.

Außer einer Schwimmwinkelgeschwindigkeit $\dot{\beta}_{obs}$ gibt das Beobachterfahrzeugmodell auch noch einen Wert für die Gierwinkelbeschleunigung $\dot{\Psi}_{obs}$. Die aus der kinematischen $\dot{\beta}$-Bestimmung herrührende Größe für die Schwimmwinkelgeschwindigkeit $\dot{\hat{\beta}}$ wird nach Durchlauf des Tiefpasses mit einem Wichtungsfaktor k multipliziert, während die aus dem Beobachterfahrzeugmodell stammende Größe für die Schwimmwinkelgeschwindigkeit $\dot{\beta}_{Obs}$ Y nach Addition mit einem Korrekturfaktor aus der gemessenen Gierwinkelgeschwindigkeit multipliziert mit einem die Größe der Korrektur bestimmenden Faktor h - mit einem Wichtungsfaktor (1-k) multipliziert wird. Der Wert von k liegt dabei immer zwischen 0 und 1. Ohne Beobachterfahrzeugmodell wäre k = 1. Nach Addition der beiden Schwimmwinkelgeschwindigkeiten wird die Summe aufintegriert zu einem geschätzten Schwimmwinkel $\hat{\beta}$. Dieser wird neben der kinematischen Schwimmwinkelgeschwindigkeit $\dot{\hat{\beta}}$ ebenfalls der Regelung zur Verfügung gestellt. Außerdem wird der Schwimmwinkel β sowohl zur kinematischen $\dot{\beta}$-Bestimmung 83 als auch zum Beobachterfahrzeugmodell 84 weitergegeben. Eine ähnliche Korrekturgröße stellt die vom Beobachterfahrzeugmodell 84 berechnete Gierwinkelbeschleunigung $\dot{\Psi}_{obs}$ dar.

Zunächst wird diese zu einer Gierwinkelgeschwindigkeit aufintegriert und fließt zum einen an das Beobachterfahrzeugmodell 84 zurück und wird andererseits von der gemessenen Gierwinkelgeschwindigkeit $\dot{\Psi}_{Mess}$ abgezogen. Diese Differenz wird mit einem Faktor $h_2$ multipliziert, welcher die Größe der kommenden Regelschritte in der Korrektur des Beobachterfahrzeugmodells 84 bestimmt und mit der Dimension 1/s versehen ist. Die mit diesem Faktor $h_2$ multiplizierte Gierwinkelgeschwindigkeit hat somit dieselbe Dimension wie die Gierwinkelbeschleunigung $\ddot{\Psi}$, so daß beide Größen miteinander addiert werden können und nach weiterer Integration eine rückfließende Korrekturgröße für die Gierwinkelgeschwindigkeit bilden. Im Verlauf einer Giermomentregelung nimmt der Term Y von Null abweichende Werte entsprechend dem aufgebrachten Zusatzgiermonent $M_G$ an. Durch Division durch das Gierträgheitsmoment 0 des Fahrzeugs enthält Y ebenfalls die Dimension einer Gierwinkelbeschleunigung und wird zur Summe der Gierwinkelbeschleunigungen hinzuaddiert, so daß die aufintegrierte Korrekturgröße auch die Regeleinflüsse berücksichtigt.

Wenn nach Fig. 6 ein Beobachterfahrzeugmodell 84 vorhanden ist, welches eine zuverlässigere Bestimmung des Schwimm-winkels β erlaubt, als es mit einer reinen kinematischen Bestimmung der Schwimmwinkelgeschwindigkeit $\dot{\beta}$ und Aufintegration möglich wäre, kann der so bestimmte Schwimmwinkel β auch an den eigentlichen Giermomentregler 10 weitergegeben werden.

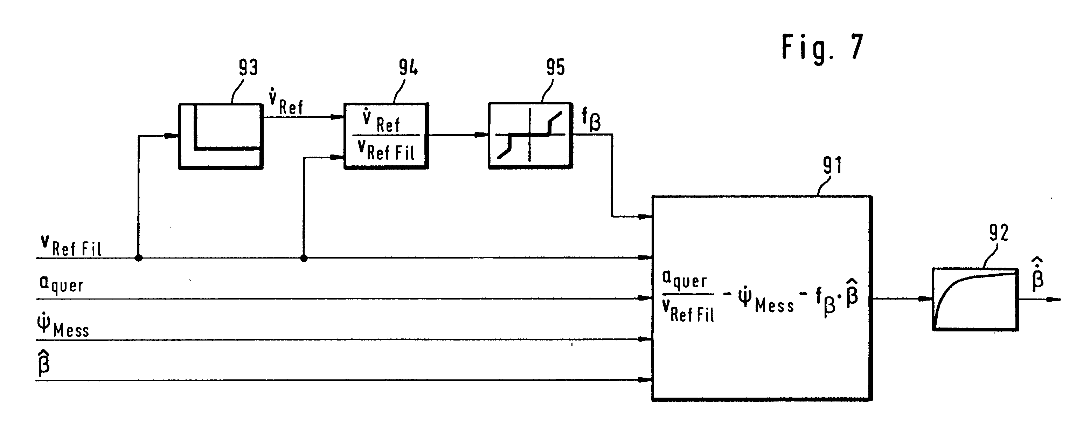

Die kinematische β-Bestimmung, die in Kombination mit einem Beoachterfahrzeugmodell abläuft, ist in Fig. 7 dargestellt. wie schon aus Fig. 6 ersichtlich, gehen die Querbeschleunigung $a_{quer}$ und die Gierwinkelgeschwindigkeit $\dot{\Psi}_{Mess}$ als gemessene Ausgangsgrößen in die Rechnung 91 nach Gleichung F 2.6 ein.

Die gefilterte Fahrzeugreferenzgeschwindigkeit $v_{RefFil}$ wird in Feld 93 differenziert zur Fahrzeugreferenzbeschleunigung $\dot{v}_{Ref}$, die in Feld 94 durch die gefilterte Fahrzeugreferenzgeschwindigkeit $v_{RefFil}$ dividiert wird, was nach nichtlinearer Multiplikation 95 zu einem Faktor $f_β$ führt. Diese nichtlineare Multiplikation 95 bewirkt, das bei kleinem Quotienten aus $\dot{v}_{Ref}$ und $v_{RefFil}$ der Faktor $f_β$ gleich Null gesetzt wird, so daß dieser Faktor, der vor dem Schwimmwinkel β steht, vernachlässigt werden kann. Nur dann, wenn die Fahrzeugbeschleunigung $\dot{v}_{Ref}$ eine signifikante Größe erreicht, wird der Schwimmwinkel β bei der kinematischen β-Bestimmung berücksichtigt. Das hierbei verwendete β ist das kombinierte β, wie es sowohl als Größe für die Regelung als auch zur Rückkopplung nach Fig. 6 verwendet wird. Nach der Rechnung 91 durchläuft der ermittelte Wert für die Schwimmwinkelgeschwindigkeit wie schon zuvor beschrieben einen Tiefpaß 92 und ergibt die geschätzte Schwimmwinkelgeschwindigkeit $\hat{\dot{\beta}}$ .

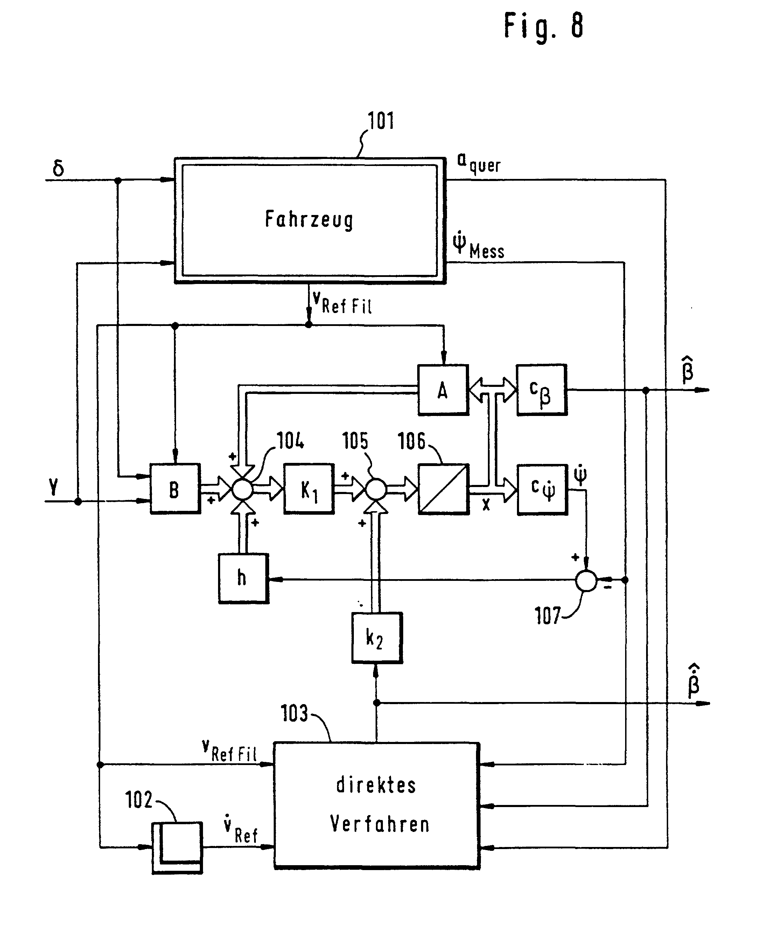

Wie das Beobachterfahrzeugmodell 84 aus Fig. 6 arbeitet, ist in Fig. 8 dargestellt. Hierbei wurde eine Matrizendarstellung gewählt, wobei "→" skalare und "⇒" mehrdimensionale Gebilde darstellen.

Die Matrizendarstellung geht aus von den Gleichungen F 1.1 bis F 1.3. Dabei sind die Zustandsgrößen β und $\dot{\Psi}$ zu einem Zustandsvektor $\underline{x}$(t) zusammengefaßt, so daß sich folgendes Gleichungssystem ergibt:

$$F\ 2.7$$

$$\underline{\dot{x}}(t) = \underline{A}(v(t))\ \underline{x}(t) + \underline{B}(v(t))\ \underline{u}(t)$$

mit der Systemmatrix $\underline{A}$(v(t)), der Eingangsmatrix $\underline{B}$(v(t)), dem Zustandsvektor $\underline{x}$(t) und dem Eingangsvektor $\underline{u}$(t):

F 2.8

$$\underline{A}(v(t)) = \begin{bmatrix} -\dfrac{c_h + c_v}{m\ v(t)} & -1 + \dfrac{c_h\ l_h - c_v\ l_v}{m\ v^2(t)} \\[2em] \dfrac{c_h\ l_h - c_v\ l_v}{\Theta} & -\dfrac{c_h\ l_h^2 + c_v\ l_v^2}{\Theta\ v(t)} \end{bmatrix}$$

$$\underline{B}(v(t)) = \begin{bmatrix} \dfrac{c_v}{m\ v(t)} & 0 \\[1.5em] \dfrac{c_v\ l_v}{\Theta} & \dfrac{1}{\Theta} \end{bmatrix} \quad ; \quad \underline{x}(t) = \begin{bmatrix} \beta(t) \\ \dot{\Psi}(t) \end{bmatrix} \quad ; \quad \underline{u}(t) = \begin{bmatrix} \delta \\ Y \end{bmatrix}$$

Der Eingangsvektor $\underline{u}$ (t) enthält als Eingangsgrößen den Lenkwinkel $\delta$ und den Term Y, der das durch die Giermomentregelung erzeugte Zusatzgiermoment darstellt.

Anstelle von Wichtungsfaktoren werden zur gewichteten Addition der ermittelten Größen eine Wichtungsmatrix $\underline{K}_1$ und ein Wichtungsvektor $\underline{k}_2$ verwendet.

F 2.9

$$\underline{K}_1 = \begin{bmatrix} 1-k & 0 \\ 0 & 1 \end{bmatrix} \quad ; \quad \underline{k}_2 = \begin{bmatrix} k \\ 0 \end{bmatrix} \quad ; \quad 0 \le k \le 1$$

Zur Ausblendung der Zustandsgrößen werden zwei Vektoren $\underline{c}_\beta$ und $\underline{c}_{\dot{\Psi}}$ eingeführt, die jeweils eine Komponente des Zustandsvektors $\underline{x}$(t) löschen:

F 2.10

$$\underline{c}_\beta = [1 , 0] \quad ; \quad \underline{c}_{\dot{\Psi}} = [0 , 1]$$

Die Dynamik des Beobachter-Fahrzeugmodells, also die Größe der Korrekturschritte wird durch einen Vektor $\underline{h}$ bestimmt, dessen erste Komponente $h_1$ dimensionslos ist und dessen zweite Komponente $h_2$ die Dimension (1/s) aufweist:

F 2.11

$$\underline{h} = \begin{bmatrix} h_1 \\ h_2 \end{bmatrix}$$

Ausgehend von dem Fahrzeugmodell in der Zustandsraumbeschreibung (F1.1 und F1.2) ergibt sich dann die im folgenden beschriebene Struktur zur Bestimmung des Schwimmwinkels β mittels eines Beobachters nach Fig 8.

In Fig. 8 ist das Fahrzeug 101 lediglich zur Unterscheidung zwischen Eingangsgrößen und Ausgangsgrößen dargestellt. Es ist nicht Bestandteil des kombinierten Verfahrens zur Bestimmung der Schwimmwinkelgeschwindigkeit $\hat{\dot{\beta}}$ .

Im Addierer 104 werden die Systemgleichungen nach F 2.7 gebildet. Hierzu wird die System-Matrix $\underline{A}$ mit dem Zustandvektor $\underline{x}$ multipliziert und die Eingangsmatrix $\underline{d}$ mit den Eingangsgrößen δ und Y also dem Eingangsvektor $\underline{u}$ multipliziert.

Als einziger veränderlicher Parameter fließt sowohl in die System-Matrix $\underline{A}$ als auch in die Eingangsmatrix $\underline{B}$ die aktuelle Fahrzeugreferenzgeschwindigkeit $v_{RefFil}$ ein. Die durch Addition im Addierer 104 gebildete zeitliche Ableitung $\underline{\dot{x}}$ des Zustandvektors $\underline{x}$ wird nun mit der Wichtungsmatrix $\underline{K_1}$ nach F 2.9 multipliziert und einem weiteren Addierer 105 zugeführt.

Parallel zu diesen Vorgängen wird im direkten Verfahren 103 eine Schwimmwinkelgeschwindigkeit $\hat{\dot{\beta}}$ abgeschätzt. Hierzu werden die gefilterte Fahrzeugreferenzgeschwindigkeit $v_{RefFil}$ sowie deren im Differenzierer 102 (identisch mit 93 in Fig. 7) ermittelte zeitliche Ableitung $\dot{v}_{Ref}$, die gemessene Querbeschleunigung $a_{quer}$ sowie die gemessene Gierwinkelgeschwindigkeit $\dot{\Psi}_{Mess}$ nach Gleichung F 2.6 verwendet. Dabei wird im ersten Schritt der letzte Term der Gleichung vernachlässigt, da noch kein Wert des Schwimmwinkels β vorliegt. Nach Ermittlung der Schwimmwinkelgeschwindigkeit durchläuft diese noch, wie bereits in Fig. 7 dargestellt, den Tiefpaß 92, worauf die daraus resultierende geschätzte Schwimmwinkelgeschwindigkeit $\hat{\dot{\beta}}$ der weiteren Rechnung zur Verfügung gestellt wird. Dieses $\hat{\dot{\beta}}$ entspricht dem $\hat{\dot{\beta}}$, welches in Fig. 2 aus dem gestrichelt eingezeichneten Feld herausgeführt ist. Der Skalar $\hat{\dot{\beta}}$ wird mit dem Wichtungsvektor $\underline{k_2}$ multipliziert, so daß daraus ein Vektor resultiert, dessen erste Komponente die Dimension einer Winkelgeschwindigkeit hat und dessen zweite Komponente gleich Null ist. Auch dieser Vektor wird dem Addierer 105 zugeführt. Der aus der Summe der nach Gleichung F 2.7 gebildeten zeitlichen Ableitung $\dot{x}$ des Zustandsvektors $\underline{x}$ und des aus der Multiplikation mit $\underline{k_2}$ gewonnenen Vektors resultierende Vektor wird im Integrierer 106 zum Zustandsvektor $\underline{x}$ aufintegriert. Durch skalare Multiplikation mit Vektoren $\underline{c}_\beta$ und $\underline{c}_{\dot{\Psi}}$ wird jeweils eine der Komponenten β bzw. $\dot{\Psi}$ aus dem Zustandsvektor als Skalar ausgeblendet und weiter verarbeitet. Während das ausgeblendete $\hat{\dot{\beta}}$ zum einem dem GMR-Regelgesetz 16 und zum anderen dem direkten Verfahren 103 zugeführt wird, wird das berechnete $\dot{\Psi}$ innerhalb des kombinierten Verfahrens lediglich als Zustandsgröße innerhalb des Beobachters und zur Schätzfehlerbestimmung verwendet. Im Addierer 107 wird hierzu die Differenz gebildet zwischen der aus dem Beobachterfahrzeugmodell ermittelten Gierwinkelge-schwindigkeit $\dot{\Psi}$ und der gemessenen Gierwinkelgeschwindigkeit $\dot{\Psi}_{Mess}$. Diese Differenz wird mit einem Vektor $\underline{h}$ multipliziert, dessen erste Komponente dimensionslos ist und die Größe der Korrekturschritte für die Schwimmwinkelgeschwindigkeit β festlegt und dessen zweite Komponente die Dimension $s^{-1}$ trägt und die Größe der Regelschritte bei der Korrektur der Gierwinkelgeschwindigkeit $\dot{\Psi}$ bestimmt.

Auch der Schwimmwinkel $\hat{\beta}$ wird als Korrekturgröße rückgeführt und zwar in das direkte Verfahren der kinematischen β-Bestimmung nach Fig. 7, so daß im darauffolgenden Regelschritt auch der letzte Term der Gleichung F 2.6 mit einem Wert belegt werden kann.

Durch die gegenseitige Korrektur der beiden Rechenver-fahren, also der Berechnung anhand eines Fahrzeugmodells und der Berechnung anhand kinematischer Betrachtungen, ist eine wesentlich genauere Bestimmung des Schwimmwinkels $\hat{\beta}$ möglich, so daß auch dieser als Regelgröße dem GMR-Regelgesetz 16 zugeführt werden kann:

2.3 Fahrzeugreferenzmodelle

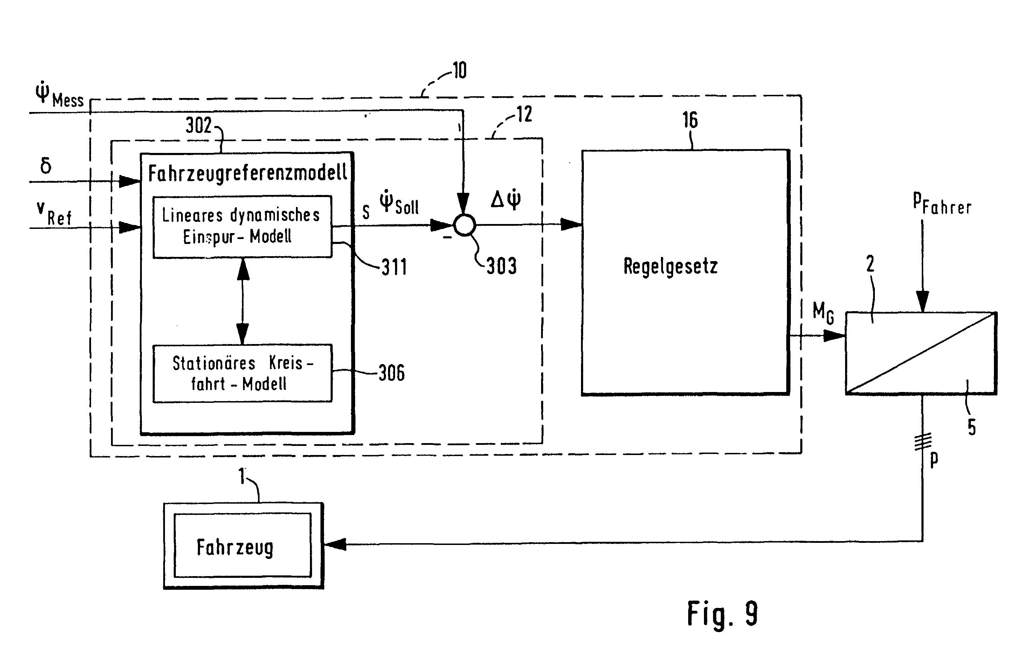

Nachfolgend wird das Fahrzeugreferenzmodell anhand der Fig. 9 bis 15 erläutert.

In Fig. 9 ist der Regelkreis gemäß Fig. 1 und Fig. 2 zur Regelung der Fahrstabilität eines Fahrzeugs nochmals vereinfacht dargestellt. Dabei wurden die Regler 7 bis 9 in Fig. 1, die zugehörige Prioritätsschaltung 3 und das Motormanagement 6 weggelassen sowie die Verteilungslogik 2 mit der Drucksteuerung 5 vereint dargestellt. Innerhalb des Regelkreises wird ein zusätzliches Giermoment $M_G$ um die Hochachse des Fahrzeuges berechnet und eingestellt, damit die vom Fahrer gewünschte Kurvenbahn eingehalten wird. Das zusätzliche Giermoment $M_G$ wird dabei durch gezielte Bremsvorgänge an den einzelnen Rädern erzeugt, wobei der Verlauf der Bremsvorgänge und die Auswahl der zu bremsenden Räder durch die Verteilungslogik 2 festgelegt wird. Die gewünschte Fahrtrichtung legt der Fahrer durch eine entsprechende Winkelstellung des Lenkrades fest. Das Lenkrad ist in einem festen Übersetzungsverhältnis (Lenkübersetzung) mit dem gelenkten Rädern gekoppelt. Auf diese Weise wird ein bestimmter Lenkwinkel $\delta$ der Räder eingestellt.

### 2.3.1 Dynamisches Einspurmodell

In dem GMR-Regler 10 ist ein sog. Fahrzeugreferenzmodell 12 (Fig. 2) = 302 (Fig. 9) vorgesehen, das mit Eingangsdaten (Geschwindigkeit v, repräsentiert durch $v_{Ref}$, Lenkwinkel $\delta$) beliefert wird. Im Fahrzeugreferenzmodell 302 wird aufgrund der Eingangsdaten berechnet, wie groß die Änderung des Gierwinkels pro Zeiteinheit (Gierwinkel-geschwindigkeit $\dot{\Psi}_{soll}$) sein soll. In einem nachgeschalteten Vergleicher 303 wird der Sollwert der Gierwinkelgeschwindigkeit $\dot{\Psi}_{Soll}$ mit dem gemessenen Istwert der Gierwinkelgeschwindigkeit $\dot{\Psi}_{Mess}$ verglichen. Als Ausgangswert gibt der Vergleicher 303 eine Ausgangsgröße $\Delta\dot{\Psi}$ ab, die der Differenz zwischen $\dot{\Psi}_{Soll}$ und $\dot{\Psi}_{Mess}$ entspricht. Der so festgestellte Differenzwert wird einem Regelgesetz 16 zur Steuerung des Giermoments zugeführt. Das Regelgesetz errechnet auf-grund von $\Delta\dot{\Psi}$ ein zusätzliches Giermoment $M_G$, welches der Verteilungslogik 2 zugeführt wird. Die Verteilungslogik 2 legt aufgrund des zusätzlichen Giermoments $M_G$ und ggf. eines Wunsches des Fahrers nach Druckaufbau in den Bremsen $P_{Fahrer}$ Ausgangsgrößen fest. Dies können Bremsdruckwerte oder Ventilschaltzeiten sein.

Auch im Bereich kleiner Geschwindigkeiten ist eine optimale Arbeitsweise des Fahrzeugreferenzmodells 302 wichtig. Zu diesem Zweck kann das Fahrzeugreferenzmodell 302 zusätzlich zu dem oben beschriebenen linearen dynamischen Einspur-modell 311 auch mit einem stationären Kreisfahrtmodell 306 versehen sein.

Für die stationäre Kreisfahrt gilt

F 2.12

$$\dot{\Psi}_{soll} = \delta * \frac{v}{l_v + l_h} * \frac{1}{1 + \frac{v^2}{v_{ch}^2}} + \dot{\Psi}_{korr}$$

F 2.13

$$\beta = \delta * \frac{1 - \frac{l_v}{l_v + l_h} * (1 + \frac{m * v^2}{c_h * (l_v + l_h)})}{1 + \frac{v^2}{v_{ch}^2}} + \beta_{korr}$$

mit

F 2.14

$$v_{ch}^2 = \frac{c_v * c_h * (l_h + l_v)^2}{m * (c_h * l_h - c_v * l_v)}$$

Dabei gilt:
v = vorn; h = hinten; m = Masse; 1 = Abstand der Achse vom Schwerpunkt; $\dot{\Psi}_{Korr}$, $\beta_{korr}$ = Korrekturglieder für $\dot{\psi}$, $\beta$.

Für das lineare dynamische Einspurmodell gelten die Systemgleichungen F1.1 und F1.2.

Die Umschaltung zwischen den Rechenmodellen 306 und 311 wird durch einen in der Zeichnung nicht dargestellten Umschalter im Fahrzeugreferenzmodel 302 in Abhängigkeit von der Geschwindigkeit des Fahrzeugs automatisch vorgenommen. Dabei ist für die Umschaltvorgänge von einem Modell zum anderen eine Hysterese von einigen km/h vorgesehen. Unterhalb der Schaltschwelle wird die Soll-Gierwinkelgeschwindigkeit $\dot{\Psi}_{Soll}$ nach dem Modell der stationären Kreisfahrt 306 berechnet. Überschreitet die Geschwindigkeit von einer niedrigen Geschwindigkeit kommend die in dieser Richtung geltende Schwelle, so wird die Berechnung des Sollwertes der Gierwinkelgeschwindigkeit $\dot{\Psi}_{soll}$ mit Hilfe des dynamischen Einspurmodells 311 vorgenommen. Hierdurch lassen sich die für die Regelung bei höheren Geschwindigkeiten besonders wichtigen dynamischen Vorgänge in das Modell miteinbeziehen.

Beim Übergang von dem Kreisfahrtmodell 306 zu dem Einspurmodell 311 werden die durch das Kreisfahrtmodell berechneten Sollwerte wie $\dot{\Psi}_{soll}$ und $\beta$ als Startwerte für das Einspurmodell eingesetzt. Hierdurch werden Einschwingvorgänge beim Umschalten vermieden. Die weitere Berechnung erfolgt nun mit Hilfe des Einspurmodells 311 solange, bis die bei abnehmender Geschwindigkeit niedrigere Geschwindigkeitsschwelle unterschritten wird. Um auch hier Einschwingvorgänge gering zu halten, werden die für das Kreisfahrtmodell notwendigen Korrekturfaktoren $\dot{\Psi}_{Korr}$ und $\beta_{korr}$ mit den zuvor in dem Einspurmodell berechneten Werten für $\dot{\Psi}_{soll}$ und $\beta$ sowie mit den Eingangsgrößen Geschwindigkeit $v_{ref}$ Lenkwinkel $\delta$ errechnet.

Die Korrekturwerte haben folgende Größe:

$$F2.15$$

$$\dot{\Psi}_{korr} = \dot{\Psi}_{soll} - \delta * \frac{v}{l_v + l_h} * \frac{1}{1 + \frac{v^2}{v_{ch}^2}}$$

$$F2.16$$

$$\beta_{korr} = \beta - \delta * \frac{1 - \frac{l_v}{l_v + l_h} * (1 + \frac{m * v^2}{c_h * (l_v + l_h)})}{1 + \frac{v^2}{v_{ch}^2}}$$

Diese Korrekturfaktoren nehmen in ihrem Einfluß über die Zeit exponentiell ab nach der Gesetzmäßigkeit:

$$F\ 2.17$$

$$korr(n+1) = korr(n) * \lambda$$

wobei $\lambda$ Werte zwischen 0 und kleiner 1 annehmen kann. Mit n bzw. n+1 werden die Rechendurchläufe gezählt.

Hierdurch werden sprungartige Änderungen vermieden, da im stationären Fall die beiden Berechnungsmethoden unterschiedliche Ergebnisse liefern. Somit ist durch den Rechenmodellwechsel die Möglichkeit gegeben, bis zu Geschwindigkeiten von v = 0 km/h die Sollwerte für die Regelung recht präzise zu bestimmen.

Im Zusammenhang mit Fig. 9 wurde erläutert, daß als Fahrzeugrechenmodelle unterschiedliche Modelle in Frage kommen. Ein bevorzugtes Modell kann dabei das der stationären Kreisfahrt sein. Nach diesem Modell läßt sich die Gierwinkelgeschwindigkeit $\dot{\Psi}_{soll}$ nach der oben angegebenen Formel berechnen. Will man nun ein derartiges Fahrzeugrechenmodell darstellen, so bietet es sich an, einer Rechenschaltung die gemessenen Werte $\lambda$ und $v_{Ref}$ zuzuführen und als Ausgangswert dann den Sollwert der Gierwinkelgeschwindigkeit $\dot{\Psi}_{soll}$ abzugreifen.

2.3.3 Vereinfachtes Modell

Im folgenden wird ein äußerst einfaches Modell zum Ermitteln einer Sollgierwinkelgeschwindigkeit hergestellt. Es soll eine Alternative sein zu dem vorher beschriebenen Kombinationsmodell. Es zeichnet sich dadurch aus, daß mit wenig Rechenleistung ein akzeptables Ergebnis erzielt wird.

Nach diesem Modell wird die Sollgierwinkelgeschwindigkeit $\dot{\Psi}_{soll}$ berechnet zu

$$2.18$$

$$\dot{\Psi}_{soll} = \frac{\delta * v}{l}$$

Diese Gleichung ergibt sich aus F2.12, mit Gleichung F 2.14 und F 2.15, wenn man die Steifigkeiten $c_v$ und $c_h$ sehr groß annimmt.

Dieser Ansatz beruht auf den folgenden Überlegungen.

Bei dem bisher beschriebenen Fahrzeugreferenzmodell wird die Sollgierwinkelgeschwindigkeit $\dot{\Psi}_{soll}$ entweder mittels eines dynamischen Fahrzeugmodells (z.B. eines Einspurmodells) oder durch ein statisches Modell (stationäre Kreisfahrtwert genannt) berechnet und mit der gemessenen Gierwinkelgeschwindigkeit $\dot{\Psi}_{Mess}$ verglichen. Bei jedem dieser Ansätze hängt aber die Vorgabe (und damit auch der Regelungseingriff) direkt von der Güte des Fahrzeugmodells ab. Da es sich hierbei um lineare Ersatzmodelle handelt, weicht das Modell in einigen Fällen deutlich vom tatsächlichen Fahrzeugverhalten ab.

Verändert sich zusätzlich das wirkliche Fahrzeugverhalten aufgrund von z.B. Beladung oder Verschleiß einzelner Komponenten, so beschreibt das Modell das Fahrzeug nur unzureichend. Demzufolge sollte mittels einer fortlaufenden Parameterschätzung eine Modellanpassung durchgeführt werden, wobei folgende Probleme auftreten:

Für die Schätzung muß eine Anregung vorhanden sein, d.h. der Fahrer müßte das Fahrzeug mittels Lenkvorgabe im linearen Bereich (<0.4g) ausreichend anregen. Dies trifft bei normaler Fahrt kaum zu.

Weiter ist es nicht möglich, alle Parameter des linearen Einspurmodells direkt zu schätzen. Somit müßten bestimmte Parameter fest vorgewählt werden.

Die Regelung auf der Basis von Modellannahmen kann also immer nur bezüglich der Modellvorgaben eine zufriedenstellende Lösung bieten. In vielen Fällen kann es daher ausreichend sein, nach einem einfacheren Regelungsprinzip vorzugehen.

Ein wichtiges Ziel der Fahrstablitätsregelung ist es, das Fahrverhalten so abzustimmen, daß die Reaktion des Fahrzeugs auf Lenk-, Brems- und Gaspedaleingaben des Fahrers stets vorhersehbar und gut kontrollierbar ist. Demzufolge müssen unter- und übersteuernde Betriebszustände des Fahrzeugs erkannt und durch einen entsprechenden Bremsen- bzw. Motormanagementeingriff auf neutrales Verhalten hin korrigiert werden.

Die Idee für ein vereinfachtes Regelungsprinzip besteht darin, ein direktes Maß für unter-/übersteuerndes Verhalten als Regelgröße zu verwenden. Nach einer der Definition für das Steuerverhalten eines Kraftfahrzeuges werden dazu die mittleren Schräglaufwinkel der Vorder- und Hinterachse $(\alpha_v, \alpha_H)$ verglichen. Bei größeren Schräglaufwinkeln vorn hat das Fahrzeug danach ein untersteuerndes, im umgekehrten Fall ein übersteuerndes Verhalten. Neutrales Verhalten liegt definitionsgemäß vor, wenn die Schräglaufwinkel vorne und hinten gleich sind.

Somit gilt

F2.19

$$\alpha_v - \alpha_h \quad \begin{array}{ll} > \ 0: & \text{untersteuernd} \\ = \ 0: & \text{neutral} \\ < \ 0: & \text{übersteuernd} \end{array}$$

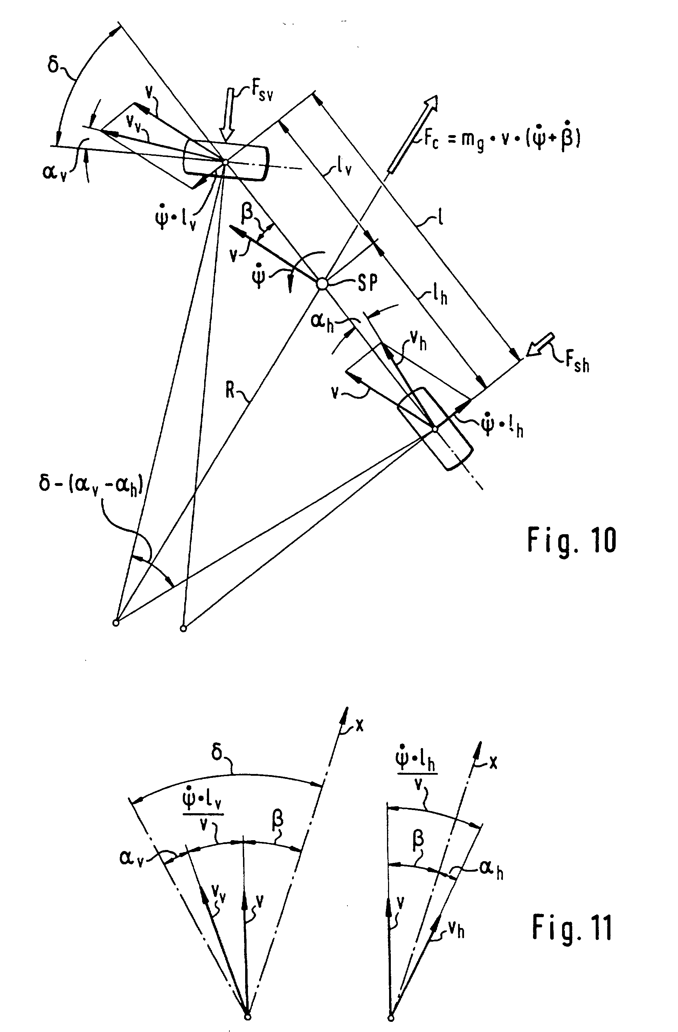

Auf Basis der Schräglaufwinkeldifferenz ist es also möglich, den augenblicklichen Fahrzustand des Fahrzeugs direkt zu bestimmen. Verwendet man als Ansatz das Einspur-Fahrzeugmodell (Fig. 10), lassen sich daraus die Schräglaufwinkel in Abhängigkeit vom Lenkwinkel $\delta$, dem Schwimmwinkel $\beta$, der Gierwinkelgeschwindigkeit $\dot{\Psi}$ und der Fahrzeuggeschwindigkeit $v$ ableiten, und zwar wie folgt:

F2.20a

$$\alpha_v = \delta - \beta - \frac{\Psi * l_v}{v}$$

F2.20b

$$\alpha_h = -\beta + \frac{\Psi * l_h}{v}$$

Da der Schwimmwinkel nicht direkt meßbar bzw. einfach berechenbar ist, kann keine explizite Berechnung der einzelnen Schräglaufwinkel vorgenommen werden. Wird aber deren Differenz gebildet, so ist es möglich, diese Größe auf Basis der vorhandenen Meßgrößen (Lenkwinkel, Gierwinkelgeschwindigkeit), der aus dem ABS-Regler bekannten Fahrzeugreferenzgeschwindigkeit $v_{Ref}$ und dem konstanten Radstand 1 zu berechnen.

$$F\ 2.21$$

$$\alpha_v - \alpha_h = \delta - \frac{l * \dot{\Psi}}{v}$$

Damit steht eine Größe zur Verfügung, die als Maß für Unter-/Übersteuern verwendet werden kann.

Betrachtet man weiter den bekannten Zusammenhang zwischen dem momentanen Kurvenradius R der Rurvenbahn des Fahrzeugschwerpunktes und der Schräglaufwinkeldifferenz

$$F\ 2.22$$

$$R = \frac{l}{\delta - (\alpha_v - \alpha_h)}$$

so ist zu erkennen, daß unter der Annahme

$$F\ 2.23$$

$$\alpha_v - \alpha_h = 0$$

eines neutralen Fahrzustands F2.19 der Kurvenradius R nur noch durch den Lenkwinkel $\alpha$ bestimmt wird, nämlich

$$F\ 2.24$$

$$R = \frac{l}{\delta}$$

Es ist daher eine Regelung möglich, die als Regelgröße direkt die berechnete Schräglaufwinkeldifferenz verwendet. Vorgabe für diese Regelung ist es, die Regelgröße betragsmäßig klein zu halten, um so in etwa neutrales Verhalten zu erreichen. Eventuell ist es sinnvoll, diese Toleranzschwelle asymmetrisch anzusetzen, so daß in Richtung übersteuerndes Verhalten die Toleranz geringer gewählt werden kann.

Nach diesen Überlegungen läßt sich die Sollgiergeschwindigkeit $\dot{\Psi}_{soll}$ berechnen (F2.18). Diese Sollgiergeschwindigkeit $\dot{\Psi}_{soll}$ wird dann mit $\dot{\Psi}_{Mess}$ verglichen und gemäß Fig. 1 der Regelung zugrundegelegt.

2.3.5 Sollwertbegrenzung

Eine Regelung des Fahrverhaltens des Fahrzeugs hat nur solange Sinn, wie die Haftung der Fahrzeugräder auf der Fahrbahn erlaubt, das errechnete Zusatzdrehmoment am Fahrzeug wirksam werden zu lassen.

Beispielsweise ist es unerwünscht, daß die Regelung das Fahrzeug auf jeden Fall auf die durch den Lenkwinkel $\delta$ vorgegebene Kurvenbahn zwingt, wenn das Lenkrad zu stark oder zu schnell hinsichtlich der bestehenden Fahrzeuggeschwindigkeit eingeschlagen wurde.

Es sollte daher verhindert werden, daß $\dot{\Psi}_{soll}$ unter allen Umständen, gemäß dem gewählten Fahrzeugreferenzmodell zur Vorgabe gemacht wird. Folgt man allein dem Referenzmodell, dann kann dies nämlich unter unglücklichen Umständen dazu führen, daß bei versehentlich zu groß eingestelltem Lenkradwinkel bei gleichzeitig hoher Geschwindigkeit über das dann auch zu große $\dot{\Psi}_{Soll}$ die tatsächliche Gierwinkelgeschwindigkeit $\dot{\Psi}$ so weit verstellt wird, daß im Extremfall das Fahrzeug sich um die eigene Achse dreht, während es sich mit seinem Schwerpunkt im wesentlichen geradeaus bewegt. Dieser Zustand ist für den Fahrer noch sehr viel ungünstiger als der Zustand, bei dem das Fahrzeug aufgrund der schlechten Reibungsverhältnisse dem Fahrerwunsch nicht zu folgen vermag und stark untersteuernd geradeausschiebt. Denn in letzterem Falle wird das Fahrzeug wenigstens nur geradeausfahren und sich nicht gleichzeitig dabei um die eigene Achse drehen. Um diese in Sonderfällen nachteiligen Folgen zu vermeiden, sind im Fahrzeugreferenzmodell zusätzlich Rechenalgorithmen vorgesehen, welche es gestatten, über den Reibwert $\dot{\mu}$ die für die gerade gemessene Geschwindigkeit gültige maximale Gierwinkelgeschwindigkeit $\dot{\Psi}_{Sollmax}$ festzulegen. Das $\dot{\mu}$ wird in der Reibwerterkennung 13 bestimmt. Die Rechenalgorithmen basieren auf der Theorie der stationären Kreisfahrt, für die gilt, daß $\dot{\Psi} = a_{quer}/v$ ist (F2.18).

Die maximal zulässige Querbeschleunigung $a_{qlim}$ läßt sich im wesentlichen als Funktion des Reibwertes der Geschwindigkeit v, der Längsbescheunigung $a_{long}$ sowie ggf. weiterer Parameter bestimmen. Damit wird

F 2.25

$$a_{qlim} = f(mu, v, a_{long}, ...)$$

Die maximale Gierwinkelgeschwindigkeit berechnet sich zu.

F 2.26

$$\Psi_{Sollmax} = \frac{a_{qlim}}{v}$$

Es ist daher möglich, einen Grenzwert für die Gierwinkelgeschwindigkeit festzulegen, der dem Fahrerwunsch nicht mehr direkt Rechnung trägt, sondern mit dazu beitragen soll, daß beim Ausbrechen des Fahrzeugs dieses nicht zusätzlich auch noch um seine Hochachse dreht.

Einzelheiten zur geeigneten μ-Bestimmung sind weiter unter Punkt 2.1 ausführlich abgehandelt.

Es kann auch vorgesehen sein, einen Regeleingriff nur unter bestimmten Rahmenbedingungen zuzulassen. Eine Möglichkeit hierzu kann z.B. darin bestehen, daß die Aktivierungslogik 11 in Fig. 2 kein aktuelles $M_G$ an die Verteilungslogik 2 weiter leitet, wenn ein zu großer Schwimmwinkel β festgestellt wird, was in Abhängigkeit von der gerade herrschenden Geschwindigkeit geschehen kann.

2.4 Regelgesetz

Im folgenden wird die Programmstruktur des Regelgesetzes 16 des Giermomentenreglers 10 beschrieben. Das Programm errechnet aus vier Eingangsgrößen das zusätzliche Giermoment $M_G$ um die Hochachse des Fahrzeuges, das notwendig ist, um ein stabiles Fahrzeugverhalten vor allem bei Kurvenfahrt zu erhalten. Das errechnete Giermoment $M_G$ ist Grundlage für die Berechnungen der in die Radbremsen einzusteuernden Drücke.

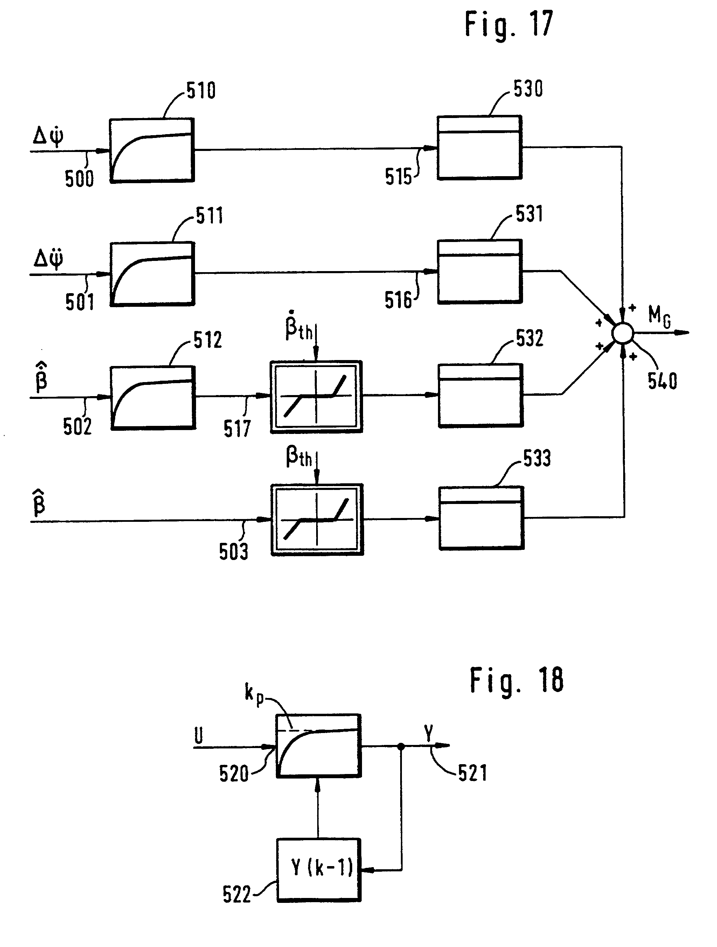

Als Eingangsgrößen für das Regelgesetz stehen zur Verfügung ( siehe Fig. 17)

am Eingang 500 : $\Delta\dot{\Psi}$

am Eingang 501 : $\Delta\ddot{\Psi}$

am Eingang 502 : $\hat{\dot{\beta}}$

am Eingang 503 : $\dot{\beta}$

Für den Fall, daß als Grundlage die Schräglaufwinkeldifferenz herangezogen wird, liegt am Eingang 500 $\Delta\lambda$ und am Eingang 501 $\Delta\dot{\lambda}$ an.

Der Eingang 503 ist fakultativ. Er steht insbesondere dann zur Verfügung, wenn im Gesamtberechnungssystem ein sogenanntes Beobachterfahrzeugmodell 84 vorgesehen ist.

Der Wert am Eingang 500 ergibt sich als Differenz zwischen der gemessenen Gierwinkelgeschwindigkeit $\dot{\Psi}_{Mess}$ und der mit Hilfe eines Fahrzeugreferenzmodells 12 errechneten Sollgierwinkelgeschwindigkeit $\dot{\Psi}_{soll}$.

Der Wert am Eingang 501 ergibt sich entweder als zeitliche Änderung der Größe am Eingang 500 von Berechnungsloop zu Berechnungsloop dividiert durch die Loopzeit $T_0$, oder als Differenz der zeitlichen Ableitung der gemessenen Gierwinkelgeschwindigkeit und der zeitlichen Ableitung der errechneten Sollgierwinkelgeschwindigkeit.

Unter einem Berechnungsloop versteht man einen Rechendurchgang durch den FSR-Regler nach Figur 1. Ein solcher Durchgang nimmt durch seine Struktur eine bestimmte Echtzeit in Anspruch, die Loopzeit $T_0$. Für eine effektive Regelung muß diese ausreichend klein gehalten werden.

Die Werte an den Eingängen 500 und 501, nämlich $\Delta\dot{\Psi}$ und $\Delta\ddot{\Psi}$ werden zunächst jeweils einem Tiefpaßfilter 510 bzw. 511 zugeführt.

Die beiden Tiefpaßfilter sind im Prinzip gleich aufgebaut und haben eine Struktur, wie sie in der Figur 18 dargestellt ist.

Die Eingangsgröße 520 des Tiefpaßfilters nach Fig. 18 wird mit u die Ausgangsgröße 521 mit y bezeichnet. Die Ausgangsgröße 521 wird einem Register 522 zugeführt und steht bei der nächsten Berechnung als vorheriger Wert y(k-1) zur Verfügung.

Der Ausgangswert 521 für die Berechnungsschleife errechnet sich dann nach folgender Formel

F 2.27

$$y(k) = \lambda * y(k\text{-}1) + (1\text{-}\lambda) * u * k_p$$

wobei $\lambda$ Werte zwischen 0 und 1 einnehmen kann. $\lambda$ beschreibt die Wertigkeit der Tiefpaßfilters. Für den Grenzwert $\lambda=0$, ist die Rekursionfunktion eliminiert: die vorhergehenden Werte y(k-1) haben für die Berechnung des neuen Ausgangswertes 521 keine Bedeutung. Je mehr sich $\lambda$ dem Wert 1 nähert, desto stärker wirken die vorhergehenden Werte, so daß sich der aktuelle Eingangswert 520 nur langsam als Ausgangswert 521 durchsetzt.

$k_p$ ist ein linearer Wertungsfaktor.

Die eben beschriebene Tiefpaßfilterung erfolgt für die beiden Eingangswerte 500 und 501 und führt zu gefilterten Werten 515,516.

Eine ebensolche Tiefpaßfilterung 512 erfolgt für die Eingangsgröße 502, nämlich für $\hat{\dot{\beta}}$. Der gefilterte Wert 517 wird ebenso wie der ungefilterte Wert 503 nichtlinearen Filtern zugeführt. Diese Filter haben die Aufgabe, für kleine Eingangswerte den Ausgangswert zu 0 zu setzen und für Eingangswerte, die über einen bestimmten Grenzwert liegen, einen um den Grenzwert reduzierten Eingangswert weiterzuleiten. Die Begrenzung erfolgt sowohl im negativen als auch im positiven Bereich. Die Grenzwerte $\dot{\beta}_{th}$ und $\beta_{th}$ können fest im Programm implementierte Größen sein, aber auch Größen, die von weiteren Parametern abhängen, zum Beispiel vom Reibbeiwert zwischen den Reifen und der Fahrbahn. Die Grenzwerte werden in diesem Fall gesondert als lineare Funktion des Reibwertes berechnet.

Alle vier Größen, nämlich 515,516,517 und 518 werden in einem weiteren Schritt 530,531,532 bzw. 533 mit je einem linearen Faktor gewichtet.

Diese Faktoren sind fest im Berechnungssystem implementiert. Sie lassen sich größenordnungsmäßig aus entsprechenden Fahrzeugmodellen errechnen, benötigen aber im allgemeinen eine Feinabstimmung durch Fahrversuche. Auf diese Weise wird für jedes Fahrzeug bzw. für jeden Fahrzeugtyp ein entsprechender Satz von linearen Faktoren festgelegt. Die so gewichteten Eingangsgrößen 500,501,502,503 werden addiert, wobei (Additionsglied 540) sich das zusätzliche Giermoment $M_G$ ergibt, das dem weiteren Berechnungsgang des Programms zugrunde gelegt wird.

In der Praxis hat sich aber herausgestellt, daß noch Modifikationen des errechneten Giermoments notwendig sind.

Dazu können zwei Ansätze gemacht werden:

1. Die Eingangsgrößen, insbesondere $\Delta\dot{\Psi}$, werden modifiziert.
2. Das errechnete Giermoment $M_G$ wird einer Filterung unterzogen.

Mit beiden Ansätzen wird versucht, die Regelung nicht nur unter Berücksichtigung der Gierwinkelgeschwindigkeit sondern auch unter Berücksichtigung des Schwimmwinkels durchzuführen.

2.4.1 Modifikation der Eingangsgrößen

Mit Hilfe eines Fahrzeugreferenzmodells wird - wie schon erläutert - ein Sollwert für die Gierwinkelgeschwindigkeit errechnet. Da das verwendete Fahrzeugreferenzmodell mit den tatsächlichen Gegebenheiten nicht vollständig übereinstimmen kann, ist es in der Regel notwendig, das Ergebnis des Modellrechnung nochmals zu korrigieren. Im Referenzmodell werden im wesentlichen die Werte ausgewertet, die ein Gierwinkelgeschwindigkeitssensor sowie ein Lenkwinkelsensor liefern. Eine Korrektur der errechneten Sollgierwinkelgeschwindigkeit kann erfolgen, indem zusätzlich die Werte berücksichtigt werden, die ein Querbeschleunigungssensor liefert.

Die Auswertung kann auf verschiedenen Wegen erfolgen. Im folgenden wird ein Weg vorgeschlagen, bei dem zunächst die gemessene Querbeschleunigung in eine Schwimmwinkelgeschwindigkeit $\hat{\dot{\beta}}$ umgerechnet wird. Mit diesem Wert wird eine Korrektur des Sollwertes für die Gierwinkelgeschwindigkeit vorgenommen.

Die Berechnung von $\hat{\dot{\beta}}$ erfolgt z. B. mit Hilfe der kinematischen $\beta$-Bestimmung 14, 15 (Fig. 2).

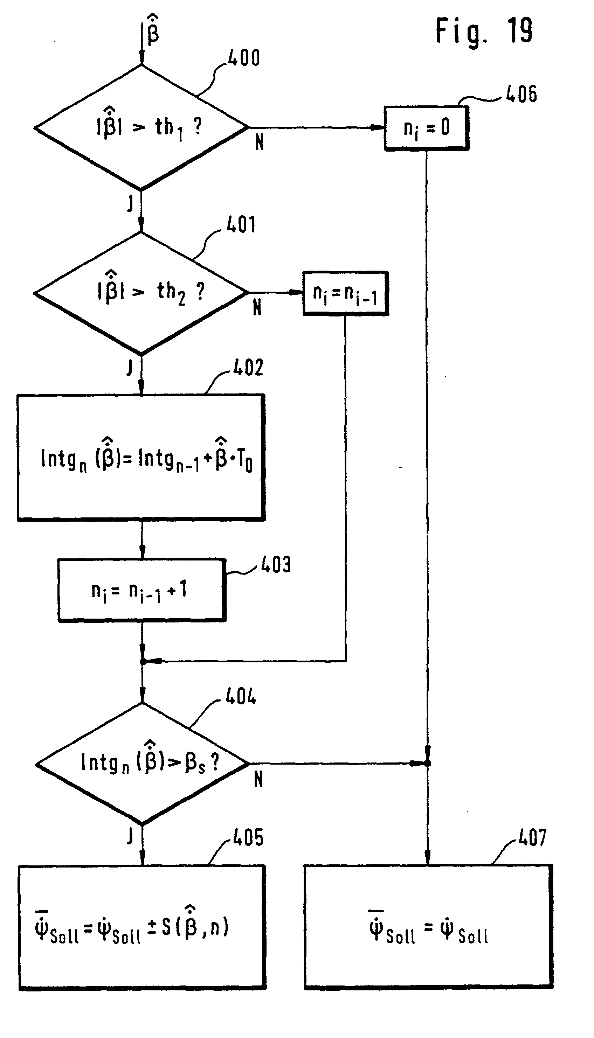

Das Verfahren erfolgt nach dem in Figur 19 gegebenen Schema. Der geschätzte Wert für die Schwimmwinkelgeschwindigkeit $\hat{\dot{\beta}}$ wird ggf. nach einer Tiefpaßfilterung mit einem ersten Schwellenwert $th_1$ verglichen (Raute 400). Die Bedeutung dieses Vergleichs ergibt sich erst nach einer Korrektur des Sollwertes für die Gierwinkelgeschwindigkeit $\dot{\Psi}_{soll}$ und wird daher im Anschluß näher erläutert.

Wenn $|\hat{\dot{\beta}}| > th_1$ ist, wird der Betrag von $\hat{\dot{\beta}}$ mit einem zweiten Schwellenwert $th_2$ verglichen (Raute 401), wobei der zweite Schwellenwert größer ist als der erste Schwellenwert $th_1$. Wird auch dieser Schwellenwert überschritten, so erfolgt zu nächst eine Integration 402 der Schwimmwinkelgeschwindigkeit $\hat{\dot{\beta}}$ über die Zeit. Dazu wird die Schwimmwinkelgeschwindigkeit $\hat{\dot{\beta}}$ mit der Loopzeit $T_0$ multipliziert und zum vorherigen Integrationsergebnis $Intg_{i-1}$ addiert. Die Integrationsschritte werden mit n gezählt, so daß die Zahl n nach der Integration um 1 erhöht wird (Schritt 403). Die Integrationszeit wird damit repräsentiert durch die Anzahl n der erfolgten Integrationsschritte. Das Integrationsergebnis $Intg_n$ ($\hat{\dot{\beta}}$) wird verglichen mit einem Schwellenwert $\beta_s$ (Raute 404). Die Schwellenwertgröße repräsentiert eine maximal zulässige Abweichung gegenüber einem theoretisch einzuhaltenden Schwimmwinkel. Der Schwellenwert $\beta_s$ liegt in der Größenordnung von ca. 5 Grad.

Wird dieser Schwellenwert überschritten, so wird die Sollgierwinkelgeschwindigkeit $\dot{\Psi}_{soll}$ durch eine additive Konstante S neu bewertet (Schritt 405), die abhängig ist von der momentanen Schwimmwinkelgeschwindigkeit $\hat{\dot{\beta}}$ und der Anzahl n der Integrationsschritte. Das heißt, daß mit jedem neuen Loop, in dem der Schwellenwert $\beta_s$ überschritten ist, die Sollgierwinkelgeschwindigkeit weiter reduziert wird. Die additive Konstante S wird je nach Vorzeichen von $\dot{\Psi}_{soll}$ entweder hinzuaddiert oder subtrahiert, so daß auf jeden Fall der betragsmäßige Wert der Sollgierwinkelgeschwindigkeit reduziert wird. Erreicht $Intg_n$ nicht man den Schwellenwert $\beta_s$, dann wird $\dot{\Psi}$ nicht limitiert (Schritt 407).

Bei einem erneuten Durchgang wird wiederum überprüft, ob der Betrag der geschätzten Schwimmwinkelgeschwindigkeit kleiner als die Schwelle $th_1$ ist. Wenn dies der Fall ist, so wird dies dahingehend interpretiert, daß das Fahrzeug sich wieder stabilisiert hat. Dies hat zur Folge, daß n in Schritt 406 wieder zu 0 gesetzt wird und daß für die Weiterberechnung im Schritt 407 eine Sollgierwinkelgeschwindigkeit zugrunde gelegt wird, die nicht korrigiert wird, also identisch ist mit dem Wert, der als Ergebnis des Fahrzeugreferenzmodells vorliegt. Außerdem wird der Startwert $Intg_{n-1}$ der Integration gleich Null gesetzt.

Überschreitet eine Schwimmwinkelgeschwindigkeit betragsmäßig zwar $th_1$, nicht jedoch $th_2$, so bleibt der alte Wert $Intg_n$ unverändert, d.h. die Integration wird für einen Loop ausgesetzt. Die vorherige Limitierung bleibt erhalten. Sollte der Schwellenwert $th_2$ wieder überschritten werden, wird die Integration fortgeführt.

2.4.2 Korrektur $M_G$

Eine weitere Möglichkeit besteht darin, das Giermoment $M_G$, das vom Regelgesetz 16 berechnet wird, zu manipulieren. Dazu wird die Differenz zwischen dem vorherigen Wert $M_1(k-1)$ zum aktuellen Wert $M_1(k)$ gebildet. Der Index 1 weist darauf hin, daß diese Werte die unmittelbaren Ergebnisse des Giermomentenreglers sind, also noch nicht aufgrund der folgenden Korrektur berechnet worden sind. Diese Differenz wird auf die Loopzeit $T_0$ bezogen und ergibt $\Delta M_1$. Zu diesem Gradienten $\Delta M_1$ wird ein Korrekturgradient hinzuaddiert, der sich aus $\hat{\dot{\beta}}$ multipliziert mit einem Korrekturfaktor ergibt. Der so korrigierte Gradient wird multipliziert mit der Loopzeit $T_0$ und zum Giermoment $M(k-1)$ der vorhergehenden Rechnung hinzuaddiert. Das ergibt das aktuelle Moment $M_G(k)$ das der weiteren Berechnung zugrunde gelegt wird.

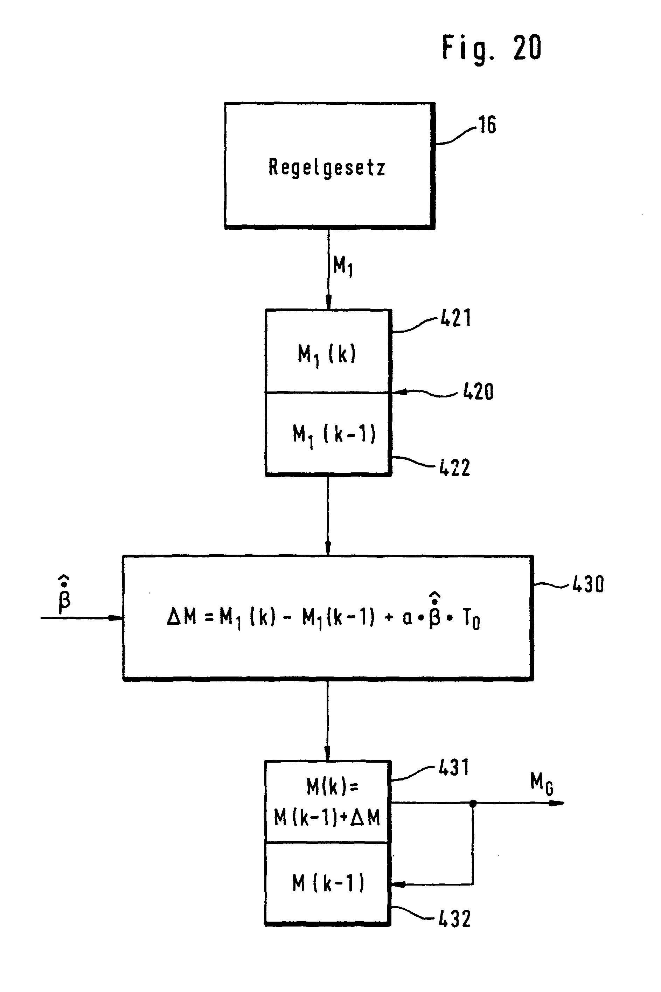

Realisiert wird diese Berechnung durch eine Logik wie sie in Figur 20 dargestellt ist. Die berechneten Momente, die sich aus dem Unterprogramm "Regelgesetz 16" ergeben, werden in ein Schieberegister 420 eingeführt. An der ersten Stelle 421 des Schieberegisters 420 befindet sich jeweils der aktuelle Wert $M_1(k)$; an zweiter Stelle 422 des Schieberegisters 420 befindet sich der vorherige Wert $M_1(k-1)$. Sobald ein neuer Wert $M_1$ vorliegt, wird der Wert aus dem Register 421 in das Register 422 geschoben und der Wert im Register 421 durch den neuen Wert ersetzt. Die Werte in den Registern 421 und 422 werden einer Berechnungslogik 430 zugeführt, die ein $\Delta M$ nach folgender Formel berechnet:

F 2.28

$$\Delta M = M_1(k) - M_1(k\text{-}1) + a * \dot{\beta} * T_0$$

Der Berechnungslogik 430 wird dazu außerdem aus der kinematischen $\dot{\beta}$-Bestimmung die geschätzte Schwimmwinkelgeschwindigkeit $\hat{\dot{\beta}}$ zugeführt. Weiterhin ist in einem Speicher ein Wert für einen Korrekturfaktor a festgelegt mit dem die Schwimmwinkelgeschwindigkeit in eine Momentenänderung umgerechnet wird. Die Berechnung des neuen Moments $M(k)$ geschieht nach folgender Formel

F 2.29

$$M(k) = M(k\text{-}1) + \Delta M$$

Im Register 431 wird der aktuelle Wert des korrigierten Moments, im Register 432 der Wert aus der vorherigen Berechnung abgelegt. Der Wert im Register 431 wird der weiteren Berechnung zugrunde gelegt.

3. Verteilungslogik

3.1 Zusatzgiermoment durch Aufbringung von Bremskräften

Um eine stabile Fahrt des Fahrzeuges auch in einer Kurve zu erreichen, ist es zunächst notwendig, den Lenkwinkel zu erfassen. Der Lenkwinkel repräsentiert die vom Fahrer gewünschte Kurvenbahn des Fahrzeugs. Bei einer stabilen stationären Kurvenfahrt, soll das Fahrzeug mit einem annähernd konstanten Schwimmwinkel und gleichbleibender Gierwinkelgeschwindigkeit die Bahn durchlaufen. Abweichungen von diesem Schwimmwinkel bzw. von dieser Gierwinkelgeschwindigkeit muß der Fahrer durch Gegenlenken ausgleichen. Dies ist aber nicht immer möglich, insbesondere dann nicht, wenn der Fahrer die Kurve mit der Kurvengrenzgeschwindigkeit durchfährt. In solchen Situationen ist es notwendig, das Fahrzeug gezielt abzubremsen und zusätzliche Momente um die Hochachse auf das Fahrzeug aufzubringen, die eine Anpassung der tatsächlichen an die gewünschte Gierwinkelgeschwindigkeit hervorrufen sollen.
Regelalgorithmen, die diese Zusammenhänge beschreiben, sind zuvor beschrieben worden, brauchen daher an dieser Stelle nicht näher ausgeführt zu werden.
Es bleibt allerdings die Problematik, ein vom Regelalgorithmus berechnetes zusätzliches Giermoment $M_G$ in geeigneter Weise durch ein gezieltes Aufbringen von Bremskräften zu verwirklichen.
Bei hydraulischen Bremsen besteht die Aufgabe daher praktisch darin, für jede einzelne Radbremse einen Bremsdruck festzulegen. Dabei soll das zu realisierende Moment um die Hochachse mit möglichst geringen Drücken in den einzelnen Bremsen erzielt werden. Es wird daher vorgeschlagen, für jedes Rad einen Koeffizienten zu bestimmen und die Bremsdrücke aus dem zu erzeugenden Fahrzeuggiermoment und den jeweils gewichteten Koeffizienten zu ermitteln.
Wie schon erläutert, ist es insbesondere bei Fahrzeugbremsanlagen, die auf hydraulischer Basis arbeiten, günstig, die Koeffizienten so zu bestimmen, daß unmittelbar der Bremsdruck für die einzelnen Radbremsen ermittelbar ist. Die Gewichtung der Koeffizienten erfolgt auf dem Wege, daß jeder einzelne Koeffizient durch die Summe der Quadrate aller Koeffizienten geteilt wird.
Dabei bestimmt jeder Koeffizient den Zusammenhang zwischen dem Radbremsdruck und dem Anteil der so erzeugten einzelnen Radbremskräfte am Giermoment des Fahrzeugs. Als Größen bei der Bestimmung der einzelnen Koeffizienten fließen Parameter ein, die sich während der Fahrt eines Fahrzeuges ändern. Diese sind insbesondere

- der Lenkwinkel δ
- der Reibwert μ zwischen Reifen und Fahrbahn,
- das Fahrzeugmasse m
- die Achslastverteilung $N_z$.

Größen, die bei der Berechnung der Koeffizienten einfließen, und die fahrzeugspezifisch bzw. bremsspezifisch sind, sind zum Beispiel für eine Scheibenbremsanlage

- die Fläche A der Bremskolben
- die Anzahl n der Kolben pro Radbremse
- der Reibungskoeffizient $μ_R$ zwischen Scheibe und Bremsbelag
- das Verhältnis s von effektivem Reibradius zu dynamischem Reifenhalbmesser
- sowie der Wirkungsgrad η der Bremse.

Die vorgeschlagene Berechnungsmethode hat den Vorteil, daß sehr schnell aus einem vorgegebenen zusätzlichen Giermoment die entsprechenden Bremsdrücke berechnet werden können. Sollten sich die oben genannten Parameter während der Fahrt ändern, so wird dies über eine Änderung der Koeffizienten in der Bremsdruckberechnung berücksichtigt.
Während einige Einflußgrößen linear in die Berechnung der Koeffizienten eingehen, ist vor allem die Abhängigkeit der Koeffizienten vom Lenkwinkel δ nichtlinear.
Es hat sich aber gezeigt, daß eine linearisierte Abschätzung der Abhängigkeit zwischen den einzelnen Koeffizienten und dem Lenkwinkel ausreichend gute Ergebnisse liefert.

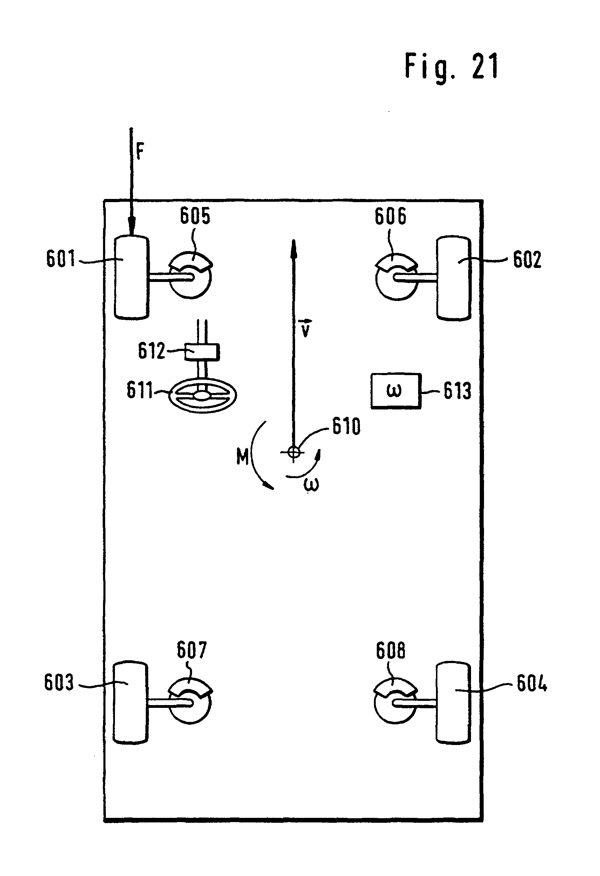

Die Figur 21 zeigt in schematischer Weise ein Fahrzeug in Geradeausfahrt mit vier Rädern 601,602,603,604. Jedem der Räder ist eine Radbremse 605,606,607,608 zugeordnet. Diese können unabhängig voneinander angesteuert werden, wobei durch die von den Radbremsen ausgeübten Radbremsmomente Bremskräfte in den Aufstandsflächen der Räder auf der Fahrbahnoberfläche erzeugt werden. So wird z.B. bei einer Ansteuerung der Radbremse 605 am Rad 601 eine Bremskraft F erzeugt, die wiederum ein Moment M (im Beispiel positiv gezählt) um die Hochachse erzeugt.

Derartige Momente um die Hochachse des Fahrzeuges können gezielt eingesetzt werden, um ein Fahrzeug stabil auf einer vom Fahrer gewünschten Bahn zu halten.

Im Fahrzeug sind weiterhin Sensoren vorhanden. Dazu gehören Radsensoren, die die Winkelgeschwindigkeit der Räder 601,602,603,604 erfassen. Außerdem wird der Lenkradwinkel mit einem Lenksensor 612 erfaßt. Weiterhin ist ein Sensor 613, für die Gierwinkelgeschwindigkeit vorgesehen.

Aus diesen Sensoren, die einerseits-den Fahrerwunsch andererseits das Verhalten des Fahrzeuges erfassen, läßt sich ein zu realisierendes Giermoment errechnen, das, wenn es aufgebracht wird, in der Lage ist, die Gierwinkelgeschwindigkeit des Fahrzeuges sowie seinen Schwimmwinkel mit dem Fahrerwunsch in Übereinstimmung zu bringen. Dazu werden die Radbremsen 605,606,607,608 unabhängig voneinander angesteuert, wozu eine Steuereinrichtung vorgesehen ist, die ein Teil eines komplexen Programmes zur Regelung der Fahrstabilität ist.

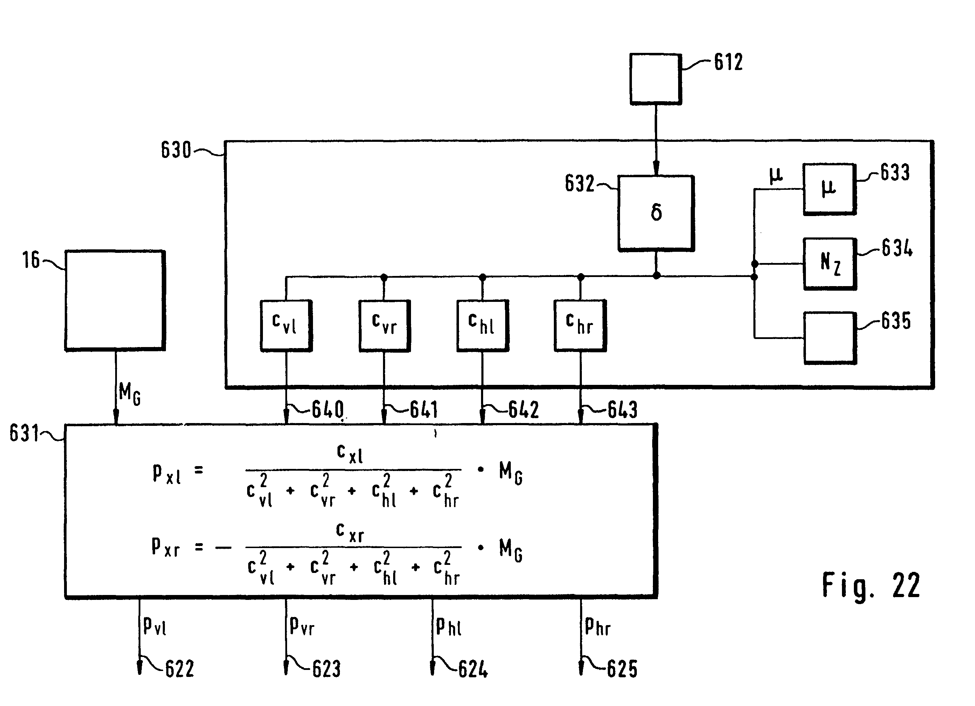

Die prinzipielle Situation ist in der Figur 22 dargestellt. Mit 16 ist ein Programmodul bezeichnet, das das Giermoment $M_G$ errechnet. Die Figur 22 zeigt eine Steuervorrichtung, die Drücke $p_{xx}$ berechnet, die in die einzelnen Radbremsen 605,606,607,608 eingesteuert werden sollen. Die ermittelten Druckwerte 622, 623,624,625 können weiter ausgewertet werden und in entsprechende Steuersignale für die Radbremsen 605,606,607,608 umgewandelt werden.

Die Steuervorrichtung selbst besteht aus zwei Teilen, nämlich aus einem ersten Teil 630, in dem Koeffizienten $c_{xx}$ für die einzelnen Räder berechnet werden. Die Koeffizienten $c_{xx}$ stellen eine lineare Beziehung zwischen dem Druck in der Radbremse und dem anteiligen Giermoment her, das durch die Bremskraft an dem entsprechenden Rad hervorgerufen wird. Im zweiten Teil 631 werden durch Gewichtung der einzelnen Koeffizienten sowie unter Berücksichtigung des zu realisierenden Giermomentes $M_G$ die einzelnen Druckwerte $p_{xx}$ 622,623,624,625 berechnet.

Die Druckwerte sowie die Koeffizienten werden mit Indizes bezeichnet.

Es gilt:

| v | vorne | h | hinten |
|---|-------|---|--------|
| l | links | r | rechts |
| x | steht entweder für v/l oder h/r | | |

Der erste Berechnungsteil 630 berücksichtigt den Lenkwinkel der über eine Auswertung 632 des Lenksensors 612 dem Rechengang zur Verfügung gestellt wird. Zur Berechnung der Koeffizienten wird der Reibwert μ berücksichtigt, der in einer Auswerteeinheit 633 aus dem Raddrehverhalten abgeleitet wird. (s. auch Abschnitt 2.1) Das Raddrehverhalten wird wiederum durch ein Signal der Radsensoren an den einzelnen Rädern ermittelt. Weiterhin fließt die Fahrzeugmasse sowie die Lastverteilung $N_z$ ein, die in einer Auswerteeinheit 634 ermittelt werden, in der das Fahrzeugverhalten in verschiedenen Situationen analysiert wird. Der erste Programmteil 630 hat Zugriff zu einem Speicher 635, der die oben genannten fahrzeugspezifischen und radbremsspezifischen Werte enthält.

Aus den genannten Werten wird für jedes Rad ein Koeffizient $c_{xx}$ errechnet, wobei die Werte 640,641,642,643 parallel oder nacheinander berechnet werden können. Die Berechnung erfolgt nach einer Funktion, die im Programm implementiert ist. In dieser Funktion sind die bekannten Zusammenhänge zwischen Bremsdruck und Bremskraft berücksichtigt. In der Regel ist der Zusammenhang linear. Lediglich der Lenkwinkel δ muß gesondert berücksichtigt werden. Wie in geeigneter Weise der Lenkwinkel berücksichtigt werden kann, wird weiter unten beschrieben.

In dem zweiten Berechnungsschritt 631 werden entweder parallel oder sukzessive aus den einzelnen Koeffizienten 640,641,642,643 nach folgender Formel die Druckwerte für die einzelnen Radbremsen ermittelt:

F 3.1a

$$p_{xl} = \frac{c_{xl}}{c_{vl}^2 + c_{vr}^2 + c_{hl}^2 + c_{hr}^2} * M_G$$

F 3.1b

$$p_{xr} = - \frac{c_{xr}}{c_{vl}^2 + c_{vr}^2 + c_{hl}^2 + c_{hr}^2} * M_G$$

Die Berechnung der einzelnen Drücke nach dieser Formel hat den Vorteil, daß, um das berechnete Bremsmoment zu erzielen, nur relativ geringe Drücke in die Radbremsen eingesteuert werden müssen. Zum weiteren kann die Bremsdrucksteuerung sehr empfindlich und schnell auf Änderungen insbesondere des Lenkwinkels und der Reibwerte reagieren.

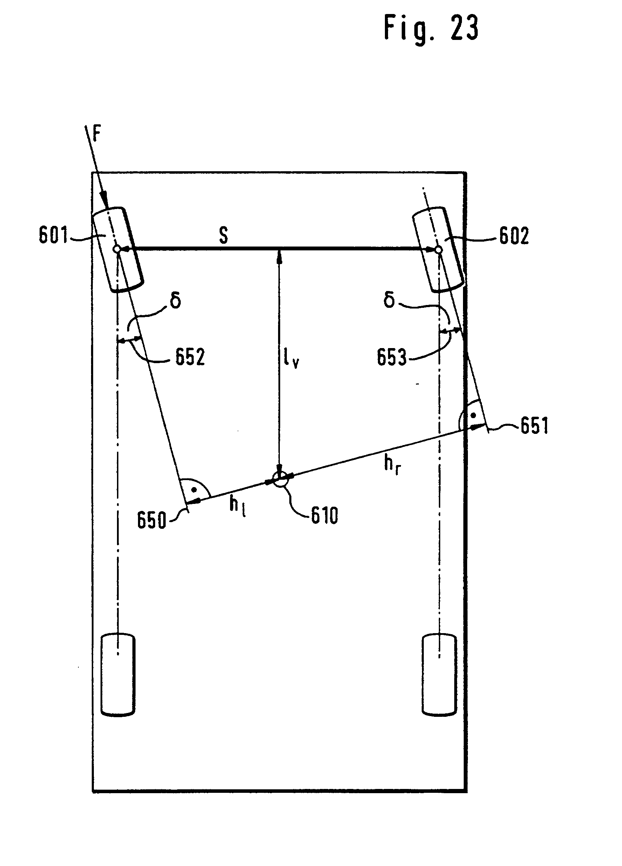

Der Lenkwinkel $\delta$ wird wie folgt bei der Berechnung der Koeffizienten berücksichtigt: Figur 23 zeigt dazu eine schematische Darstellung eines Fahrzeuges, wobei die Vorderräder 601 und 602 eingeschlagen dargestellt sind. Mit S ist der Abstand der Vorderräder bezeichnet, mit $l_v$ der Abstand des Schwerpunktes 610 zur Vorderachse.

Die Radebenen 650, 651 schließen Lenkwinkel 652,653 mit der Längsachse des Fahrzeuges ein. Der Einfachheit halber wird angenommen, daß die Lenkwinkel $\delta$ 652,653 gleich groß sind. Der effektive Hebelarm $h_l$ bzw. $h_r$ bezogen auf die Bremskraft F, die in der Radebene 650,651 wirkt, errechnet sich aufgrund von Näherungsüberlegungen für kleine Lenkwinkel wie folgt.

F 3.2a

$$h_r = \frac{s}{2} + \delta * l_v$$

F 3.2b

$$h_l = \frac{s}{2} - \delta * l_v$$

Da die Näherung "kleine Lenkwinkel" nicht immer erfüllt ist, hat es sich als günstig erwiesen, ggf. mit der folgenden Formel zu rechnen.

F 3.3a

$$h_r = \frac{s}{2} + \delta * \sqrt{\frac{s^2}{4} + l_v^2}$$

F 3.3b

$$h_l = \frac{s}{2} - \delta * \sqrt{\frac{s^2}{4} + l_v^2}$$

Sollten die berechneten Hebelarme kleiner Null werden, werden sie zu Null gesetzt.

Die Radkoeffizienten $c_{xx}$ lassen sich nun wie folgt berechnen, nämlich zu

F 3.4

$$c_{xx} = C_{hydxx} * h_{l,r},$$

wobei in $c_{hydxx}$ alle Parameter außer dem Lenkwinkel $\delta$ berücksichtigt sind.

Auf diese Weise lassen sich die Koeffizienten darstellen als das Produkt zweiter Terme, wobei der eine Term den effektiven Hebelarm bestimmt und der andere Term vom Lenkwinkel unabhängig ist.

3.2 Zusatzgiermoment durch Reduzierung von Seitenkräften

Eine Methode, einseitig wirkende Bremskräfte aufzubringen, besteht darin, die Radbremsen derart anzusteuern, daß die Räder unterschiedlich stark abgebremst werden. Ein Verfahren, das dies bewerkstelligt, ist im vorherigen Abschnitt beschrieben worden.

Dieses Verfahren stößt dann an eine Grenze, wenn eine Fahrstabilitätsregelung während einer Pedalbremsung erfolgen soll, wenn also schon aufgrund der Abbremsung durch den Fahrer ein bestimmter Bremsdruck in den Radbremsen eingestellt ist. Im Prinzip läßt sich das oben beschriebene Verfahren - auch für diesen Fall anwenden. Anstelle absoluter Drücke werden Änderungen der schon eingestellten Bremsdrücke ermittelt.

Dabei treten allerdings die folgenden Probleme auf. Ist in eine Radbremse schon eine sehr hoher Druck eingesteuert, so daß sehr hohe Bremskräfte realisiert werden, so würde eine Steigerung des Bremsdruckes nicht unbedingt zu einer Steigerung der Bremskraft führen, da die Haftgrenze zwischen Reifen und Fahrbahn erreicht ist. Der im oben genannten Modell unterstellte lineare Zusammenhang zwischen Bremsdruck und Bremskraft ist in diesem Fall nicht mehr gegeben.

Die nicht zu überschreitende Grenze der Bremskraft auf der einen Fahrzeugseite kann im Sinne einer Giermomentregelung kompensiert werden durch eine Bremskraftminderung auf der anderen Fahrzeugseite.

Dies hat allerdings den Nachteil, daß mit Minderung der Bremskraft auch die Verzögerung des Fahrzeuges gemindert wird. Das ist nicht immer hinnehmbar, da bei einem vom Fahrer eingeleitetem Bremsvorgang das Fahrzeug auf möglichst kurze Distanz zum Stillstand gebracht werden soll. Eine zu starke Minderung der tatsächlichen Verzögerung des Fahrzeugs gegenüber dem Fahrerwunsch kann daher im allgemeinen nicht hingenommen werden. Zur Lösung dieses Problems wird folgender Weg eingeschlagen.

Die Radbremsen zumindest eines Rades wird so angesteuert, daß der Längsschlupf 2 des Rades so eingestellt wird, daß er größer ist als der Längsschlupf, bei der der maximale Kraftschluß erreicht wird. Bei diesem Verfahren wird ausgenutzt, daß die übertragene Bremskraft, das ist die Längskraft am Reifen, ihren maximalen Wert bei einem Längsschlupf von ca. 20 % (0 % - freirollendes Rad; 100 % - blockiertes Rad) erreicht und bei Werten über 20 % die übertragbare Bremskraft nur wenig abnimmt, so daß keine erhebliche Einbuße bei der Verzögerung des Fahrzeuges bei einem Radschlupf zwischen 20 % und 100 % auftritt.

Betrachtet man aber gleichzeitig die übertragbare Seitenkraft, das ist die Kraft, die senkrecht zur Radebene wirkt, so zeigt die eine starke Abhängigkeit vom Radschlupf, der sich darin äußert, daß mit zunehmendem Schlupf die übertrag bare Seitenkraft stark abnimmt. Im Schlupfbereich von über 50 % zeigt das Rad ein ähnliches Verhalten wie ein blockiertes Rad. Das heißt es werden kaum noch Seitenkräfte aufgebracht.

Durch eine geschickte Auswahl der Räder, an denen ein hoher Längsschlupf eingestellt wird, kann ein kontrolliertes Schleudern des Fahrzeuges provoziert werden, wobei die mit dem Schleudern hervorgerufene Änderung des Gierwinkels der gewünschten Änderung entsprechen soll. Da bei diesem Verfahren die Längskräfte im wesentlichen erhalten bleiben, die Seitenkräfte aber deutlich reduziert werden, kann eine Kontrolle der Gierwinkelgeschwindigkeit erfolgen, ohne daß die Fahrzeugverzögerung zu stark reduziert wird.

Die Auswahl des Rades, das zumindest kurzzeitig mit einem erhöhten Längsschlupf gefahren wird, erfolgt nach folgenden Regeln. Dazu betrachtet man eine vom Fahrer gewollte Kurvenfahrt nach rechts. Für eine Kurvenfahrt nach links gelten entsprechende "gespiegelte" Regeln. Dabei kann der Fall auftreten, daß das Fahrzeug sich nicht so stark in die Kurve hineindreht wie erwartet. Mit anderen Worten, das Fahrzeug untersteuert. In diesem Fall wird das hintere kurveninnere Rad mit erhöhten Schlupfwerten betrieben. Dreht sich das Fahrzeug allerdings zu stark in die Kurve, dieser Fall wird als Übersteuern bezeichnet, so wird das vordere kurvenäußere Rad mit hohen Schlupfwerten betrieben.

Zusätzlich kann der Druckabbau an einem Vorderrad unterbunden werden. Dies geschieht nach folgenden Regeln. In einer Fahrsituation, in der das Fahrzeug sich untersteuernd verhält, wird der Bremsdruckabbau am kurvenäußeren vorderen Rad unterbunden. In einer Situation, in der sich das Fahrzeug übersteuernd verhält, wird der Druckabbau am kurveninneren vorderen Rad unterbunden.

Die tatsächliche Steuerung des Bremsdruckes kann wie folgt erfolgen. Wie schon zuvor erläutert wurde, wird der Bremsdruck in den einzelnen Radbremsen in Abhängigkeit von dem zu erzielenden Giermoment und den gewichteten Radkoeffizienten bestimmt.

Bei der Berechnung der Koeffizienten kann ein vom Bremsschlupf abhängiger Faktor eingeführt werden, der derart nachgeregelt wird, daß sich der oben beschriebene gewünschte Bremsschlupf einstellt. Die Begrenzung des Druckabbaus an einem Rad kann durch Festlegung einer unteren Schwelle für den entsprechenden Koeffizienten erzielt werden.

Im folgenden soll das in dem Steuerprogramm der Bremsanlage implementierte Verfahren näher erläutert werden.

Das Steuerprogramm berechnet aufgrund von gewichteten Koeffizienten den Bremsdruck, der in jeder einzelnen Radbremse erzeugt werden muß. Problematischer wird die Berechnung, wenn das Fahrzeug gebremst wird, insbesondere dann, wenn es unter Ausnutzung der Haftschlußgrenze zwischen Reifen und Fahrbahn verzögert wird. In solchen Fällen ist es durchaus möglich, daß zunächst eine Antiblockierregelung einsetzt, bevor eine überlagerte Fahrstabilitätsregelung erforderlich wird.

In solchen Fällen können die prinzipiellen Überlegungen für ein ungebremstes Fahrzeug nicht übernommen werden, da zum Beispiel bei der Erhöhung eines Druckes in einer Radbremse die entsprechende Bremskraft nicht linear anwächst, weil die Haftschlußgrenze erreicht ist. Eine Erhöhung des Drucks in dieser Radbremse würde also keine zusätzliche Bremskraft und damit kein zusätzliches Moment erzeugen.

Zwar kann der gleiche Effekt, ein zusätzliches Giermoment zu erzeugen, durch die Minderung des Radbremsdrucks des anderen Rades der Achse hervorgerufen werden. Damit würde aber insgesamt eine Verringerung der Bremskraft bewirkt werden, was wiederum mit der Forderung kollidiert, daß das Fahrzeug auf möglichst kurze Distanz zum Stillstand gebracht werden soll.

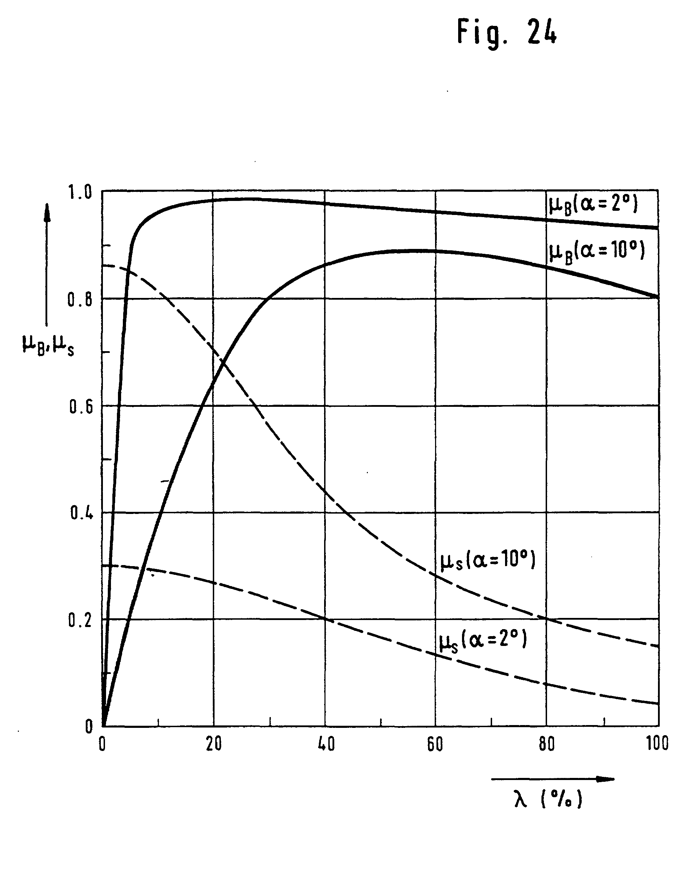

Es wird daher das in Figur 24 gezeigte Verhalten von Fahrzeugrädern ausgenutzt. Diese Diagramm zeigt auf der X-Achse Schlupfwerte $\lambda$ zwischen 0 und 100 %, wobei mit 0 % ein freirollendes Rad und mit 100 % ein blockiertes Rad markiert ist. Die Y-Achse zeigt die Reib- und Seitenkraftwerte $\mu_B$ und $\mu_s$ im Wertebereich zwischen 0 und 1. Die durchgezogenen Linien zeigen die Abhängigkeit des Reibwertes vom Schlupf für unterschiedliche Schräglaufwinkel $\alpha$. Insbesondere für kleine Schräglaufwinkel erkennt man, daß die Kurve einen Maximumwert im Bereich Schlupf $\lambda$ = 20 % hat. In Richtung 100 % nimmt der Reibwert leicht ab. Für einen Schräglaufwinkel von 2° beträgt der maximale Reibwert ca. 0,98, während er bei $\lambda$ = 100 % noch den Wert 0,93 aufweist. Betrachtet man dagegen die Seitenkraftwerte, so ergibt sich insbesondere für größere Schräglaufwinkel eine extreme Abnahme über den Schlupfbereich. Für einen Schräglaufwinkel von 10° liegt der Seitenkraftwert für einen Schlupfwert von 0 % bei 0,85 und sinkt für Schlupfwerte von nahezu 100 % auf 0,17.

Den Kurven der Figur 24 kann somit entnommen werden, daß bei Schlupfwerten im Bereich zwischen 40 und 80 % relativ hohe Bremskräfte, aber nur geringe Seitenkräfte übertragen werden können.

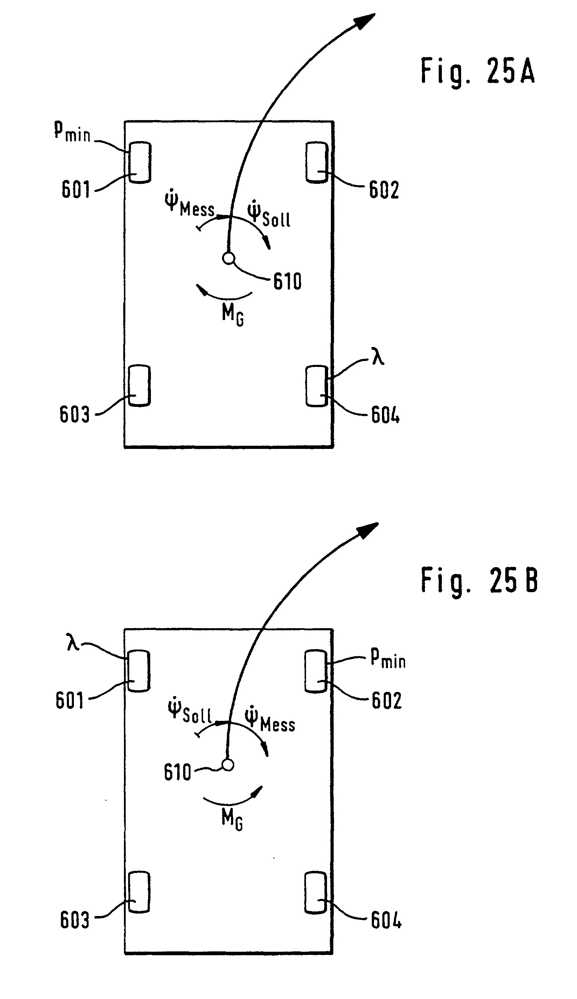

Dieses Radverhalten kann ausgenutzt werden, um gezielt die Seitenkraft eines bestimmten Rades am Fahrzeug zu verringern. Die Auswahl des Rades erfolgt nach dem folgenden Schema, was anhand der Figuren 25a und 25b näher erläutert werden soll.

Die Figur 25 a, b zeigt ein Fahrzeug in schematischer Darstellung in einer Rechtskurve. Entsprechend dem Kurvenradius und der Geschwindigkeit des Fahrzeuges muß sich das Fahrzeug um seine Hochachse drehen, das heißt es muß eine bestimmte Gierwinkelgeschwindigkeit im Uhrzeigersinn vorliegen.

Das Fahrzeug verfügt, wie schon erläutert, über einen Gierwinkelsensor. Weicht die gemessene Gierwinkelgeschwindigkeit $\dot{\Psi}_{Mess}$ von der zu erzielenden $\dot{\Psi}_{soll}$ ab, so muß ein zusätzliches Moment $M_G$ um die Hochachse des Fahrzeuges aufgebracht werden.

Weicht die gemessene Gierwinkelgeschwindigkeit in der Weise von der zu erzielenden ab, daß das Fahrzeug sich nicht genügend dreht, so liegt ein sogenanntes untersteuerndes Verhalten vor. Es muß ein zusätzliches Moment aufgebracht werden, das in dieser Situation negativ gezählt wird. Es soll bewirken, daß sich das Fahrzeug in die Kurve hineindreht. Dies könnte in vorliegendem Fall dadurch erreicht werden, daß der Bremsdruck in den rechten Fahrzeugrädern erhöht wird.

Wenn das Fahrzeug aber schon vom Fahrer gebremst wird, kann es möglich sein, daß diese Räder schon maximale Bremskraft übertragen. Wenn dies von einer Auswerteelektronik festgestellt wird, wird der Druck in der rechten Hinterradbremse so gesteigert, daß das Rad bei Schlupfwerten im Bereich zwischen 40 und 80 % läuft. Das Rad 604 ist daher mit einem "$\lambda$" markiert. Dies hat, wie schon erläutert, eine erhebliche Senkung der Seitenkraft zur Folge. Es werden also nur noch geringe Seitenkräfte am rechten Hinterrad aufgebaut, was zur Folge hat, daß das Fahrzeug mit dem Heck nach links ausbricht, also eine Drehung im Uhrzeigersinn beginnt. Die Minimierung der Seitenkraft wird solange beibehalten, bis die tatsächliche Gierwinkelgeschwindigkeit $\dot{\Psi}_{Mess}$ der Soll-Gierwinkelgeschwindigkeit $\dot{\Psi}_{soll}$ des Fahrzeuges entspricht.

In der Figur 25b ist die Situation eines übersteuernden Fahrzeuges dargestellt. Das Fahrzeug dreht sich schneller um die Hochachse, als dies einer errechneten Soll-Gierwinkelgeschwindigkeit entspricht. In diesem Fall wird vorgeschlagen, die Seitenkraft am vorderen linken Rad 601 zu senken. Dies erfolgt ebenfalls dadurch, daß an diesem Rad Schlupfwerte zwischen 40 und 80 % eingesteuert werden. Das Rad 601 ist daher hier mit einem "$\lambda$" markiert.

Für beide Fälle kann im Steuerprogramm ein Unterprogramm abgelegt werden, das eine weitere Druckabsenkung am kurvenäußeren Vorderrad 601 für den Fall des Untersteuerns (Figur 25a) bzw. am kurveninneren Vorderrad 602 für den Fall des Übersteuerns (Figur 25b) bewirkt wird. Diese Räder sind jeweils mit "$p_{min}$" markiert. Für eine Kurvenfahrt nach links erfolgen die entsprechenden Ansteuerungen seitenverkehrt.

Die Regelung des Drucks in den einzelnen Rädern kann nun auf die Weise erfolgen, daß für jedes einzelne Rad ein Koeffizient bestimmt wird, der den Zusammenhang zwischen Druckänderung und dem berechneten zusätzlichen Giermoment $M_G$ darstellt.

Diese Koeffizienten sind eine Funktion von Parametern, die das Fahrzeug bzw. die Radbremsen beschreiben, sowie von Größen, die sich während einer Fahrt ändern. Dies sind insbesondere der Lenkwinkel $\delta$ und der Reibwert $\mu$ der Paarung Straße/Reifen (s. auch Abschnitt 3.1). Für die oben erwähnte Steuerung wird nun zusätzlich eine Abhängigkeit vom Längsschlupf des jeweiligen Rades eingeführt. Die Unterbindung des Druckabbaus an einzelnen Rädern kann dadurch realisiert werden, daß für die Koeffizienten untere Grenzen definiert werden, wobei die errechnete Größe der Koeffizienten durch den Mindestwert ersetzt wird, falls der Mindestwert unterschritten wird.

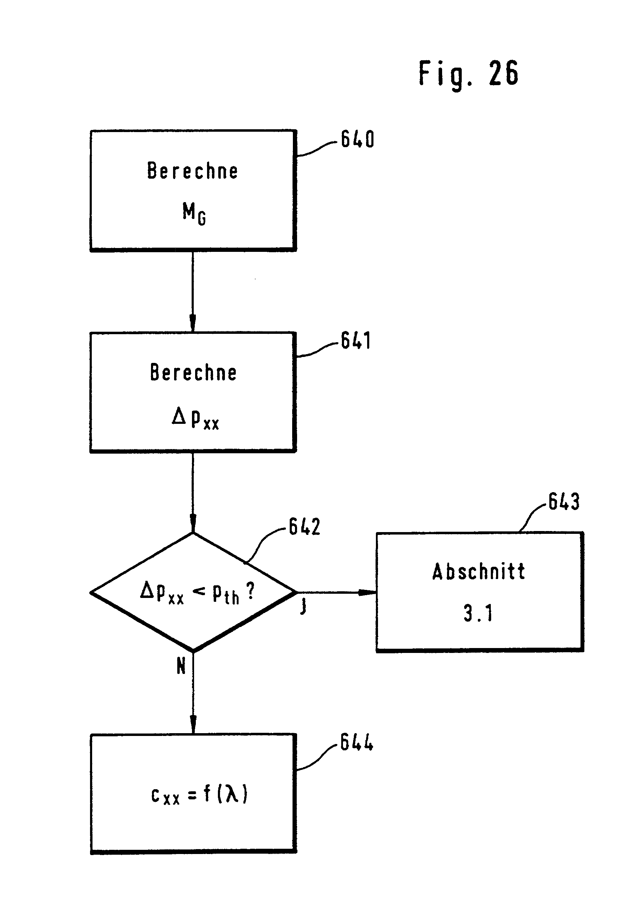

In Figur 26 ist ein entsprechender Algorithmus dargestellt. Zunächst wird das zusätzliche Giermoment $M_G$ errechnet (Programm 640). Aus diesem Moment werden die zugehörigen Bremskraftänderungen bzw. Bremsdruckänderungen für die einzelnen Räder ermittelt (Programm Teil 641). Die ermittelten Bremsdrücke werden mit Schwellen $p_{th}$ verglichen, die unter anderem von der Reibwertpaarung Straße/Reifen bestimmt werden (Raute 642). Die Schwellen $p_{th}$ legen fest, ob eine weitere Steigerung des Radbremsdruckes mit einer gleichzeitigen Erhöhung der Bremskraft möglich ist. Bleiben die einzusteuernden Drücke unterhalb dieser Grenzwerte, so erfolgt die Steuerung nach dem in Abschnitt 3.1 erwähnten Verfahren. Liegen die berechneten Bremsdrücke oberhalb dieser Schwellenwerte, so erfolgt die Berechnung der Drücke gemäß dem oben vorgestellten Schema 644.

4. Prioritätsschaltung

Aus dem Zusatzgiermoment $M_G$ werden mittels einer Verteilungslogik die in den Radbremsen einzustellenden Drücke errechnet (Abschnitt 3).

Aus diesen Druckwerten werden in einem unterlagerten Druckregelkreis Steuersignale für Ein- und Auslaßventile errechnet und ausgegeben. In diesem unterlagerten Druckregelkreis werden die tatsächlichen Radbremsdrücke mit den errechneten in Einklang gebracht.

Wenn auch Steuersignale anderer Regler (ABS7, ASR8, EBV9) einbezogen werden sollen (Abschnitt 1.) ist es notwendig, daß auch deren Steuersignale zunächst mit Hilfe eines im Rechner abgelegten hydraulischen Modells der Radbremsen in Druckwerte umgerechnet werden.

Die Druckanforderungen des GMR-Reglers 10 werden dann mit den Druckanforderungen des ABS-Reglers und weiterer Regler in Bezug gesetzt. Dies geschieht in einer Prioritätsschaltung, die entscheidet, welchen Anforderungen der Vorzug zu geben ist, bzw. in wie weit gemittelte Drücke an die Drucksteuerung 5 für die Radbremsen ausgegeben werden. Die Drucksteuerung 5 wiederum rechnet die Drücke in Ventilschaltzeiten um.

Der Prioritätsschaltung können anstelle von Solldrücken auch Solldruckänderungen zugeführt werden (s. Abschnitt 7).

In diesem Fall führt die Prioritätsschaltung 3 die Ausgabe der Druckänderungen $\Delta p$ an ihrem Ausgang nach der Regel durch, daß die Forderung nach einer Druckabsenkung an einem der Räder bevorzugt erfüllt wird und die Forderung, den Druck in einer Radbremse zu halten, Priorität gegenüber der Forderung nach Druckerhöhung hat. Damit werden die einzelnen Forderungen an die Prioritätsschaltung nach der Regel abgearbeitet, daß bei Vorliegen einer Forderung nach Druckabbau Forderungen nach Aufrechterhaltung des Druckes oder nach Druckaufbau ignoriert werden. Auf gleiche Weise wird kein Druckaufbau vorgenommen, wenn Druckhalten gefordert ist.

5. Prioritätsschaltung mit direktem Vergleich von Ventilschaltzeiten

Alternativ hierzu kann auch eine andere Methode angewandt werden.

Die Verteilungslogik errechnet aus dem Zusatzgiermoment $M_G$ nicht Drücke, sondern unmittelbar Ventilschaltzeiten, wie die anderen Regler auch. Die Ventilschaltzeiten des GMR können somit verglichen werden mit den angeforderten Ventilschaltzeiten beispielsweise des ABS. In der prioritätsschaltung werden dann nicht - wie bisher - unterschiedliche Druckanforderungen bewertet, sondern unterschiedliche Ventilschaltzeiten.

Um Ventilschaltzeiten zu erhalten, errechnet die Verteilungslogik zunächst einzustellende Druckänderungen für jede Radbremse.

Mittels eines nachgeschalteten nichtlinearen Regelelements werden aus den Druckänderungen Schaltzeiten für die Ansteuerung für die einzelnen Radbremsen berechnet.

Dieses nichtlineare Regelelement kann z. B. ein Zähler sein.

Dieser Zähler setzt die vorgegebenen Druckänderungen in Taktzahlen um. Dazu wird die Loopzeit $T_0$ in etwa 3 bis 10 Schaltintervalle (Takte) unterteilt. Die maximale Zahl der Takte pro Loopzeit ist eine feste Größe, die sich nach der zu erzielenden Regelgüte bestimmt.

Durch die errechnete Taktzahl wird festgelegt, wie lange ein Ventil innerhalb einer Loopzeit angesteuert sein soll.

Da im allgemeinen zwei Ventile pro Radbremse vorhanden sind, wobei das eine Ventil (Einlaßventil), die Druckmittelzufuhr zur Radbremse und das andere Ventil (Auslaßventil), den Druckmittelablaß aus der Radbremse regelt, sind insgesamt acht Signale zu generieren.

Diese Taktzahlen werden der Prioritätsschaltung zugeführt, die in weiteren Kanälen die Taktzahlen weiterer Regler aufnimmt.

Die Prioritätsschaltung entscheidet, welchem Regler Vorrang zu geben ist, welche Taktzahl also zur tatsächlichen Ventilsteuerung übernommen wird.

Die Reaktion des Fahrzeuges auf die durch die Betätigung der Radbremsen erzeugten Bremskräfte ist eine geänderte Gier-winkelgeschwindigkeit. Diese wird vom GMR-Regler 10 erfaßt, der nun wiederum ein neues Zusatzgiermoment ermittelt.

Es werden also an keiner Stelle des Regelkreises Bremsdrücke berechnet oder eingestellt. Die Regelalgorithmen benötigen daher keine Information über die Radbremse, insbesondere keine Information über den Zusammenhang von Volumenaufnahme der Radbremsen und den sich daraus ergebenden Bremsdrücken.

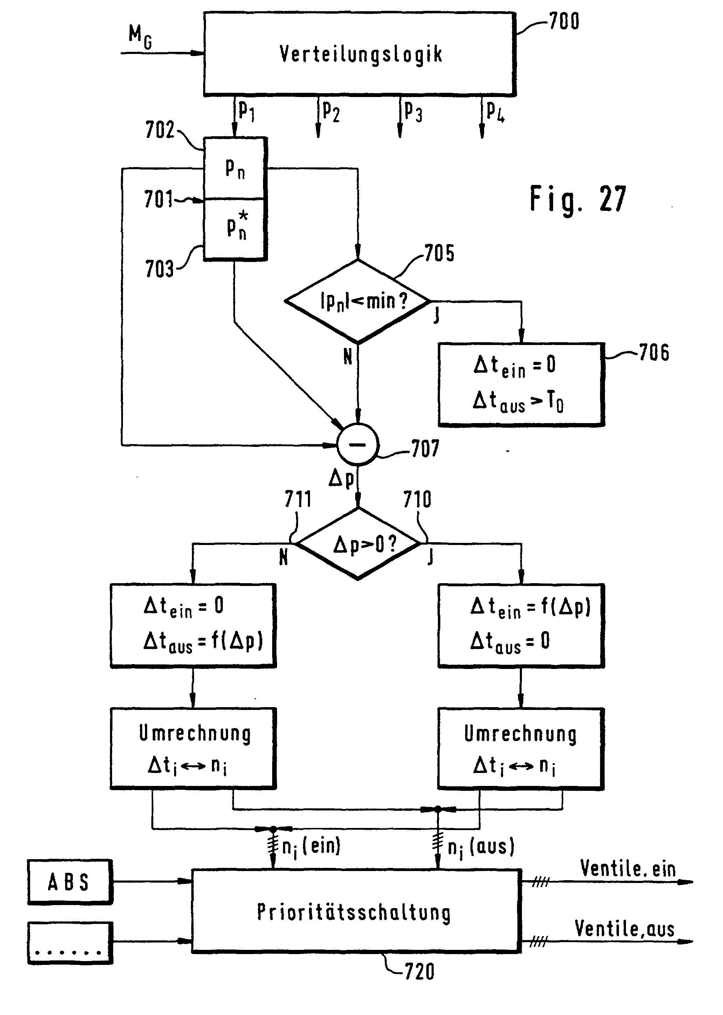

Eine Möglichkeit zur Errechnung der Taktzeiten wird anhand von Fig. 27 erläutert.

Aus dem Zusatzgiermoment $M_G$ werden über die Verteilungslogik 700 Bremsdrücke errechnet, die in den einzelnen Radbremsen aufgebaut werden sollen. Wie dies geschieht, kann den Abschnitten 3.1 und 3.2 entnommen werden. Als Ergebnis der Berechnung innerhalb der Verteilungslogik liegen für ein Vierrad-Fahrzeug vier Druckwerte $p_1$ bis $p_4$ vor. Diese Größen müssen in Schaltzeiten für die Ventile umgesetzt werden, die die Druckmittelzufuhr (Druk-

kerhöhung) beziehungsweise den Druckmittelablaß (Druckabbau) in bzw. aus den Radbremsen steuern. Die Schaltzeiten für die Ventile werden - wie schon erwähnt - nicht aus den Absolutwerten für die Druckvorgaben berechnet, sondern aus der Änderung in der Druckvorgabe. Daher wird jeder Wert $p_n$ (n = 1 bis 4) einem Schieberegister 701 zugeführt. Auf dem ersten Registerplatz 702 wird der aktuelle Wert eingeschrieben. In den zweiten Registerplatz 703 wird der vorherige Wert aus dem ersten Registerplatz 702 aufgenommen, so daß dort die Druckanforderung aus der vorangegangenen Berechnungsschleife eingeschrieben ist. Dieser Wert wird mit $p_n^*$ bezeichnet.

In einem nächsten Schritt 705 wird aus dem ersten Registerplatz 702 die aktuelle Druckanforderung $p_n$ aus-gelesen. Ist dieser Wert 0 oder kleiner als ein Minimalwert, so zweigt das Programm in eine Schleife 706 ein, mit der sichergestellt werden soll, daß der Radbremse so viel Druckmittel entnommen wird, daß der sich einstellende Druck zu Null wird. Dazu wird das Einlaßventil geschlossen und das Auslaßventil über mindestens eine Loopzeit $T_0$ geöffnet.

Liegt der aktuelle angeforderte Druckwert über diesem Minimalwert, so wird die Differenz aus den beiden Registerwerten 702 und 703 gebildet. Dies geschieht im Differenzbildner 707. Die berechnete Druckänderung $\Delta p$ kann entweder größer oder kleiner 0 sein. Ist sie größer 0, muß in der jeweiligen Radbremse der Druck erhöht werden. Ist sie kleiner 0, muß der Druck in der jeweiligen Radbremse erniedrigt werden. Für den Fall der Druckerhöhung durchläuft das Programm den rechten Entscheidungspfad 710. Unter Berücksichtigung der einzu-stellenden Druckdifferenz sowie der Druckanforderung oder falls entsprechende Signale vorliegen, aufgrund des tatsächlichen Drucks in der Radbremse, wird für das Einlaßventil eine Öffnungszeit $\Delta t_{ein}$ berechnet. Die Öffnungszeit $\Delta t_{aus}$ des Auslaßventils wird zu Null gesetzt. Umgekehrt (Entscheidungspfad 711) wird für den Fall der angeforderten Druck-erniedrigung die Öffnungszeit $\Delta t_{ein}$ des Einlaßventils zu Nullgesetzt, während die Öffnungszeit $\Delta t_{aus}$ aus des Auslaßventils aus der angeforderten Druckdifferenz und dem aktuellen Druck in der Radbremse bzw. dem angeforderten Druck, der im ersten Registerplatz 702 eingeschrieben ist, berechnet.

In der Regel liegt ein linearer Zusammenhang zwischen der Öffnungszeit $\Delta t$ und der beabsichtigten Druck-änderung $\Delta p$ vor.

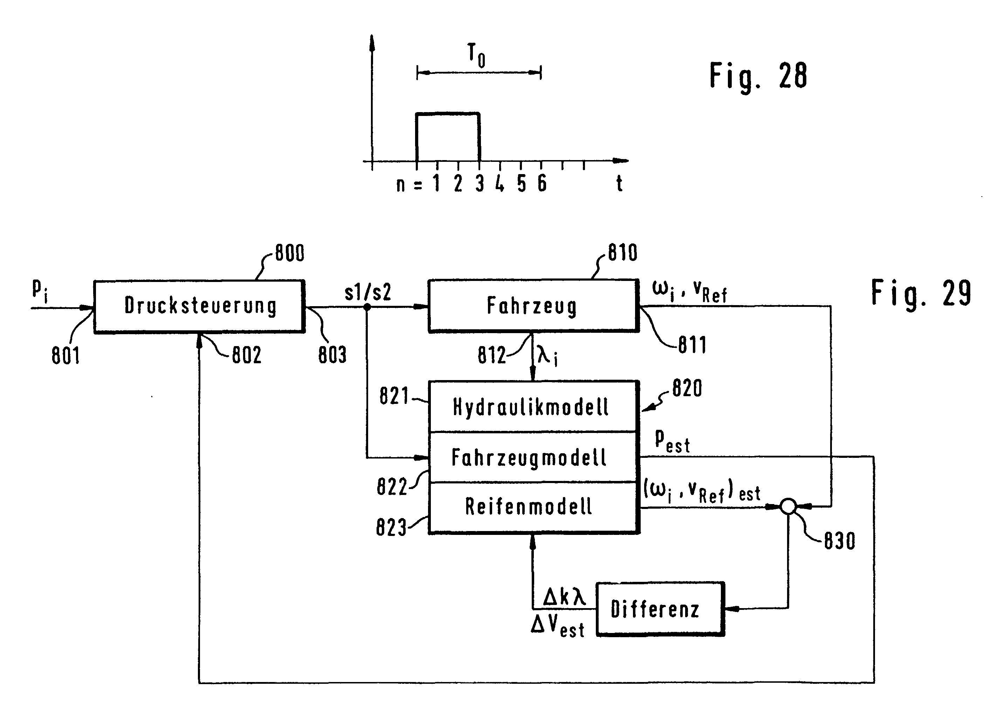

Wie erläutert wird nicht mit den Öffnungszeiten selbst gerechnet, sondern mit Taktzahlen. Dies ist im Diagramm der Fig. 28 näher erläutert. Die oben beschriebenen Berechnungen werden in gleichbleibenden Zeitabständen (Loopzeit $T_0$) durchgeführt, wobei als Ergebnis einer Berechnung die Steuersignale für die Ventile der Radbremsen im nächsten Loop festgelegt werden. Eine Loopzeit $T_0$ beträgt ca. 3 ms.

Je nach dem wie fein die Regelung laufen soll, wird jede Loop-Zeit $T_0$ in N Zeitabsschnitte unterteilt.

In dem Diagramm der Fig. 28 ist eine Unterteilung in sechs Schritte vorgesehen. Die Schaltzeiten für die Ventile werden dann nicht mehr als Zeitgrößen ausgegeben, sondern als Anzahl der Takte innerhalb eines Loops, in der das Ventil geöffnet sein soll. Für n = 3 ergibt sich z. B., wie der Fig. 28 zu entnehmen ist, eine Öffnungszeit von 1,5 ms.

Sollte die angeforderte Öffnungszeit größer sein als die Loop-Zeit, wird n auf den jeweils maximalen Wert N gesetzt (im dargestellten Beispiel auf sechs).

Diese Berechnung wird für jede Radbremse durchgeführt, für ein Vierradfahrzeug also vier mal. Die Berechnungen können parallel oder nacheinander erfolgen. Als Ergebnis liegen acht Werte vor, vier Werte für Einlaßventile, vier Werte für Auslaßventile. Diese Werte werden einer modifizierten Prioritätsschaltung 720 zugeführt. In diese Prioritätsschaltung 720 fließen die Schaltzeitenanforderung, ebenfalls ausgedrückt in Taktzeiten, eines ABS-Reglers sowie weiterer Regler ein.

Diese Ansteuerung wird ausgeführt, so daß sich eine Druckänderung in den Radbremsen ergibt. Damit ändern sich die Bremskräfte und die damit auf das Fahrzeug ausgeübten Momente. So ergibt sich eine Änderung in den Größen, die die Fahrdynamik des Fahrzeuges beschreiben. Diese werden durch Sensoren direkt oder indirekt erfaßt und wiederum der Berechnung zugeführt.

Hieraus folgt erneut eine veränderte Momentenanforderung, die, wie oben beschrieben, in neue Steuersignale für die Ventile umgesetzt wird.

Die Berechnung der einzustellenden Druckdifferenzen basiert auf den Druckanforderungen aus dem vorhergehenden Berechnungsloop. Diese müssen aber nicht tatsächlich eingestellt worden sein, so daß sich die tatsächlichen Drücke in den Radbremsen von den jeweils errechneten Druckanforderungen unterscheiden. Es ist daher notwendig, in bestimmten Situationen den tatsächlichen Druck in der Radbremse mit den Drukkanforderungen abzugleichen. Dies kann am einfachsten dann geschehen, wenn die Druckanforderung Null ist, die Verteilungslogik 700 also einen Wert fordert, der dem Druck Null in einer Radbremse entspricht. In einem solchen Fall wird nicht die Differenz zum vorhergehenden Wert gebildet und daraus die Steuersignale abgeleitet, sondern im Schritt 705 in die Schleife 70-6 zur Berechnung der Schaltzeiten abgezweigt, die sicherstellen soll, daß tatsächlich ein Druckwert Null eingestellt wird. Dies geschieht dadurch, daß die Schaltzeit $\Delta t_{aus}$ für das Auslaßventil mindestens auf die Loop-Zeit $T_0$ gesetzt wird.

Es kann auch notwendig werden, eine entsprechende Information an die Prioritätsschaltung 720 zu geben, so daß diese Zeitanforderung, die zu einem Druck Null in einer Radbremse führen soll, nicht durch Vorgaben der anderen Regler überlagert wird. Außerdem kann in dieser Information festgelegt werden, daß der Druckabbau über mehrere Loop-Zeiten erfolgen soll, so daß sichergestellt ist, daß tatsächlich ein vollständiger Druckabbau erfolgt.

6. Radbremsdruckerkennung

Der bis Abschnitt 4 beschriebene FSR-Druckregler liefert als Ergebnis Bremsdruckwerte für die Radbremsen. Diese Wertvorgaben müssen realisiert werden. Eine Methode besteht darin, die Drücke in den Radbremsen zu messen und mit den Wertvorgaben zu vergleichen. Ein Druckregler, der nach den üblichen Gesetzen arbeitet, regelt den Radbremsdruck auf den vorgegebenen Sollwert ein. Dieses Verfahren benötigt je einen Drucksensor pro Radbremse, also für ein vierrädriges Fahrzeug vier Drucksensoren.

Im allgemeinen wird man allein schon aus Kostengründen versuchen, mit möglichst wenig Sensoren auszukommen. Außerdem stellt jeder Sensor eine weitere potentielle Störungsquelle dar. Der Ausfall eines Sensors kann dazu führen, daß das gesamte Regelsystem abgeschaltet werden muß.

Es wird daher vorgeschlagen, ein Auswertesystem vorzusehen, das aufgrund von Daten, die von den schon vorhandenen Sensoren vorliegen, eine Druckgröße ableitet, die dem Druck in den Radbremsen entspricht. Dazu wird das folgende Konzept vorgeschlagen.

Der Druck in jeder Radbremse wird, wie schon erläutert, durch zwei Ventile geregelt. Das Einlaßventil steuert die Druckmittelzufuhr, während das Auslaßventil den Druckmittelablaß steuert.

Die Signale, die von einem Druckregler abgegeben werden, sind daher Steuerzeiten, die anzeigen, wie lange ein Ventil geöffnet bzw. geschlossen sein soll. Eine Loopzeit ist unterteilt in eine feste Zahl von Zeitabschnitten (Takte). Die Steuerzeiten können dann als Taktahl dargestellt werden, die angibt, wieviele Zeitabschnitte ein Ventil geöffnet bzw. geschlossen sein soll.

Die Grundüberlegung besteht nun darin, diese Steuersignale nicht nur an die Radbremsen zu geben, sondern auch als Rechengrößen an ein Fahrzeugmodell. Das reale Fahrzeug reagiert auf die eingesteuerten Bremsdrücke, wobei sich eine bestimmte Schwerpunktsgeschwindigkeit $v$ sowie Raddrehzahlen $\omega_i$ der einzelnen Räder einstellen. Die Geschwindigkeit des Fahrzeugs wird nicht direkt gemessen, sondern ebenfalls aus den Raddrehzahlen $\omega_i$ der einzelnen Räder in besonderen Rechenschritten abgeleitet. Sie wird daher als Referenzgeschwindigkeit $v_{Ref}$ bezeichnet.

Entsprechende Werte lassen sich auch innerhalb eines Fahrzeugmodells nachbilden.

Aus einem Vergleich der tatsächlichen Werte für $\omega_i$, $v_{Ref}$ mit den errechneten bzw. aufgrund des Fahrzeugmodells abgeschätzten Werte für $\omega_i$ und $v_{Ref}$ läßt sich eine Korrekturgröße für den Druck in den einzelnen Radbremsen ermitteln, wobei mit Hilfe der Korrekturgröße ein über ein Hydraulikmodell errechneter Druck modifiziert werden kann, so daß eine bessere Abschätzung der Radbremsdrücke gegeben werden kann.

Die eben beschriebene prinzipielle Struktur ist in der Figur 29 näher erläutert.

Mit 800 ist eine Drucksteuerung bezeichnet die in Fig. 1 die Nummer 5 trägt. Die Drucksteuerung berechnet aus einem ersten Wert 801, der den einzustellenden Druck charakterisiert und aus einem zweiten Wert 802, der einen in der Radbremse vorhandenen, geschätzten oder gemessenen Druck markiert, Steuerzeiten für die Ventile der Radbremsen. Die Steuerzeiten sind hier als Ausgangsgröße 803 dargestellt. Mit 810 ist das Fahrzeug bezeichnet. Damit soll dargestellt werden, daß das Fahrzeug auf die Kräfte reagiert, die durch die in den Radbremsen eingestellten Drücke hervorgerufen werden. Dabei ändern sich auch die Raddrehzahlen $\omega_i$ der einzelnen Räder.

Zum Fahrzeug 810 sollen auch Radsensoren gehören, die die Raddrehzahlen der Räder erfassen, so daß die Werte $\omega_i$ unmittelbar zur Verfügung stehen.

Zum Fahrzeug 810 gehört auch eine Auswerteeinheit für $\omega_i$, die in der Regel einen Teilbereich, eines ABS-Reglers darstellt, welcher unter bestimmten Randbedingungen aus den Raddrehzahlen $\omega_i$ der einzelnen Räder eine sogenannte Referenzgeschwindigkeit $v_{ref}$, berechnet, die der tatsächlichen Geschwindigkeit des Fahrzeuges entsprechen soll.

Aus den einzelnen Raddrehzahlen sowie der Fahrzeugreferenzgeschwindigkeit läßt sich für jedes Rad ein Schlupf $\lambda i$ errechnen.

Die Werte $\omega_i$, $v_{Ref}$ stehen als Ausgangswerte 811 zur Verfügung. Der Schlupf $\lambda_i$ steht als Wert 812 zur Verfügung.

Das verwendete Rechenmodell wird als Ganzes mit 820 bezeichnet. Es enthält drei Untermodelle, nämlich

| | |
|---|---|
| ein Hydraulikmodell | 821 |
| ein Fahrzeugmodell | 822 |
| ein Reifenmodell | 823 |

Das Hydraulikmodell 821 beschreibt in zwei Näherungsformeln den Zusammenhang zwischen Bremsdruck $p$ und den in der Radbremse eingeschlossenen Volumen $V$ sowie die Änderung $\Delta V$ des Volumens, wenn das Einlaß- bzw. Auslaßventil für eine gewisse Zeit geöffnet sind.

F 6.1

$$p = a*V + b*V^2$$

F 6.2

$$\Delta V = \pm \; C * t_{ein/aus} * \sqrt{\Delta p}$$

Die Parameter a, b und c sind Größen, die das Bremssystem beschreiben und als Werte in entsprechenden Speicher abgelegt sind. p beschreibt den aktuellen Druck in der Radbremse. V beschreibt das aktuelle Volumen, das in der Radbremse eingeschlossen ist.

$\Delta$p wird entweder über das Einlaßventil oder über das Auslaßventil gemessen, wobei bei der Messung über das Einlaßventil die Differenz zwischen einer Druckquelle und p erfaßt wird, während bei der Messung über das Auslaßventil die Differenz zwischen p und dem Druck in einem Reservoir ermittelt wird, der im allgemeinen bei 1 bar liegt und damit vernachlässigt werden kann.

Geht man davon aus, daß zu Beginn einer Regelung der Druck in den Radbremsen sowie das eingeschlossene Volumen zu 0 gesetzt werden, so läßt sich über die Verfolgung der Ventilöffnungszeiten die Volumenänderung und damit die Druckänderung in den einzelnen Radbremsen nachvollziehen.

Allerdings ist klar, daß die angegebenen Formeln die tatsächlichen Verhältnisse nur sehr grob wiedergeben können, so daß eine entsprechende Korrektur notwendig ist. Das Fahrzeug wird im Modell 822 im allgemeinen durch einen starren Körper beschrieben, der in vier Aufstandspunkten (Radaufstands-flächen) auf einer Ebene steht.

Der Körper kann sich parallel zur Ebene also in x- und y- Richtung bewegen sowie sich um seinen Schwerpunkt drehen, wobei die Drehachse senkrecht zur Bewegungsebene steht.

Kräfte, die auf den Körper wirken, sind die Bremskräfte in den Radaufstandsflächen sowie Luftwiderstandskräfte.

Die Radlasten $F_{z,v}$ und $F_{z,h}$ berechnen sich aufgrund dieser Überlegungen zu:

F 6.3a

$$F_{z,v} = \frac{m*g*l_h + h*(-F_{x,v} - F_{x,h})}{l_v + l_h} = \frac{m*g*l_h - h*m*\dot{v}_{ref}}{l_v + l_h}$$

F 6.3b

$$F_{z,h} = \frac{m*g*l_v + h*(-F_{x,v} - F_{x,h})}{l_v + l_h} = \frac{m*g*l_v - h*m*\dot{v}_{ref}}{l_v + l_h}$$

Ein solches Modell reicht in der Regel aus, um die gewünschte Druckkorrektur durchführen zu können. Falls notwendig, kann das Modell natürlich verfeinert werden. Für die weitere Berechnung liefert das Modell im wesentlichen die Belastungen $F_x$ der Aufstandsflächen in Abhängigkeit von der Schwerpunktsverzögerung. Das Rad wird als drehbare Scheibe betrachtet, das ein gewisses Trägheitsmoment aufweist.

F 6.4

$$\dot{\omega} = \frac{R_{rad}*F_x - M_{Br}}{\Theta}$$

Die Verzögerungsmomente, die auf das Rad wirken, werden linear aus dem Radbremsdruck ermittelt.

F 6.5

$$M_{Br} = C_{Br} * p$$

Im Reifenmodell wird unterstellt, daß die Kraftschlußausnutzung f, nämlich das Verhältnis von Bremskraft zu Radlast, sich linear mit dem Schlupf des Rades ändert.

F 6.6

$$F_x \sim \lambda * F_z$$

Die angegebenen Gleichungen ermöglichen es, die Raddrehzahl eines jeden Rades sowie die Referenzgeschwindigkeit des Fahrzeugmodells zu berechnen.

Diese Werte können mit den tatsächlichen Werten 811 verglichen werden. Dies geschieht im Vergleichspunkt 830. Aus der Differenz zwischen der gemessenen und der abgeschätzten Raddrehzahl eines jeden Rades kann unter Berücksichtigung eines Korrekturfaktors k ein zusätzliches Volumen ermittelt werden.

Dieses zusätzliche Druckmittelvolumen $\Delta V$ wird zum errechneten Sollvolumen hinzuaddiert und ergibt das neue Sollvolumen, aus dem heraus nach Formel F 6.1 ein Radbremsdruck abgeleitet werden kann, der relativ genau den tatsächlichen Radbremsdruck entspricht.

Die Genauigkeit der Abschätzung hängt natürlich ab vom Korrekturfaktor k, der ggf. durch Versuche vorab ermittelt werden muß.

Dieser Faktor wird von Fahrzeug zu Fahrzeug verschieden sein und unter anderem auch davon abhängen wie, gut das Fahrzeugmodell die tatsächlichen Verhältnisse wiedergibt.

In dem zusätzlichen Volumen kann auch ein Toleranzvolumen enthalten sein, mit dem berücksichtigt werden soll, daß der Volumendurchsatz durch die Ventile nicht proportional zu den Schaltzeiten ist. Beim Öffnen und Schließen eines Ventils erweitert bzw. verengt sich der Öffnungsquerschnitt des Ventils nur langsam, so daß in den Zeitabschnitten, in denen der volle Öffnungsquerschnitt noch auf- bzw. abgebaut wird, nur ein reduziertes Volumen fließt.

7. Substitution eines Gierwinkelgeschwindigkeitsmessers

Für die oben beschriebene Regelung bildet die Gierwinkelgeschwindigkeit eine besonders markante Größe, da sie als Regelgröße dient, deren Abweichung $\Delta\dot{\Psi}$ minimiert werden soll. Es können aber mit Vorteil auch andere Regelgrößen Verwendung finden, wie nachfolgend beschrieben wird. Zur Vereinfachung werden in diesem Abschnitt folgende Bezeichnungen verwendet:

$\dot{\Psi}_{Mess} =$      $g_l$ als gemessener Istwert der Gierwinkelgeschwindigkeit

$\ddot{\Psi}_{Mess} =$      $\dot{g}_l$ als gemessener Istwert der Gierwinkelbeschleunigung

$\frac{d}{dt}\ddot{\Psi}_{Mess} =$      $\ddot{g}_I$ als gemessener Istwert der Gierwinkelbeschleunigungsgungsänderung (Gierwinkelruck)

Entsprechendes gilt für die Sollwerte gemäß Fig. 9, die jeweils mit dem Index "s" versehen werden.

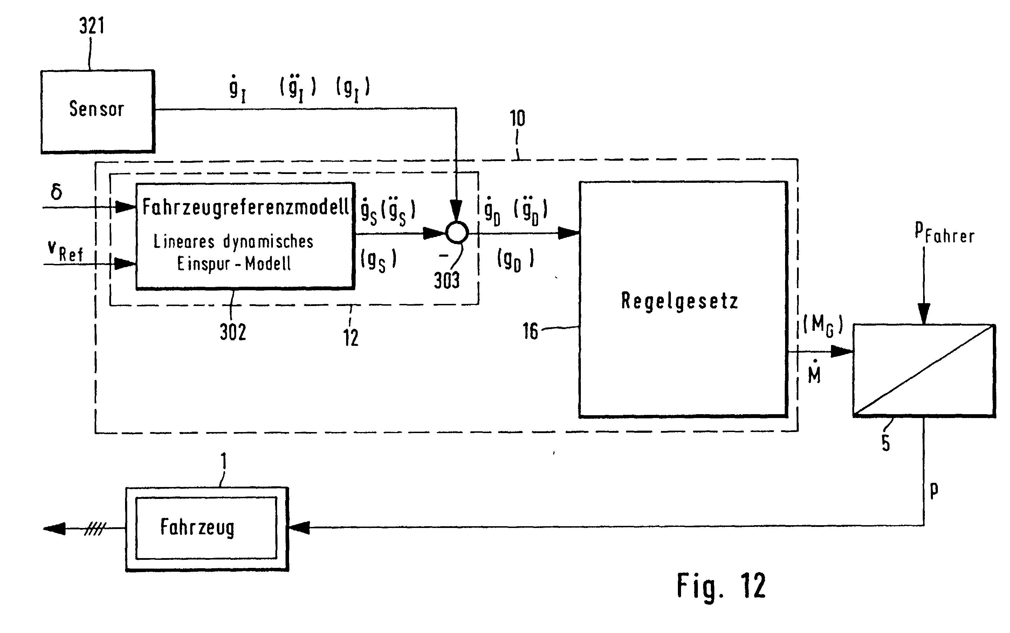

Die gemessene Gierwinkelgschwindigkeit in Fig. 12 wird üblicherweise mittels eines Gierwinkelgeschwindigkeitssensors 321 bestimmt, der das Ausgangssignal $g_l$ abgibt. Derartige bekannte Gierwinkelgeschwindigkeitssensoren mit direkter Abgabe der Gierwinkelgeschwindigkeit sind aber recht komplex aufgebaut und damit sehr teuer. Entsprechendes gilt für den nachgeschalteten Vergleicher sowie den zur Regelschaltung gehörenden Regler. Es wird daher angestrebt, hier für Abhilfe zu sorgen und eine einfachere Sensorik sowie einen einfacher aufgebauten Regler vorzustellen.

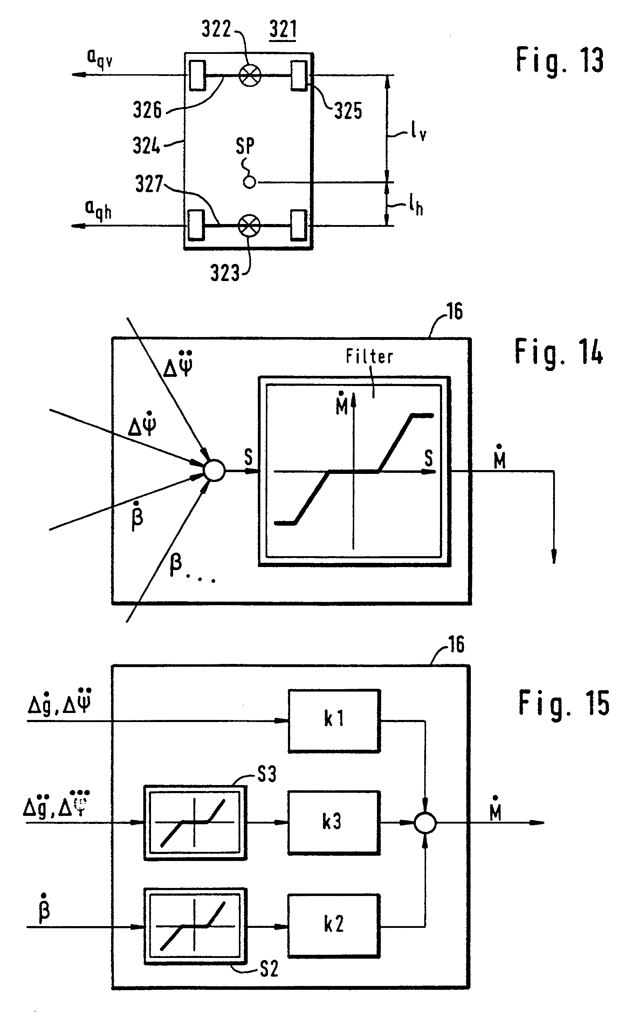

Fig. 13 zeigt als Skizze die Wirkungsweise eines neuartigen Sensors 321, der einen ersten Querbeschleunigungsmesser 322 und einen zweiten Querbeschleunigungsmesser 323 besitzt. Die beiden Beschleunigungsmesser 322,323 sind jeweils auf der Fahrzeuglängsachse über der Vorder- bzw. Hinterachse angeordnet. Prinzipiell können die Querbeschleunigungsmesser an beliebigen Stellen außerhalb des Schwerpunktes SP angeordnet sein, wobei dann eine entsprechende Umrechnung erfolgt. In Fig. 15 ist der viereckige Umriß 324 eines Fahrzeugs mit seinen Reifen 325 und Sensoren angedeutet. Aufgrund dieser Anordnung mißt der vordere Querbeschleunigungsmesser 322 die Querbeschleunigung $a_{qv}$ in Höhe der Vorderachse 326 und der hintere Querbeschleunigungsmesser 323 die Querbeschleunigung $a_{qh}$ in Höhe der Hinterachse 327.

Die beiden Querbeschleunigungsmesser sind in der Lage, eine von der Gierwinkelgeschwindigkeit abhängige Größe anzugeben. Aus mathematischen Herleitungen läßt sich zeigen, daß sich aus den Meßergebnissen der Querbeschleunigungsmesser Gierwinkelbeschleunigung und die Querbeschleunigung $a_{quer}$ des Schwerpunktes SP folgendermaßen ermitteln lassen:

F 7.1

$$\ddot{\Psi} = \frac{a_{qh} - a_{qv}}{l_h + l_v}$$

F 7.2

$$a_{quer} \approx -\dot{v}_{ref} * \beta - \frac{a_{qh} * l_v + a_{qv} * l_h}{l_h + l_v}$$

Dabei sind, wie aus Fig. 13 ersichtlich, $l_v, l_h$ die Abstände der Querbeschleunigungsmesser 322,323 von dem Schwerpunkt SP, während v die Geschwindigkeit des Fahrzeugs ist und β der Schwimmwinkel ist. Es läßt sich somit aus den Querbeschleunigungen und den Abständen der Beschleunigungsmesser 322,323 die Gierwinkelbeschleunigung $\dot{g}_l$ bestimmen. Daher wird vorgeschlagen, die Gierwinkelbeschleunigung $\dot{g}_l$ einzusetzen, anstelle der in den vorherigen Abschnitten vorgeschlagenen Gierwinkelgeschwindigkeit. Oder es ist auch möglich, eine lineare Gewichtung der einzelnen Eingangswerte für den Vergleicher ähnlich der bekannten Zustandsregelung vorzunehmen. Dabei können die Gierwinkelgeschwindigkeit g und der Schwimmwinkel β aus dem Gierwinkeldruck $\dot{g}$ und der Schwimmwinkelgeschwindigkeit $\dot{\beta}$ mittels einer bandbegrenzten Integration oder eines skalierten Tiefpasses erster Ordnung berechnet werden, um aus dem Sensor 321 Größen zu erhalten, die in ihrer Dimension den Ausgangsgrößen des Fahrzeugreferenzmodells 302 entsprechen (Abschnitt 2.3.1).
Dabei gilt für die bandbegrenzte Integration

F 7.3

$$G(z^{-1}) = \frac{\lambda^2 * \frac{T_0}{2} * (1 - z^{-1}) * (1 + z^{-1})}{1 - \lambda * z^{-1}}$$

während man bei der Anwendung eines Tiefpasses zu der folgenden Abhängigkeit kommt

F 7. 4

$$G(z^{-1}) = \frac{T_1 * (1 - \lambda)}{1 - \lambda * z^{-1}}$$

Die Schwimmwinkelgeschwindigkeit erhält man nach der Auswertung der Beziehung

F 7.5

$$a_q = v * (\dot{\Psi} + \dot{\beta})$$

Es zeigt sich somit, daß durch die Verwendung von zwei Querbeschleunigungsmessern zwar ein bekannter Gierwinkelgeschwindigkeitsmesser ersetzt werden kann. Es müssen dabei aber die eben beschriebenen Maßnahmen getroffen werden, um die Gierwinkelbeschleunigung in die Gierwinkelgeschwindigkeit zu transformieren. Nach Bildung von $\Delta g$ und $\Delta \dot{g}$ kann sich unverändert das Regelgesetz 16 von Fig. 1 anschließen. In Fig. 14 wird das so errechnete Moment $M_G$ zusätzlich im Regelgesetz 16 durch zeitliche Ableitung in eine Momentenänderung M umgerechnet.
Es ist aber u.U. zweckmäßiger, zu einer nichtlinearen Regelung gemäß Fig. 17 überzugehen, bei der die Gierwinkelbeschleunigung $\dot{g}$ sowohl als Ist-Wert als auch Sollwert als Ergebnis aus dem Fahrzeugreferenzmodell 302 dem Vergleicher 303 zugeführt wird. Dazu müssen innerhalb des Fahrzeugreferenzmodells entsprechende Ableitungen gebildet werden.

Als Konsequenz ergibt sich, daß statt der Gierwinkelgeschwindigkeitsdifferenz Δg am Ausgang des Vergleichers 303 die Abweichung der Gierwinkelbeschleunigung $\Delta\dot{g}$ ansteht und als Eingangsgröße dem Regelgesetz 16 zugeht. Weiterhin kann dem Giermomentenregelgesetz 16, wie aus Fig. 15 ersichtlich, zur genaueren Bestimmung der Momentenänderung zusätzlich die Schwimmwinkelgeschwindigkeit β zugeführt werden.

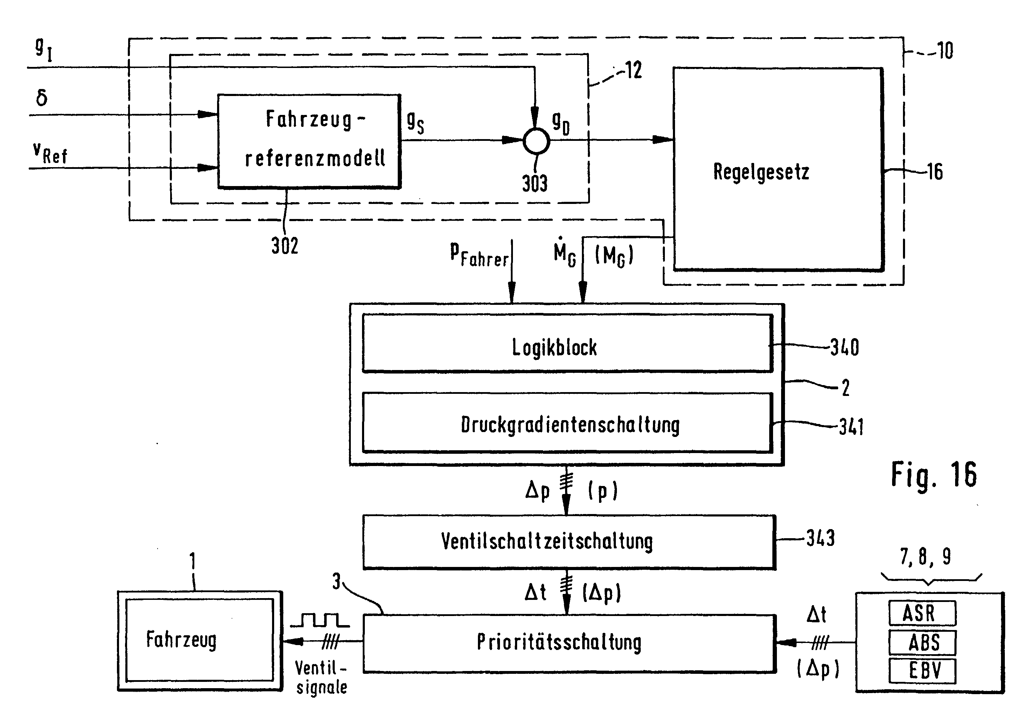

Wie schon zu Fig. 14 erwähnt, kann man von einem Zusatzgiermoment $M_G$ als Ausgangssignal des Regelgesetzes 16 abgehen und statt dessen die Momentenänderung $\dot{M}$ als Ausgangssignal verwenden. In einer modifizierten Verteilungslogik wird die Momentenänderung $\dot{M}$, also die Ableitung des Zusatzgiermomentes $M_G$, in einzelne Druckänderungen umgesetzt. Das bedeutet, daß die Druckänderungen auf die einzelnen Radbremsen so verteilt werden, daß sich insgesamt das erwünschtd Zusatzgiermoment $M_G$ ergibt. Einzelheiten hierzu sind weiter unten in Verbindung mit Fig. 16 angegeben.

Es ist zu berücksichtigen, daß möglicherweise gleichzeitig durch eine Bremsbetätigung des Fahrers eine bestimmte Druckverteilung in den Radbremsen vorhanden ist. In diesem Fall ist es günstiger, durch Integration der Momentenänderung $\dot{M}$ das Moment $M_G$ zu bestimmen, aus dem sich dann direkt die Druckdifferenzen bestimmen lassen, welche hinsichtlich des schon in jeder einzelnen Radbremse herrschenden Drucks aufgebracht werden müssen. Die vorteilhafte, oben erläuterte Weiterbildung durch Verwendung der Ableitungen der in den Abschnitten 1 bis 3 verwendeten Regelgrößen kann auch mit der Verteilungslogik nach Abschnitt 3 kombiniert werden. Hiermit stehen zwei Regelprinzipen zur Verfügung, von denen das eine ein Zusatzgiermoment $M_G$ und das andere eine Änderung des Zusatzgiermoment $\dot{M}$ als Vorgabe liefert. Dabei kann eine Umschaltung zwischen den Prinzipien vorgesehen sein. Eine Umschaltung auf das jweils andere Regelprinzip muß insbesondere dann erfolgen, wenn die andere Berechnung von Zusatzregelgrößen (Schwimmwinkel etc.) eines Prinzips nicht mit ausreichender Genauigkeit durchgeführt werden kann (s. z.B. Abschnitt 2.2.2) Es ist noch anzumerken, daß dem Regelgesetz 16 nach Fig. 15 zusätzlich zu·$\Delta\dot{g}$ als Korrekturgröße auch noch Δg zugeführt werden kann.

Im Regelgesetz 16 nach Fig. 15 sind neben anpassenden Verstärkern k1,k2,k3 zwei Schwellenwertschalter S2,S3 gezeigt, die das Regelverhalten innerhalb des Regelgesetzes 16 verbessern und den Einfluß der eingeführten Größen optimal in Abhängigkeit von der Geschwindigkeit an das ideale Regelverhalten anpassen sollen. Eine vergleichbare Aufgabe haben die Verstärker k1 bis k3. Die einzelnen Werte werden dann in ei nem Addierer addiert und als Ausgangssignal des GMR-Reglers 10 abgegeben. Allegmeine Erläuterungen zum Regelgesetz, die hier entsprechend gelten, finden sich in Abschnitt 2.4.

Im Zusammenhang mit Fig. 1 wurde gezeigt, wie in einer Prioritätsschaltung 3 die Druckvorgaben am Ausgang der Regler 7,8,9 mit der Druckvorgabe einer Verteilungslogik 2 verknüpft werden. Die Verwendung von Druckvorgaben setzt eine entsprechende vorherige Umformung in den diese Vorgaben abgebenden Einrichtungen voraus. Durch die nachfolgend beschriebenen Maßnahmen läßt sich der Aufwand für den Informationsaustausch zwischen den Programmodulen des Regelkreises vereinfachen.

In Fig. 16 ist der Regelkreis zur Regelung der Fahrstabilität der Figuren 9, 14 nochmals stark vereinfacht gezeigt, wobei die dort eingeführten Bezeichnungen beibehalten werden.

Der GMR-Regler 10 nach Fig. 1 ist hier insoweit modifiziert, als am Ausgang die Änderung $\dot{M}$ des zusätzlichen Giermomentes $M_G$ vorliegt, der zusammen mit der vom Fahrer gewünschten Druckverteilung an den Bremsen (Bremswunsch) in die Verteilungslogik 2 eingegeben wird. Zur Berechnung von $\dot{M}$ sei auf Fig. 12 verwiesen.

Die Verteilungslogik 2 weist einen Logikblock 340 und eine Druckgradientenschaltung 341 auf. Die wesentliche Aufgabe des Logikblocks 340 ist es, dafür zu sorgen, daß trotz Eingriff der Fahrstabilitätsregelung das Fahrzeug insgesamt nicht stärker abgebremst wird, als von dem Fahrer durch Vorgabe seines Drucksignals am Eingang der Verteilungslogik 2 gewünscht wird. Damit soll verhindert werden, daß durch die Fahrstabilitätsregelung zusätzlich noch Instabilitäten herbeigeführt werden. Wenn also aufgrund des Bremswunsches des Fahrers ein Bremsdruck an einem Rad vorgesehen ist und andererseits über den FSR-Regler an ein oder zwei Rädern ein Druckaufbau und an den gegenüberliegenden Rädern ein Druckabbau gefordert wird, um das zusätzliche Giermoment zu erreichen, so können hinsichtlich der einzelnen Räder einander widersprechende Forderungen bestehen, nämlich Druckaufbau bei gleichzeitigem Druckabbau. Hinsichtlich anderer Räder kann sich dann die Forderung ergeben, daß der Druck nicht nur aufgrund des Bremswunsches des Fahrers, sondern gleichzeitig auch aufgrund der Stabilitätsregelung aufgebaut werden soll. Der Logikblock sorgt nun dafür, daß zuerst in den entsprechenden Rädern der Bremsdruck erniedrigt wird, während nachfolgend eine Erhöhung des Bremsdruckes über den Fahrerwunsch hinaus bis zu einem bestimmten Grenzwert erfolgen kann. Damit wird sichergestellt, daß die mittlere Bemskraft über alle Räder gesehen, unter Berücksichtigung des durch die FSR-Regelung herbeigeführten zusätzlichen Drehmoments nicht größer wird als von dem Fahrer gewünscht.

Wie schon in Abschnitt 3.2 erläutert wurde, kann eine gezielte Erhöhung des Längsschlupfes λ an einem Rad dazu eingesetzt werden, die Seitenkräfte zu reduzieren, während die Bremkraft in Längsrichtung erhalten bleibt. Auf diese Weise kann also ein Giermoment aufgebracht werden, ohne daß die Fahrzeugverzögerung abnimmt.

In der Druckgradientenschaltung 341 der Verteilungslogik 2 werden die Druckänderungen $\Delta P_{xx}$ an den ein-

zelnen Rädern xx aufgrund vorgegebener Konstanten $d_{xx}$ und der Momentenänderung $\dot{M}$ berechnet, wobei in die Berechnung auch noch die Differenz zwischen dem von dem Fahrer gewünschten Bremsdruck $P_{Fahrer}$ zu dem tatsächlich gemessenen Bremsdruck $P_{xxist}$ eingeht. Es gilt somit die Beziehung

F 7.6

$$\Delta p_{xx} = \pm \frac{d_{xx} * \dot{M}}{\Sigma d_{xx}^2} + g_1{}^*(p_{Fahrer} - p_{xxist})$$

wobei gilt

$$xx \in [vr,vl,hr,hl]$$

und $g_1$ = Proportionalitätsfaktor

Der tatsächliche Bremdruck $p_{xxist}$ wird entweder durch einen Druckmesser an dem betroffenen Rad abgenommen oder über ein Bremsenmodell errechnet, welches den an dem Rad vorgeschriebenen Druckänderungen folgt und somit ein Abbild des gerade am Rad herrschenden Druckes ist (Abschnitt 6).

Die errechneten Druckanforderungen werden einer Prioritätsschaltung 3 zugeführt und dort ausgewertet (siehe oben Abschnitt 4).

Die vorangegangene Beschreibung setzt voraus, daß in der Prioritätsschaltung unmittelbar Druckgradienten verarbeitet wurden. Dies ist aber nicht notwendig. Es ist auch möglich, daß in der Prioritätsschaltung 3 Ventilschaltzeiten $\Delta t$ verarbeitet werden. (Abschnitt 5). In diesem Fall muß allerdings eine Ventilschaltzeitschaltung 343 zwischen die Verteilungslogik 2 und die Prioritätsschaltung 3 geschaltet werden, wobei von den weiteren Reglern 7,8,9 dann auch Ventilschaltzeiten $\Delta t$ abgegeben werden. Die Prioritätsschaltung arbeitet dann die eingegebenen Ventilschaltzeiten $\Delta t$ nach einem entsprechenden Schema ab, wie in Abschnitt 4 schon für die Bremsdrücke beschrieben. Ausgangsgrößen der Prioritätsschaltung sind Ventilschaltzeiten. Die Umwandlung der geforderten Druckänderungen $\Delta t_{xx}$ der einzelnen Räder xx in Ventilschaltzeiten $\Delta p$, geschieht nach der Gleichung

F 7.7

$$S_{xx} = Kr \, p_{xxist} \cdot \Delta p_{xx}$$

Dabei ist $Kr_{xx}$ ein Verstärkungsfaktor, der von dem Ist-Druck der einzelnen Räder abhängt und bei Druckaufbau nach der folgenden Regel

F 7.8

$$Kr_{xx}(p_{xxist}) = \frac{1}{Dv_{auf} * T_0 * \sqrt{a^2 + 4*b*p_{xxist}} * \sqrt{160 - p_{xxist}}}$$

berechnet wird, während für den Druckabbau

F 7.9

$$Kr_{xx}(p_{xxist}) = \frac{1}{Dv_{ab} * T_0 * \sqrt{a^2 + 4*b*p_{xxist}} * \sqrt{p_{xxist}}}$$

gilt. xx ist dabei wieder ein Index, welcher die Lage der einzelnen Räder kennzeichnet.

**Patentansprüche**

1. Vorrichtung zur Regelung des Giermomentes eines vierrädrigen Kraftfahrzeuges während einer Kurvenfahrt, mit einer Einrichtung(13) zur Erkennung des aktuellen Reibwertes ($\hat{\mu}$), **dadurch gekennzeichnet, daß** die Reibwertbestimmung nur durchgeführt wird, wenn das Fahrzeug eine Kurve durchfährt und der Giermomentregler in die Regelung eintritt, wobei der ermittelte Reibwert zumindest während der Giermomentregelung permanent aktualisiert wird und nach der Formel berechnet wird:

$$\hat{\mu} = f*\mu_{int} = f * \frac{\sqrt{a_{quer}^2 + a_{long}^2}}{g}$$

mit $\hat{\mu}$=aktueller Reibwert, $\alpha_{quer}$ = gemessene Querbeschleunigung, $\alpha_{long}$ =gemessene oder berechnete Längsbeschleunigung des Fahrzeugs, g = Gravitationskonstante und 1< $f$.

2. Vorrichtung nach Anspruch 1, **dadurch gekennzeichnet, daß** die Vorrichtung zur Giermomentregelung solange mit einem Reibwert μ≥1 als Parameter arbeitet, bis mit diesem Parameter ein Regeleingriff erforderlich erscheint, daß erst dann eine Reibwerterkennung durchgeführt wird, und daß deren Ergebnis zur Überprüfung der Erfordernisse eines Regeleingriffs als Parameter den Wert 1 ersetzt.

3. Vorrichtung nach Anspruch 2, **dadurch gekennzeichnet, daß**, falls mit dem Ergebnis der Reibwerterkennung ($\hat{\mu}$) ein Regeleingriff nicht erforderlich scheint, dieses Ergebnis mehrmals aktualisiert wird und daß keine weitere Reibwerterkennung durchgeführt wird, wenn bei Verwendung der aktualisierten Ergebnisse nach einer bestimmten Zahl von Überprüfungen immer noch kein Regeleingriff erforderlich erscheint.

**Claims**

1. Apparatus for controlling the yaw moment of a four-wheel automotive vehicle during travel in a curve, including a device (13) for detecting the current coefficient of friction ($\hat{\mu}$),
**characterized in that** the determination of the coefficient of friction is only effected when the vehicle is traveling through a curve and the yaw moment controller intervenes in the control operation, and the coefficient of friction found is permanently updated at least during the yaw moment control operation and is calculated according to the equation:

$$\hat{\mu} = f*\mu_{int} = f * \frac{\sqrt{a_{quer}^2 + a_{long}^2}}{g}$$

wherein $\hat{\mu}$= the current coefficient of friction, $\alpha_{quer}$ = the measured transverse acceleration, $\alpha_{long}$ = the measured or calculated longitudinal acceleration of the vehicle, g = the gravitation constant, and 1< f.

2. Apparatus as claimed in claim 1,
**characterized in that** the apparatus for yaw moment control operates with a coefficient of friction of μ ≥ 1 as a parameter until a control intervention appears to be necessary with this parameter, **in that** a detection of the coefficient of friction is performed only then, and **in that** the result thereof replaces the value 1 as a parameter for checking the requirements of a control intervention.

3. Apparatus as claimed in claim 2,
**characterized in that** if, based on the result of the detection of the coefficient of friction ($\hat{\mu}$), a control intervention does not appear to be necessary, this result is updated several times, and **in that** no further detection of the coefficient of friction is performed if, when using the updated results, a control intervention still appears to be unnecessary after a defined number of checks.

**Revendications**

1. Dispositif de régulation du couple de lacet d'un véhicule automobile à quatre roues pendant une conduite en virage , comprenant un dispositif (13) servant à la reconnaissance du coefficient de frottement actuel ($\hat{\mu}$), **caractérisé en ce que** la détermination de coefficient de frottement n'est effectuée que lorsque le véhicule suit un virage et que le régulateur de couple de lacet entre dans la régulation, le coefficient de frottement déterminé étant actualisé d'une manière permanente au moins pendant la régulation de couple de lacet et étant calculé conformément à la formule :

$$\hat{\mu} = f^*\mu_{int} = f * \frac{\sqrt{\alpha_{quer}^2 + \alpha_{long}^2}}{g}$$

avec $\hat{\mu}$ = coefficient de frottement actuel, $\alpha_{quer}$ = accélération transversale mesurée, $\alpha_{long}$ = accélération longitudinale mesurée ou calculée du véhicule, g = accélération de la pesanteur et 1 < *f*.

2. Dispositif suivant la revendication 1, **caractérisé en ce que** le dispositif servant à la régulation de couple de lacet travaille avec un coefficient de frottement $\mu \geq 1$ en tant que paramètre jusqu'à ce qu'au moyen de ce paramètre, une intervention de régulation apparaisse nécessaire, **en ce que** ce n'est qu'alors qu'une reconnaissance de coefficient de frottement est effectuée et **en ce que** le résultat de celle-ci remplace la valeur 1 en tant que paramètre en vue du contrôle des conditions nécessaires d'une intervention de régulation.

3. Dispositif suivant la revendication 2, **caractérisé en ce que**, pour le cas où, avec le résultat de la reconnaissance de coefficient de frottement ($\hat{\mu}$), une intervention de régulation n'apparaît pas nécessaire, ce résultat est actualisé plusieurs fois et **en ce qu'**une autre reconnaissance de coefficient de frottement n'est pas effectuée lorsque, en utilisant les résultats actualisés, une intervention de régulation n'apparaît toujours pas nécessaire après un nombre déterminé de contrôles.

Fig. 1

EP 0 792 229 B1

Fig. 2

Fig. 3

Fig. 4

FRIKTION — 61

Querbeschleunig. filtern — 62

Fahrsituation erkennen — 63

reg = ? — 64

reg_old = ? — 65

$\hat{\mu}_{int}$ bestimmen — 67

$\hat{\mu}_{int}$ aktualisieren — 74

Parameter zurücksetzen — 68

Zuordnung $\hat{\mu}$ — 69

reg_old = ? — 71

$T_\mu$ = ? — 72

$\geq T_{\mu\,End}$

$< T_{\mu End}$

$T_\mu$ erhöhen — 73

reg_old = 0 — 75

$\hat{\mu}$ = 1 — 76

Ende

# Fig. 5

Fig. 6

EP 0 792 229 B1

Fig. 7

# Fig. 8

Fig. 9

Fig. 10

Fig. 11

EP 0 792 229 B1

Fig. 12

Fig. 13

Fig. 14

Fig. 15

Fig. 16

Fig. 17

$\Delta\dot{\psi}$  500  510  515  530  540  $M_G$

$\Delta\ddot{\psi}$  501  511  516  531

$\dot{\beta}_{th}$

$\hat{\beta}$  502  512  517  532

$\beta_{th}$

$\hat{\beta}$  503  533

Fig. 18

$k_p$

U  520  Y  521

Y (k-1)  522

Fig. 19

$\hat{\beta}$

400 $|\hat{\beta}| > th_1$ ? — N → 406 $n_i = 0$

J

401 $|\hat{\beta}| > th_2$ ? — N → $n_i = n_{i-1}$

J

402 $Intg_n(\hat{\beta}) = Intg_{n-1} + \hat{\beta} \cdot T_0$

403 $n_i = n_{i-1} + 1$

404 $Intg_n(\hat{\beta}) > \beta_s$ ? — N

J

405 $\overline{\dot{\psi}}_{Soll} = \dot{\psi}_{Soll} \pm S(\hat{\beta}, n)$

407 $\overline{\dot{\psi}}_{Soll} = \dot{\psi}_{Soll}$

Fig. 20

Regelgesetz — 16

$M_1$

$M_1(k)$ — 421

— 420

$M_1(k-1)$ — 422

$\hat{\dot{\beta}}$

$\Delta M = M_1(k) - M_1(k-1) + a \cdot \hat{\dot{\beta}} \cdot T_0$ — 430

$M(k) = M(k-1) + \Delta M$ — 431

$M_G$

$M(k-1)$ — 432

52

Fig. 21

EP 0 792 229 B1

$$p_{xl} = \frac{c_{xl}}{c_{vl}^2 + c_{vr}^2 + c_{hl}^2 + c_{hr}^2} \cdot M_G$$

$$p_{xr} = - \frac{c_{xr}}{c_{vl}^2 + c_{vr}^2 + c_{hl}^2 + c_{hr}^2} \cdot M_G$$

Fig. 22

# Fig. 23

**Fig. 24**

Fig. 25A

Fig. 25B

Fig. 26

```
         ┌──────────────┐  ⌐640
         │   Berechne   │
         │     M_G      │
         └──────┬───────┘
                │
         ┌──────▼───────┐  ⌐641
         │   Berechne   │
         │   Δp_xx      │
         └──────┬───────┘
                │
                ▼                           ⌐643
           ╱────────╲              ┌──────────────┐
          ╱  Δp_xx   ╲    j        │  Abschnitt   │
         ⟨  < p_th ?  ⟩───────────▶│     3.1      │
          ╲    642   ╱             └──────────────┘
           ╲────────╱
                │ N
                ▼
         ┌──────────────┐  ⌐644
         │  c_xx = f(λ) │
         └──────────────┘
```

$$\Delta p_{xx} < p_{th} ?$$

$$c_{xx} = f(\lambda)$$

Fig. 27

EP 0 792 229 B1

Fig. 28

$$T_0$$

$$n = 1 \quad 2 \quad 3 \quad 4 \quad 5 \quad 6 \qquad t$$

Fig. 29

| | |
|---|---|
| $P_i$ | |

| 800 |
|---|
| Drucksteuerung |

801    802    803

s1/s2

| 810 |
|---|
| Fahrzeug |

$\omega_i$, $v_{Ref}$

811

812    $\lambda_i$

| 820 |
|---|
| Hydraulikmodell |
| Fahrzeugmodell |
| Reifenmodell |

821

822

823

$P_{est}$

$(\omega_i , v_{Ref})_{est}$

830

$\Delta k\lambda$
$\Delta V_{est}$

| Differenz |
|---|